(19) Europäisches Patentamt
European Patent Office
Office européen des brevets

(11) **EP 4 586 489 A1**

(12) **EUROPEAN PATENT APPLICATION**
published in accordance with Art. 153(4) EPC

(43) Date of publication:
16.07.2025 Bulletin 2025/29

(21) Application number: 23862991.9

(22) Date of filing: 28.08.2023

(51) International Patent Classification (IPC):
$H02M\ 7/487^{(2007.01)}$ $H02M\ 1/08^{(2006.01)}$
$H02M\ 7/48^{(2007.01)}$

(52) Cooperative Patent Classification (CPC):
H02M 1/08; H02M 7/48; H02M 7/487

(86) International application number:
PCT/JP2023/030963

(87) International publication number:
WO 2024/053452 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.09.2022 JP 2022144085
18.01.2023 JP 2023006100

(71) Applicant: Panasonic Intellectual Property
Management Co., Ltd.
Kadoma-shi, Osaka 571-0057 (JP)

(72) Inventors:
• NAKAMURA, Hirokazu
Kadoma-shi, Osaka 571-0057 (JP)
• HEGDE, Anantha
Kadoma-shi, Osaka 571-0057 (JP)
• SUZUKI, Asamira
Kadoma-shi, Osaka 571-0057 (JP)
• ARAI, Yasuhiro
Kadoma-shi, Osaka 571-0057 (JP)

(74) Representative: Novagraaf International SA
Chemin de l'Echo 3
1213 Onex, Geneva (CH)

(54) **MULTI-LEVEL INVERTER**

(57) The problem is to reduce the chances of causing a voltage drop in a bootstrap circuit. A control unit (60) replaces one first voltage vector out of two first voltage vectors with a zero vector and a second voltage vector. The two first voltage vectors belong to a plurality of voltage vectors, each have a reference magnitude, and are located closest to a command voltage vector. The zero vector is defined by a combination of potential levels at respective third connection nodes (13) of a plurality of inverter circuits (1) which are as high as a potential at a negative electrode (N1). The second voltage vector has the same direction as, and twice as large a magnitude as, the first voltage vector. The control unit (60) controls a plurality of first gate drivers (61), a plurality of second gate drivers (62), a plurality of third gate drivers (63), and a plurality of fourth gate drivers (64) within a predetermined control cycle to make a synthetic vector of a voltage vector included in the plurality of voltage vectors but the first voltage vectors, the other first voltage vector out of the two first voltage vectors, the zero vector, and the second voltage vector equal to the command voltage vector.

FIG. 1

EP 4 586 489 A1

**Description**

**Technical Field**

The present disclosure generally relates to a multi-level inverter, and more particularly relates to a multi-level inverter including a bootstrap circuit.

**Background Art**

Patent Literature 1 discloses a three-phase-voltage PWM inverter circuit that uses a bootstrap circuit.

In the power converter disclosed in Patent Literature 1, the three-phase-voltage PWM inverter circuit includes six switching elements, six gate driver circuits, a microcomputer, a main DC power supply, and three bootstrap circuits.

Patent Literature 1 also discloses an inverter control method including applying a predetermined switching pattern to each of the three phases of a three-phase inverter to obtain a predetermined voltage vector and provide the vector to a load and supplying a control voltage using a bootstrap circuit of each phase. According to this inverter control method, switching control is performed to replace a voltage vector, which is selected during a period that does not affect an output voltage within a period in which a bootstrap circuit of any phase maintains a discharging state, with a voltage vector that allows the bootstrap circuit to be charged every predetermined period.

The inverter control method disclosed in Patent Literature 1 is a technique related to a two-level inverter and is not applicable to a multi-level inverter.

**Citation List**

**Patent Literature**

Patent Literature 1: JP H05-292755A

**Summary of Invention**

An object of the present disclosure is to provide a multi-level inverter having the ability to reduce the chances of causing a voltage drop in a bootstrap circuit.

A multi-level inverter according to an aspect of the present disclosure includes a DC power supply unit, a plurality of inverter circuits, and a controller. The DC power supply unit includes a positive electrode, a negative electrode, and an intermediate potential node. The plurality of inverter circuits are connected between the positive electrode and the negative electrode of the DC power supply unit. The controller controls the plurality of inverter circuits. Each of the plurality of inverter circuits includes a switching circuit, a first diode, a second diode, a third diode, a fourth diode, a fifth diode, and a sixth diode. In the switching circuit, a first switching element, a second switching element, a third switching element, and a fourth switching element are connected in series to be arranged in line in this order from the positive electrode toward the negative electrode. The first diode is connected to the first switching element in anti-parallel. The second diode is connected to the second switching element in anti-parallel. The third diode is connected to the third switching element in anti-parallel. The fourth diode is connected to the fourth switching element in anti-parallel. The fifth diode has a cathode connected to a first connection node between the first switching element and the second switching element and an anode connected to the intermediate potential node. The sixth diode has an anode connected to a second connection node between the third switching element and the fourth switching element and a cathode connected to the intermediate potential node. The controller includes a plurality of first gate drivers, a plurality of second gate drivers, a plurality of third gate drivers, a plurality of fourth gate drivers, a plurality of first bootstrap circuits, a plurality of second bootstrap circuits, a plurality of third bootstrap circuits, a power supply unit, and a control unit. Each of the plurality of first gate drivers drives the first switching element of a corresponding one of the plurality of inverter circuits. Each of the plurality of second gate drivers drives the second switching element of a corresponding one of the plurality of inverter circuits. Each of the plurality of third gate drivers drives the third switching element of a corresponding one of the plurality of inverter circuits. Each of the plurality of fourth gate drivers drives the fourth switching element of a corresponding one of the plurality of inverter circuits. The plurality of first bootstrap circuits are provided one to one for the plurality of first gate drivers. Each of the plurality of first bootstrap circuits supplies a voltage to a corresponding one of the plurality of first gate drivers. The plurality of second bootstrap circuits are provided one to one for the plurality of second gate drivers. Each of the plurality of second bootstrap circuits supplies a voltage to a corresponding one of the plurality of second gate drivers. The plurality of third bootstrap circuits are provided one to one for the plurality of third gate drivers. Each of the plurality of third bootstrap circuits supplies a voltage to a corresponding one of the plurality of third gate drivers. The power supply unit supplies a voltage to the plurality of fourth gate drivers. The control unit controls the plurality of first gate drivers, the plurality of second gate drivers, the plurality of third gate drivers, and the plurality of fourth gate drivers. The control unit selects a plurality of voltage vectors located adjacent to a command voltage vector from a group of voltage vectors, each of which is defined by a combination of potential levels at respective third connection nodes, at each of which the second switching element and the third switching element are connected to each other in a corresponding one of the plurality of inverter circuits. Each of the group of voltage vectors is defined by a combination of potential levels at respective third connection nodes, at each of which the second switching element and the third switching element are connected to each other in a corresponding one of the plurality of inverter circuits. The control unit replaces one first voltage vector out of two first voltage vectors with a zero vector and a second voltage vector. The two first voltage vectors belong to the plurality of voltage vectors, each have a reference magnitude, and are located closest to the command voltage vector. The zero vector is defined by a combination of potential levels at the respective third connection nodes, at each of which the second switching element and the third switching element are connected to each other in a corresponding one of the plurality of inverter circuits and which are as high as a potential at the negative electrode. The second voltage vector has the same direction as the first voltage vector and twice as large a magnitude as the first voltage vector. The control unit controls the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vectors, the other first voltage vector out of the two first voltage vectors, the zero vector, and the second voltage vector equal to the command voltage vector.

A multi-level inverter according to another aspect of the present disclosure includes a DC power supply unit, a plurality of inverter circuits, and a controller. The DC power supply unit includes a positive electrode, a negative electrode, and an intermediate potential node. The plurality of inverter circuits are connected between the positive electrode and the negative electrode of the DC power supply unit. The controller controls the plurality of inverter circuits. Each of the plurality of inverter circuits includes a switching circuit, a first diode, a second diode, a third diode, a fourth diode, a fifth diode, and a sixth diode. In the switching circuit, a first switching element, a second switching element, a third switching element, and a fourth switching element are connected in series to be arranged in line in this order from the positive electrode toward the negative electrode. The first diode is connected to the first switching element in anti-parallel. The second diode is connected to the second switching element in anti-parallel. The third diode is connected to the third switching element in anti-parallel. The fourth diode is connected to the fourth switching element in anti-parallel. The fifth diode has a cathode connected to a first connection node between the first switching element and the second switching element and an anode connected to the intermediate potential node. The sixth diode has an anode connected to a second connection node between the third switching element and the fourth switching element and a cathode connected to the intermediate potential node. The controller includes a plurality of first gate drivers, a plurality of second gate drivers, a plurality of third gate drivers, a plurality of fourth gate drivers, a plurality of first bootstrap circuits, a plurality of second bootstrap circuits, a plurality of third bootstrap circuits, a power supply unit, and a control unit. Each of the plurality of first gate drivers drives the first switching element of a corresponding one of the plurality of inverter circuits. Each of the plurality of second gate drivers drives the second switching element of a corresponding one of the plurality of inverter circuits. Each of the plurality of third gate drivers drives the third switching element of a corresponding one of the plurality of inverter circuits. Each of the plurality of fourth gate drivers drives the fourth switching element of a corresponding one of the plurality of inverter circuits. The plurality of first bootstrap circuits are provided one to one for the plurality of first gate drivers. Each of the plurality of first bootstrap circuits supplies a voltage to a corresponding one of the plurality of first gate drivers. The plurality of second bootstrap circuits are provided one to one for the plurality of second gate drivers. Each of the plurality of second bootstrap circuits supplies a voltage to a corresponding one of the plurality of second gate drivers. The plurality of third bootstrap circuits are provided one to one for the plurality of third gate drivers. Each of the plurality of third bootstrap circuits supplies a voltage to a corresponding one of the plurality of third gate drivers. The power supply unit supplies a voltage to the plurality of fourth gate drivers. The control unit controls the plurality of first gate drivers, the plurality of second gate drivers, the plurality of third gate drivers, and the plurality of fourth gate drivers. The control unit selects a plurality of voltage vectors located adjacent to a command voltage vector from a group of voltage vectors, each of which is defined by a combination of potential levels at respective third connection nodes, at each of which the second switching element and the third switching element are connected to each other in a corresponding one of the plurality of inverter circuits. Each of the group of voltage vectors is defined by a combination of potential levels at respective third connection nodes, at each of which the second switching element and the third switching element are connected to each other in a corresponding one of the plurality of inverter circuits. The control unit replaces a first voltage vector with a zero vector and a second voltage vector. The first voltage vector belongs to the plurality of voltage vectors, has a reference magnitude, and is located closest to the command voltage vector. The zero vector is defined by a combination of potential levels at the respective third connection nodes, at each of which the second switching element and the third switching element are connected to each other in a corresponding one of the plurality of inverter circuits and which are as high as a potential at the negative electrode. The second voltage vector has the same direction as the first voltage vector and twice as large a magnitude as the first voltage vector. The control unit controls the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vector, the zero vector, and the second voltage vector equal to the command voltage vector.

A multi-level inverter according to still another aspect of the present disclosure includes a DC power supply unit, a plurality of inverter circuits, and a controller. The DC power supply unit includes a positive electrode, a negative electrode, and an intermediate potential node. The plurality of inverter circuits are connected between the positive electrode and the negative electrode of the DC power supply unit. The controller controls the plurality of inverter circuits. Each of the plurality of inverter circuits includes: a first switching element, a second switching element, a third switching element, and a fourth switching element; and a first diode, a second diode, a third diode, and a fourth diode. The first diode, the second diode, the third diode, and the fourth diode are connected in anti-parallel to the first switching element, the second switching element, the third switching element, and the fourth switching element, respectively. In each of the plurality of inverter circuits, the first switching element and the second switching element are connected in series to be arranged in line in this order from the positive electrode toward the negative electrode. In each of the plurality of inverter circuits, a series circuit of the third switching element and the fourth switching element is connected between the intermediate potential node and an output node. The output node is a connection node between the first switching element and the second switching element. The controller includes a plurality of first gate drivers, a plurality of second gate drivers, a plurality of third gate drivers, a plurality of fourth gate drivers, a plurality of bootstrap circuits, a power supply unit, and a control unit. Each of the plurality of first gate drivers drives the first switching element of a corresponding one of the plurality of inverter circuits. Each of the plurality of second gate drivers drives the second switching element of a corresponding one of the plurality of inverter circuits. Each of the plurality of third gate drivers drives the third switching element of a corresponding one of the plurality of inverter circuits. Each of the plurality of fourth gate drivers drives the fourth switching element of a corresponding one of the plurality of inverter circuits. The plurality of bootstrap circuits are provided one to one for the plurality of first gate drivers. Each of the plurality of bootstrap circuits supplies a voltage to a corresponding one of the plurality of first gate drivers. The power supply unit supplies a voltage to the plurality of second gate drivers and the plurality of third gate drivers. The control unit controls the plurality of first gate drivers, the plurality of second gate drivers, the plurality of third gate drivers, and the plurality of fourth gate drivers. The control unit selects a plurality of voltage vectors located adjacent to a command voltage vector from a group of voltage vectors. Each of the group of voltage vectors is defined by a combination of potential levels at a plurality of connection nodes of the plurality of inverter circuits. The control unit replaces one first voltage vector out of two first voltage vectors with a zero vector and a second voltage vector. The two first voltage vectors belong to the plurality of voltage vectors, each have a reference magnitude, and are located closest to the command voltage vector. The zero vector is defined by a combination of potential levels at the plurality of connection nodes of the plurality of inverter circuits which are as high as a potential at the negative electrode. The second voltage vector has the same direction as the first voltage vector and twice as large a magnitude as the first voltage vector. The control unit controls the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vectors, the zero vector, and the second voltage vector equal to the command voltage vector.

A multi-level inverter according to yet another aspect of the present disclosure includes a DC power supply unit, a plurality of inverter circuits, and a controller. The DC power supply unit includes a positive electrode, a negative electrode, and an intermediate potential node. The plurality of inverter circuits are connected between the positive electrode and the negative electrode of the DC power supply unit. The controller controls the plurality of inverter circuits. Each of the plurality of inverter circuits includes: a first switching element, a second switching element, a third switching element, and a fourth switching element; and a first diode, a second diode, a third diode, and a fourth diode. The first diode, the second diode, the third diode, and the fourth diode are connected in anti-parallel to the first switching element, the second switching element, the third switching element, and the fourth switching element, respectively. In each of the plurality of inverter circuits, the first switching element and the second switching element are connected in series to be arranged in line in this order from the positive electrode toward the negative electrode. In each of the plurality of inverter circuits, a series circuit of the third switching element and the fourth switching element is connected between the intermediate potential node and an output node. The output node is a connection node between the first switching element and the second switching element. The controller includes a plurality of first gate drivers, a plurality of second gate drivers, a plurality of third gate drivers, a plurality of fourth gate drivers, a plurality of bootstrap circuits, a power supply unit, and a control unit. Each of the plurality of first gate drivers drives the first switching element of a corresponding one of the plurality of inverter circuits. Each of the plurality of second gate drivers drives the second switching element of a corresponding one of the plurality of inverter circuits. Each of the plurality of third gate drivers drives the third switching element of a corresponding one of the plurality of inverter circuits. Each of the plurality of fourth gate drivers drives the fourth switching element of a corresponding one of the plurality of inverter circuits. The plurality of bootstrap circuits are provided one to one for the plurality of first gate drivers. Each of the plurality of bootstrap circuits supplies a voltage to a corresponding one of the plurality of first gate drivers. The power supply unit supplies a voltage to the plurality of second gate drivers and the plurality of third gate drivers. The control unit controls the plurality of first gate drivers, the plurality of second gate drivers, the plurality of third gate drivers, and the plurality of fourth gate drivers. The control unit selects a plurality of voltage vectors located adjacent to a command voltage vector from a group of voltage vectors. Each of the group of voltage vectors is defined by a combination of potential levels at a plurality of connection nodes of the plurality of inverter circuits. The control unit replaces each of two first voltage vectors with a zero vector and a second voltage vector. The two first voltage vectors belong to the plurality of voltage vectors, each have a reference magnitude, and are located closest to the command voltage vector. The zero vector is defined by a combination of potential levels at the plurality of connection nodes of the plurality of inverter circuits which are as high as a potential at the negative electrode. The second voltage vector has the same direction as the first voltage vector and twice as large a magnitude as the first voltage vector. The control unit controls the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vectors, the zero vector, and the second voltage vector equal to the command voltage vector.

**Brief Description of Drawings**

FIG. 1 is a circuit diagram of a system including a multi-level inverter according to a first embodiment;

FIG. 2 illustrates a current path in a situation where a switching circuit of the multi-level inverter is in a first switching state;

FIG. 3 illustrates a discharging path and charging path in a situation where the switching circuit of the multi-level inverter is in the first switching state;

FIG. 4 illustrates a current path in a situation where the switching circuit of the multi-level inverter is in a second switching state;

FIG. 5 illustrates a discharging path and charging path in a situation where the switching circuit of the multi-level inverter is in the second switching state;

FIG. 6 illustrates a current path in a situation where the switching circuit of the multi-level inverter is in a third switching state;

FIG. 7 illustrates a discharging path and charging path in a situation where the switching circuit of the multi-level inverter is in the third switching state;

FIG. 8 shows voltage command values for respective phases in the multi-level inverter;

FIG. 9 illustrates a group of voltage vectors with respect to the multi-level inverter;

FIG. 10 illustrates the group of voltage vectors more specifically with respect to the multi-level inverter;

FIG. 11 is a vector diagram illustrating how a control unit operates in the multi-level inverter;

FIG. 12A illustrates a command voltage vector and a first voltage vector with respect to the multi-level inverter;

FIG. 12B illustrates the command voltage vector, a zero vector, and a second voltage vector with respect to the multi-level inverter;

FIG. 13 is a timing chart illustrating switching states in respective phases of a multi-level inverter according to a comparative example;

FIG. 14 is a timing chart illustrating ON/OFF states of first to fourth switching elements of the multi-level inverter according to the comparative example;

FIG. 15 is a timing chart illustrating switching states in respective phases in a situation where the multi-level inverter according to the first embodiment has controlled inverter circuits for respective phases by replacing a first voltage vector with a zero vector and a second voltage vector;

FIG. 16 is a timing chart illustrating the ON/OFF states of first to fourth switching elements in a situation where the multi-level inverter has controlled the inverter circuits by replacing the first voltage vector with the zero vector and the second voltage vector;

FIG. 17 is a timing chart illustrating the switching states in respective phases of the multi-level inverter according to the comparative example;

FIG. 18 is a timing chart illustrating the ON/OFF states of the first to fourth switching elements of the multi-level inverter according to the comparative example;

FIG. 19 is a timing chart illustrating switching states in respective phases in a situation where the multi-level inverter according to the first embodiment has controlled inverter circuits for respective phases by replacing the first voltage vector with the zero vector and the second voltage vector;

FIG. 20 is a timing chart illustrating the ON/OFF states of the first to fourth switching elements in a situation where the multi-level inverter has controlled the inverter circuits by replacing the first voltage vector with the zero vector and the second voltage vector;

FIG. 21 is a timing chart illustrating switching states in respective phases in a situation where a multi-level inverter according to a second embodiment has controlled inverter circuits for respective phases by replacing a first voltage vector with a zero vector and a second voltage vector;

FIG. 22 is a timing chart illustrating the ON/OFF states of first to fourth switching elements in a situation where the multi-level inverter has controlled the inverter circuits by replacing the first voltage vector with the zero vector and the second voltage vector;

FIG. 23 is a timing chart illustrating switching states in respective phases in a situation where the multi-level inverter has controlled inverter circuits for respective phases by replacing the first voltage vector with the zero vector and the second voltage vector;

FIG. 24 is a timing chart illustrating the ON/OFF states of the first to fourth switching elements in a situation where the multi-level inverter has controlled the inverter circuits by replacing the first voltage vector with the zero vector and the second voltage vector;

FIG. 25 is a circuit diagram of a system including a multi-level inverter according to a variation;

FIG. 26 is a circuit diagram of a system including a multi-level inverter according to a third embodiment;

FIG. 27 illustrates a current path in a situation where the switching circuit of the multi-level inverter is in a first switching state;

FIG. 28 illustrates a discharging path in the situation where the switching circuit of the multi-level inverter is in the first switching state;

FIG. 29 illustrates a current path in a situation where the switching circuit of the multi-level inverter is in a second switching state;

FIG. 30 illustrates a discharging path in the situation where the switching circuit of the multi-level inverter is in the second switching state;

FIG. 31 illustrates a current path in a situation where the switching circuit of the multi-level inverter is in a third switching state;

FIG. 32 illustrates a discharging path and a charging path in the situation where the switching circuit of the multi-level inverter is in the third switching state;

FIG. 33 illustrates a discharging path in the situation where the switching circuit of the multi-level inverter is in the second switching state;

FIG. 34 shows voltage command values for respective phases in the multi-level inverter;

FIG. 35 illustrates a group of voltage vectors with respect to the multi-level inverter;

FIG. 36 illustrates the group of voltage vectors more specifically with respect to the multi-level inverter;

FIG. 37 is a vector diagram illustrating how a control unit operates in the multi-level inverter;

FIG. 38A illustrates a command voltage vector and a first voltage vector with respect to the multi-level inverter;

FIG. 38B illustrates the command voltage vector, a zero vector, and a second voltage vector with respect to the multi-level inverter;

FIG. 39 is a timing chart illustrating switching states in respective phases of a multi-level inverter according to a comparative example;

FIG. 40 is a timing chart illustrating ON/OFF states of first to fourth switching elements in the multi-level inverter according to the comparative example;

FIG. 41 is a timing chart illustrating switching states in respective phases in a situation where the multi-level inverter according to the third embodiment has controlled inverter circuits for respective phases by replacing a first voltage vector with a zero vector and a second voltage vector;

FIG. 42 is a timing chart illustrating the ON/OFF states of first to fourth switching elements in a situation where the multi-level inverter has controlled the inverter circuits by replacing the first voltage vector with the zero vector and the second voltage vector;

FIG. 43 is a timing chart illustrating the switching states in respective phases of the multi-level inverter according to the comparative example;

FIG. 44 is a timing chart illustrating the ON/OFF states of the first to fourth switching elements in the multi-level inverter according to the comparative example;

FIG. 45 is a timing chart illustrating switching states in respective phases in a situation where the multi-level inverter according to the third embodiment has controlled inverter circuits for respective phases by replacing the first voltage vector with the zero vector and the second voltage vector;

FIG. 46 is a timing chart illustrating the ON/OFF states of the first to fourth switching elements in a situation where the multi-level inverter has controlled the inverter circuits by replacing the first voltage vector with the zero vector and the second voltage vector;

FIG. 47 is a timing chart illustrating switching states in respective phases in a situation where a multi-level inverter according to a fourth embodiment has controlled inverter circuits for respective phases by replacing a first voltage vector with a zero vector and a second voltage vector;

FIG. 48 is a timing chart illustrating the ON/OFF states of first to fourth switching elements in a situation where the multi-level inverter has controlled the inverter circuits by replacing the first voltage vector with the zero vector and the second voltage vector;

FIG. 49 is a timing chart illustrating switching states in respective phases in a situation where the multi-level inverter has controlled inverter circuits for respective phases by replacing the first voltage vector with the zero vector and the second voltage vector;

FIG. 50 is a timing chart illustrating the ON/OFF states of the first to fourth switching elements in a situation where the multi-level inverter has controlled the inverter circuits by replacing the first voltage vector with the zero vector and the second voltage vector;

FIG. 51 is a circuit diagram of a system including a multi-level inverter according to a fifth embodiment;

FIG. 52 is a circuit diagram of a system including a multi-level inverter according to a sixth embodiment;

FIG. 53 is a circuit diagram of a system including a multi-level inverter according to a seventh embodiment; and

FIG. 54 is a circuit diagram of a system including a multi-level inverter according to an eighth embodiment.

**Description of Embodiments**

(First embodiment)

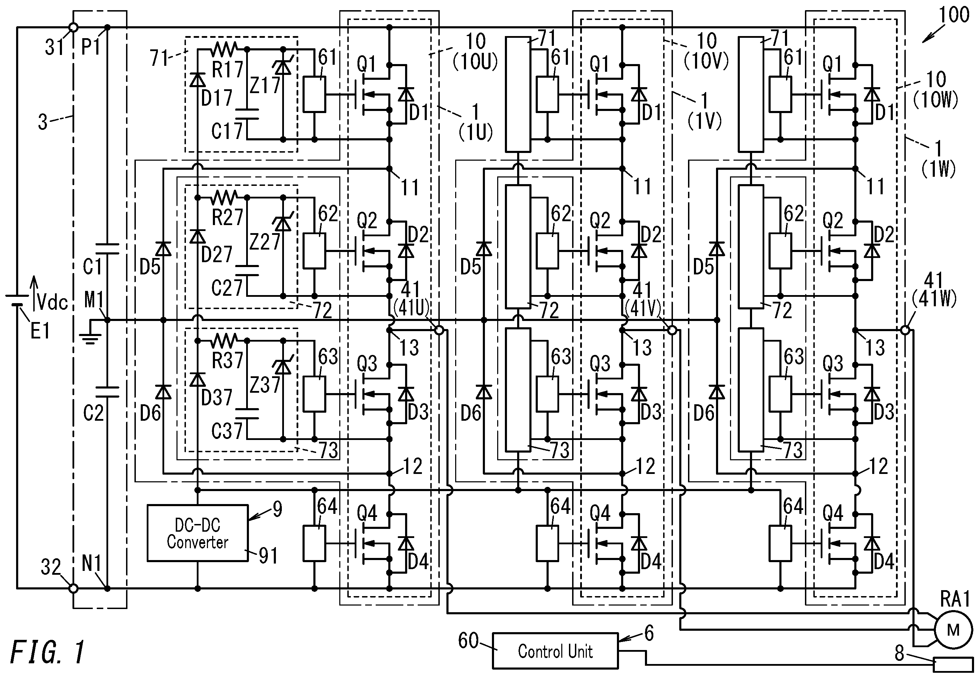

A multi-level inverter 100 according to a first embodiment will now be described with reference to FIGS. 1-12B.

(1) Overview

The multi-level inverter 100 may include, for example, a DC power supply unit 3, a plurality of (e.g., three) inverter circuits 1, and a controller 6 as shown in FIG. 1. The DC power supply unit 3 includes a positive electrode P1, a negative electrode N1, and an intermediate potential node M1. The plurality of inverter circuits 1 are connected between the positive electrode P1 and the negative electrode N1 of the DC power supply unit 3. The controller 6 controls the plurality of inverter circuits 1.

The multi-level inverter 100 is a diode-clamping three-level three-phase inverter. In the multi-level inverter 100, each of the plurality of inverter circuits 1 has an output terminal 41. In the multi-level inverter 100, an AC load RA1 is connected to the plurality of output terminals (AC terminals) 41. The AC load RA1 may be, for example, a three-phase motor. In the multi-level inverter 100, one of the plurality of inverter circuits 1 is an inverter circuit 1U for outputting a U-phase voltage, another one of the plurality of inverter circuits 1 is an inverter circuit 1V for outputting a V-phase voltage, and the other one of the plurality of inverter circuits 1 is an inverter circuit 1W for outputting a W-phase voltage.

Each of the plurality of inverter circuits 1 includes a switching circuit 10, a first diode D1, a second diode D2, a third diode D3, and a fourth diode D4. Each of the plurality of inverter circuits 1 further includes a fifth diode D5 and a sixth diode D6. In the multi-level inverter 100, a potential at the intermediate potential node M1 is clamped by the fifth diode D5 and the sixth diode D6 of each inverter circuit 1.

In each switching circuit 10, a first switching element Q1, a second switching element Q2, a third switching element Q3, and a fourth switching element Q4 are connected in series to be arranged in this order from the positive electrode P1 toward the negative electrode N1.

In each inverter circuit 10, the first diode D1 is connected to the first switching element Q1 in anti-parallel. The second diode D2 is connected to the second switching element Q2 in anti-parallel. The third diode D3 is connected to the third switching element Q3 in anti-parallel. The fourth diode D4 is connected to the fourth switching element Q4 in anti-parallel. The fifth diode D5 has a cathode connected to a first connection node 11 between the first switching element Q1 and the second switching element Q2 and an anode connected to the intermediate potential node M1. The sixth diode D6 has an anode connected to a second connection node 12 between the third switching element Q3 and the fourth switching element Q4 and a cathode connected to the intermediate potential node M1.

The controller 6 includes a plurality of (e.g., three) first gate drivers 61, a plurality of (e.g., three) second gate drivers 62, a plurality of (e.g., three) third gate drivers 63, and a plurality of (e.g., three) fourth gate drivers 64. In addition, the controller 6 further includes a plurality of (e.g., three) first bootstrap circuits 71, a plurality of (e.g., three) second bootstrap circuits 72, a plurality of (e.g., three) third bootstrap circuits 73, a power supply unit 9, and a control unit 60.

Each of the plurality of first gate drivers 61 drives the first switching element Q1 of a corresponding one of the plurality of inverter circuits 1. Each of the plurality of second gate drivers 62 drives the second switching element Q2 of a corresponding one of the plurality of inverter circuits 1. Each of the plurality of third gate drivers 63 drives the third switching element Q3 of a corresponding one of the plurality of inverter circuits 1. Each of the plurality of fourth gate drivers 64 drives the fourth switching element Q4 of a corresponding one of the plurality of inverter circuits 1.

The plurality of first bootstrap circuits 71 are provided one to one for the plurality of first gate drivers 61. Each of the plurality of first bootstrap circuits 71 supplies a voltage to a corresponding one of the plurality of first gate drivers 61. The plurality of second bootstrap circuits 72 are provided one to one for the plurality of second gate drivers 62. Each of the plurality of second bootstrap circuits 72 supplies a voltage to a corresponding one of the plurality of second gate drivers 62. The plurality of third bootstrap circuits 73 are provided one to one for the plurality of third gate drivers 63. Each of the plurality of third bootstrap circuits 73 supplies a voltage to a corresponding one of the plurality of third gate drivers 63. The power supply unit 9 supplies a voltage to the plurality of fourth gate drivers 64.

The control unit 60 controls the plurality of first gate drivers 61, the plurality of second gate drivers 62, the plurality of third gate drivers 63, and the plurality of fourth gate drivers 64.

(2) Details of power converter

The DC power supply unit 3 includes a first capacitor C1 and a second capacitor C2. In the DC power supply unit 3, the first capacitor C1 and the second capacitor C2 are connected in series. In the DC power supply unit 3, a first terminal of the first capacitor C1 is connected to a first DC terminal 31, a second terminal of the first capacitor C1 is connected to a first terminal of the second capacitor C2, and a second terminal of the second capacitor C2 is connected to a second DC terminal 32. In the DC power supply unit 3, a connection node between the first capacitor C1 and the second capacitor C2 is the intermediate potential node M1. The DC power supply unit 3 further includes the first DC terminal 31 connected to the positive electrode P1 and the second DC terminal 32 connected to the negative electrode N1. A DC voltage source E1, for example, may be connected between the first DC terminal 31 and the second DC terminal 32. In that case, an output voltage Vdc of the DC voltage source E1 is applied to between the positive electrode P1 and negative electrode N1 of the DC power supply unit 3. Note that the capacitance of the second capacitor C2 is equal to the capacitance of the first capacitor C1. As used herein, the expression "the capacitance of the second capacitor C2 is equal to the capacitance of the first capacitor C1" refers to not only a situation where the capacitance of the second capacitor C2 is perfectly equal to the capacitance of the first capacitor C1 but also a situation where the capacitance of the second capacitor C2 is equal to or greater than 95% and equal to or less than 105% of the capacitance of the first capacitor C1.

In the following description, as for the plurality of switching circuits 10, the switching circuit 10 included in the inverter circuit 1U will be hereinafter referred to as a "switching circuit 10U," the switching circuit 10 included in the inverter circuit 1V will be hereinafter referred to as a "switching circuit 10V," and the switching circuit 10 included in the inverter circuit 1W will be hereinafter referred to as a "switching circuit 10W" for the sake of convenience of description. Likewise, as for the plurality of output terminals 41, the output terminal 41 included in the inverter circuit 1U will be hereinafter referred to as an "output terminal 41U," the output terminal 41 included in the inverter circuit 1V will be hereinafter referred to as an "output terminal 41V," and the output terminal 41 included in the inverter circuit 1W will be hereinafter referred to as an "output terminal 41W."

In each switching circuit 10, the first switching element Q1, the second switching element Q2, the third switching element Q3, and the fourth switching element Q4 each have a control terminal, a first main terminal, and a second main terminal. The first switching element Q1, the second switching element Q2, the third switching element Q3, and the fourth switching element Q4 of each switching circuit 10 may be, for example, MOSFETs. Thus, in each switching circuit 10, the control terminal, the first main terminal, and the second main terminal of each of the first switching element Q1, the second switching element Q2, the third switching element Q3, and the fourth switching element Q4 are a gate terminal, a drain terminal, and a source terminal, respectively. In each switching circuit 10, the MOSFETs serving as the first switching element Q1, the second switching element Q2, the third switching element Q3, and the fourth switching element Q4 may be, for example, normally OFF n-channel MOSFETs. Note that the MOSFETs may be, for example, Si-based MOSFETs or SiC-based MOSFETs.

In each switching circuit 10, the control terminal of the first switching element Q1 is connected to a corresponding one of the plurality of first gate drivers 61. Also, in each switching circuit 10, the control terminal of the second switching element Q2 is connected to a corresponding one of the plurality of second gate drivers 62. Furthermore, in each switching circuit 10, the control terminal of the third switching element Q3 is connected to a corresponding one of the plurality of third gate drivers 63. Furthermore, in each switching circuit 10, the control terminal of the fourth switching element Q4 is connected to a corresponding one of the plurality of fourth gate drivers 64.

In each switching circuit 10, the first main terminal of the first switching element Q1 is connected to the positive electrode P1 of the DC power supply unit 3, and the second main terminal of the first switching element Q1 is connected to the first main terminal of the second switching element Q2. Also, in each switching circuit 10, the second main terminal of the second switching element Q2 is connected to the first main terminal of the third switching element Q3. Furthermore, in each switching circuit 10, the second main terminal of the third switching element Q3 is connected to the first main terminal of the fourth switching element Q4 and the second main terminal of the fourth switching element Q4 is connected to the negative electrode N1 of the DC power supply unit 3.

In the inverter circuit 1U, the third connection node 13 between the second switching element Q2 and the third switching element Q3 of the switching circuit 10U is connected to the output terminal 41U. In the inverter circuit 1V, the third connection node 13 between the second switching element Q2 and the third switching element Q3 of the switching circuit 10V is connected to the output terminal 41V. In the inverter circuit 1W, the third connection node 13 between the second switching element Q2 and the third switching element Q3 of the switching circuit 10W is connected to the output terminal 41W. To the third connection node 13 of the inverter circuit 1U, connected, via the output terminal 41U, is the U-phase of the AC load RA1, for example. To the third connection node 13 of the inverter circuit 1V, connected, via the output terminal 41V, is the V-phase of the AC load RA1, for example. To the third connection node 13 of the inverter circuit 1W, connected, via the output terminal 41W, is the W-phase of the AC load RA1, for example.

In each inverter circuit 1, the anode of the first diode D1 is connected to the second main terminal (source terminal) of the first switching element Q1, and the cathode of the first diode D1 is connected to the first main terminal (drain terminal) of the first switching element Q1. Also, in each inverter circuit 1, the anode of the second diode D2 is connected to the second main terminal (source terminal) of the second switching element Q2, and the cathode of the second diode D2 is connected to the first main terminal (drain terminal) of the second switching element Q2. Furthermore, in each inverter circuit 1, the anode of the third diode D3 is connected to the second main terminal (source terminal) of the third switching element Q3, and the cathode of the third diode D3 is connected to the first main terminal (drain terminal) of the third switching element Q3. Furthermore, in each inverter circuit 1, the anode of the fourth diode D4 is connected to the second main terminal (source terminal) of the fourth switching element Q4, and the cathode of the fourth diode D4 is connected to the first main terminal (drain terminal) of the fourth switching element Q4.

In each inverter circuit 1, the first diode D1 may be replaced with a parasitic diode of a MOSFET serving as the first switching element Q1. Also, in each inverter circuit 1, the second diode D2 may be replaced with a parasitic diode of a MOSFET serving as the second switching element Q2. Furthermore, in each inverter circuit 1, the third diode D3 may be replaced with a parasitic diode of a MOSFET serving as the third switching element Q3. Furthermore, in each inverter circuit 1, the fourth diode D4 may be replaced with a parasitic diode of a MOSFET serving as the fourth switching element Q4.

In each inverter circuit 1, the cathode of the fifth diode D5 is connected to the first connection node 11 between the first switching element Q1 and the second switching element Q2. On the other hand, the anode of the fifth diode D5 is connected to the intermediate potential node M1 of the DC power supply unit 3. As used herein, the "intermediate potential node M1" refers to a node at which the potential is intermediate between the potential at the positive electrode P1 of the DC power supply unit 3 and the potential at the negative electrode N1 thereof. In the first embodiment, the intermediate potential node M1 is connected to the ground, and therefore, the potential at the intermediate potential node M1 is 0 V. In this case, supposing the voltage across the DC power supply unit 3 is Vdc, the potential at the positive electrode P1 is Vdc/2 and the potential at the negative electrode N1 is -Vdc/2.

The cathode of the sixth diode D6 is connected to the intermediate potential node M1. The anode of the sixth diode D6 is connected to the second connection node 12 between the third switching element Q3 and the fourth switching element Q4.

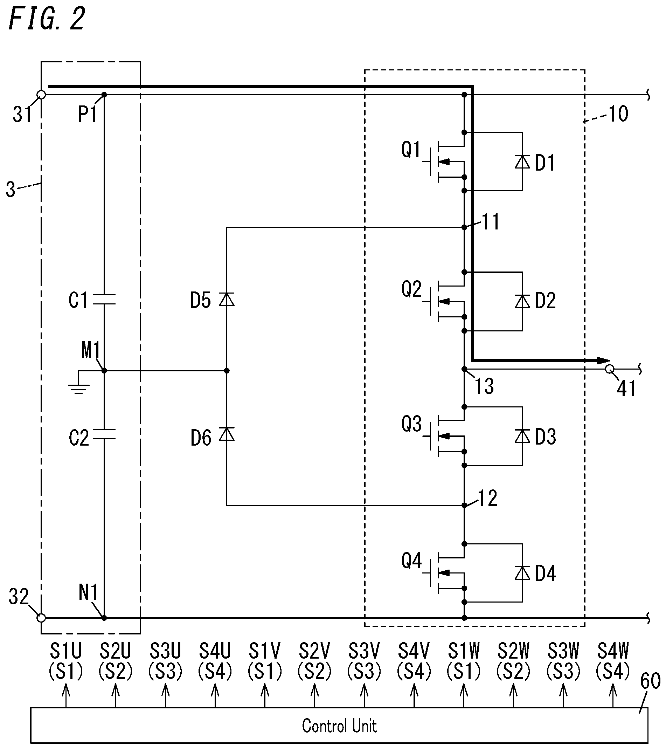

The plurality of first gate drivers 61 are provided one to one for the plurality of first switching elements Q1. Each of the plurality of first gate drivers 61 is connected to the control terminal of a corresponding one of the first switching elements Q1. Each of the plurality of first gate drivers 61 drives a corresponding one of the first switching elements Q1. The plurality of first gate drivers 61 are connected to the control unit 60. The control unit 60 outputs a plurality of first control signals S1 (refer to FIG. 2) which are associated one to one with the plurality of first gate drivers 61. Each of the plurality of first gate drivers 61 controls the ON/OFF states of the corresponding first switching element Q1 in accordance with the first control signal S1 supplied thereto.

The plurality of second gate drivers 62 are provided one to one for the plurality of second switching elements Q2. Each of the plurality of second gate drivers 62 is connected to the control terminal of a corresponding one of the second switching elements Q2. Each of the plurality of second gate drivers 62 drives a corresponding one of the second switching elements Q2. The plurality of second gate drivers 62 are connected to the control unit 60. The control unit 60 outputs a plurality of second control signals S2 (refer to FIG. 2) which are associated one to one with the plurality of second gate drivers 62. Each of the plurality of second gate drivers 62 controls the ON/OFF states of the corresponding second switching element Q2 in accordance with the second control signal S2 supplied thereto.

The plurality of third gate drivers 63 are provided one to one for the plurality of third switching elements Q3. Each of the plurality of third gate drivers 63 is connected to the control terminal of a corresponding one of the third switching elements Q3. Each of the plurality of third gate drivers 63 drives a corresponding one of the third switching elements Q3. The plurality of third gate drivers 63 are connected to the control unit 60. The control unit 60 outputs a plurality of third control signals S3 (refer to FIG. 2) which are associated one to one with the plurality of third gate drivers 63. Each of the plurality of third gate drivers 63 controls the ON/OFF states of the corresponding third switching element Q3 in accordance with the third control signal S3 supplied thereto.

The plurality of fourth gate drivers 64 are provided one to one for the plurality of fourth switching elements Q4. Each of the plurality of fourth gate drivers 64 is connected to the control terminal of a corresponding one of the fourth switching elements Q4. Each of the plurality of fourth gate drivers 64 drives a corresponding one of the fourth switching elements Q4. The plurality of fourth gate drivers 64 are connected to the control unit 60. The control unit 60 outputs a plurality of fourth control signals S4 (refer to FIG. 2) which are associated one to one with the plurality of fourth gate drivers 64. Each of the plurality of fourth gate drivers 64 controls the ON/OFF states of the corresponding fourth switching element Q4 in accordance with the fourth control signal S4 supplied thereto.

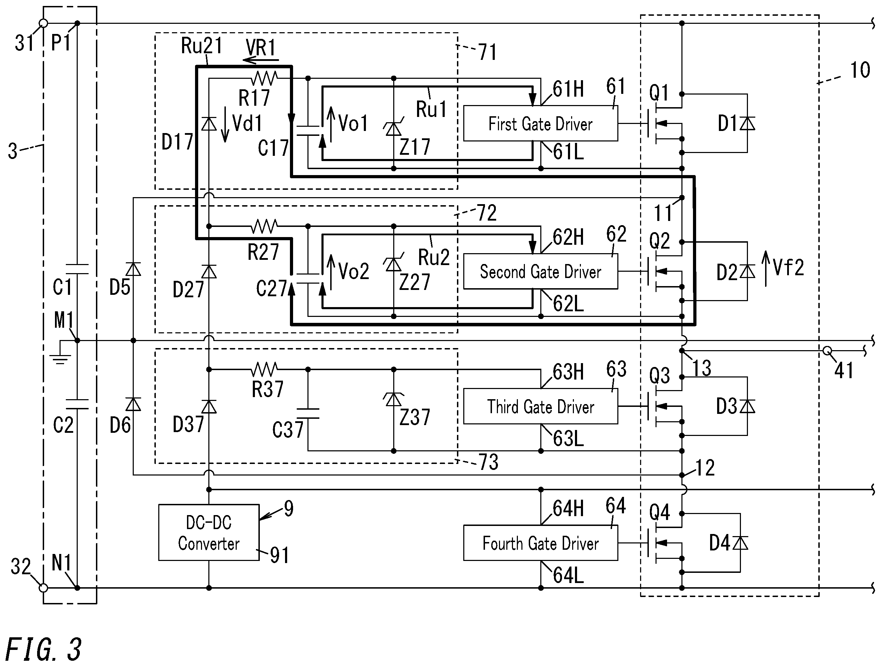

The plurality of first bootstrap circuits 71 are provided one to one for the plurality of first gate drivers 61. Each of the plurality of first bootstrap circuits 71 supplies a voltage to a corresponding one of the first gate drivers 61. Each of the plurality of first bootstrap circuits 71 includes a diode D17, a resistor R17, and a capacitor C17 (hereinafter referred to as a "boosting capacitor C17"). In each of the plurality of first bootstrap circuits 71, the anode of the diode D17 is connected to the positive-side terminal of the power supply unit 9 and the cathode of the diode D17 is connected to a first terminal of the capacitor C17 via the resistor R17. The first terminal of the capacitor C17 is connected to a higher-potential power supply terminal 61H (refer to FIG. 3) of the corresponding first gate driver 61. A second terminal of the capacitor C17 is connected to a lower-potential power supply terminal 61L (refer to FIG. 3) of the corresponding first gate driver 61. The first bootstrap circuit 71 supplies, to the corresponding first gate driver 61, a voltage required for the first gate driver 61 to turn ON the first switching element Q1. Each of the plurality of first bootstrap circuits 71 further includes a Zener diode Z17 connected to the capacitor C17 in parallel.

The plurality of second bootstrap circuits 72 are provided one to one for the plurality of second gate drivers 62. Each of the plurality of second bootstrap circuits 72 supplies a voltage to a corresponding one of the second gate drivers 62. Each of the plurality of second bootstrap circuits 72 includes a diode D27, a resistor R27, and a capacitor C27 (hereinafter referred to as a "boosting capacitor C27"). In each of the second bootstrap circuits 72, the anode of the diode D27 is connected to the positive-side terminal of the power supply unit 9 and the cathode of the diode D27 is connected to a first terminal of the capacitor C27 via the resistor R27. The first terminal of the capacitor C27 is connected to a higher-potential power supply terminal 62H (refer to FIG. 3) of the corresponding second gate driver 62. A second terminal of the capacitor C27 is connected to a lower-potential power supply terminal 62L (refer to FIG. 3) of the corresponding second gate driver 62. The second bootstrap circuit 72 supplies, to the corresponding second gate driver 62, a voltage required for the second gate driver 62 to turn ON the second switching element Q1. Each of the plurality of second bootstrap circuits 72 further includes a Zener diode Z27 connected to the capacitor C27 in parallel.

The plurality of third bootstrap circuits 73 are provided one to one for the plurality of third gate drivers 63. Each of the plurality of third bootstrap circuits 73 supplies a voltage to a corresponding one of the third gate drivers 63. Each of the plurality of third bootstrap circuits 73 includes a diode D37, a resistor R37, and a capacitor C37 (hereinafter referred to as a "boosting capacitor C37"). In each of the third bootstrap circuits 73, the anode of the diode D37 is connected to the positive-side terminal of the power supply unit 9 and the cathode of the diode D37 is connected to a first terminal of the capacitor C37 via the resistor R37. The first terminal of the capacitor C37 is connected to a higher-potential power supply terminal 63H (refer to FIG. 3) of the corresponding third gate driver 63. A second terminal of the capacitor C37 is connected to a lower-potential power supply terminal 63L (refer to FIG. 3) of the corresponding third gate driver 63. The third bootstrap circuit 73 supplies, to the corresponding third gate driver 63, a voltage required for the third gate driver 63 to turn ON the third switching element Q3. Each of the plurality of third bootstrap circuits 73 further includes a Zener diode Z37 connected to the capacitor C37 in parallel.

The power supply unit 9 supplies a voltage to the plurality of (three) first bootstrap circuits 71, the plurality of (three) second bootstrap circuits 72, the plurality of (three) third bootstrap circuits 73, and the plurality of (three) fourth gate drivers 64. The power supply unit 9 may be, for example, a DC power supply including an insulating DC-DC converter 91. The positive-side terminal of the power supply unit 9 is connected to the higher-potential power supply terminal 64H (refer to FIG. 3) of each of the plurality of fourth gate drivers 64 and the negative-side terminal of the power supply unit 9 is connected to the lower-potential power supply terminal 64L (refer to FIG. 3) of each of the plurality of fourth gate drivers 64.

The control unit 60 controls the plurality of first gate drivers 61, the plurality of second gate drivers 62, the plurality of third gate drivers 63, and the plurality of fourth gate drivers 64. This allows the control unit 60 to control the plurality of first switching elements Q1, the plurality of second switching elements Q2, the plurality of third switching elements Q3, and the plurality of fourth switching elements Q4. The agent that performs the functions of the control unit 60 includes a computer system. The computer system includes a single or a plurality of computers. The computer system may include a processor and a memory as principal hardware components thereof. The computer system serves as the agent that performs the functions of the control unit 60 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The control unit 60 outputs a plurality of (three) first control signals S1 (refer to FIG. 2) for controlling the plurality of (three) first switching elements Q1, a plurality of (three) second control signals S2 (refer to FIG. 2) for controlling the plurality of (three) second switching elements Q2, a plurality of (three) third control signals S3 (refer to FIG. 2) for controlling the plurality of third switching elements Q3, and a plurality of (three) fourth control signals S4 for controlling the plurality of (three) fourth switching elements Q4. Note that in FIG. 2, only one of the three inverter circuits 1 is shown with illustration of the other two inverter circuits 1 omitted. Also, in FIG. 2, illustration of the plurality of first gate drivers 61, the plurality of second gate drivers 62, the plurality of third gate drivers 63, the plurality of fourth gate drivers 64, the plurality of first bootstrap circuits 71, the plurality of second bootstrap circuits 72, the plurality of third bootstrap circuits 73, and the power supply unit 9 is omitted. Likewise, in FIG. 3, only one of the three inverter circuits 1 is shown with illustration of the other two inverter circuits 1 omitted. Also, in FIG. 3, illustration of the other two first gate drivers 61, the other two second gate drivers 62, the other two third gate drivers 63, the other two fourth gate drivers 64, the other two first bootstrap circuits 71, the other two second bootstrap circuits 72, and the other two third bootstrap circuits 73 is omitted.

The three first control signals S1 are a first control signal S1U for controlling the first switching element Q1 of the switching circuit 10U, a first control signal S1V for controlling the first switching element Q1 of the switching circuit 10V, and a first control signal S1W for controlling the first switching element Q1 of the switching circuit 10W.

The three second control signals S2 are a second control signal S2U for controlling the second switching element Q2 of the switching circuit 10U, a second control signal S2V for controlling the second switching element Q2 of the switching circuit 10V, and a second control signal S2W for controlling the second switching element Q2 of the switching circuit 10W.

The three third control signals S3 are a third control signal S3U for controlling the third switching element Q3 of the switching circuit 10U, a third control signal S3V for controlling the third switching element Q3 of the switching circuit 10V, and a third control signal S3W for controlling the third switching element Q3 of the switching circuit 10W.

The three fourth control signals S4 are a fourth control signal S4U for controlling the fourth switching element Q4 of the switching circuit 10U, a fourth control signal S4V for controlling the fourth switching element Q4 of the switching circuit 10V, and a fourth control signal S4W for controlling the fourth switching element Q4 of the switching circuit 10W.

Each of the plurality of first control signals S1, the plurality of second control signals S2, the plurality of third control signals S3, and the plurality of fourth control signals S4 may be, for example, a signal having a potential level that alternates between a first potential level (hereinafter referred to as a "low level") and a second potential level (hereinafter referred to as a "high level") higher than the first potential level. The first potential level may be 0 V, for example, and the second potential level is a potential level higher than a gate threshold voltage of the MOSFET. That is to say, in each of the plurality of control signals (including the plurality of first control signals S1, the plurality of second control signals S2, the plurality of third control signals S3, and the plurality of fourth control signals S4), the first potential level is a potential level for turning OFF the switching element associated with the control signal and the second potential level is a potential level for turning ON the switching element associated with the control signal.

Each of the plurality of first switching elements Q1 turns ON when its associated first control signal S1 has high level and turns OFF when its associated first control signal S1 has low level. Each of the plurality of second switching elements Q2 turns ON when its associated second control signal S2 has high level and turns OFF when its associated second control signal S2 has low level. Each of the plurality of third switching elements Q3 turns ON when its associated third control signal S3 has high level and turns OFF when its associated third control signal S3 has low level. Each of the plurality of fourth switching elements Q4 turns ON when its associated fourth control signal S4 has high level and turns OFF when its associated fourth control signal S4 has low level.

In the multi-level inverter 100, each of the plurality of inverter circuits 1 is controlled toward one of a first switching state, a second switching state, or a third switching state. That is to say, in the multi-level inverter 100, in each of the three inverter circuits 1U, 1V, 1W, the switching state of the switching circuit 10 thereof is controlled toward any one of the first, second, and third switching states. The first, second, and third switching states are different from each other in the combination of ON/OFF states of the first to fourth switching elements Q1-Q4. In each of the plurality of inverter circuits 1, its output voltage in the first switching state, its output voltage in the second switching state, and its output voltage in the third switching state are different from each other. That is to say, in each of the plurality of inverter circuits 1, the potential level of the output voltage changes in three levels according to the states of the first to fourth switching elements Q1-Q4. Note that as for the output voltages of the plurality of inverter circuits 1, the output voltage of the U-phase inverter circuit 1U, the output voltage of the V-phase inverter circuit 1V, and the output voltage of the W-phase inverter circuit 1W have mutually different phases.

The first switching state herein refers to a combination that causes both the first switching element Q1 and the second switching element Q2 to turn ON and causes both the third switching element Q3 and the fourth switching element Q4 to turn OFF. When controlled toward the first switching state, each of the plurality of inverter circuits 1 may deliver an output voltage having a potential level at the positive electrode P1 of the DC power supply unit 3. In each of the plurality of inverter circuits 1 in the first switching state, the potential at the third connection node 13 is as high as the potential level (e.g., Vdc/2) at the positive electrode P1 of the DC power supply unit 3.

The second switching state herein refers to a combination that causes both the first switching element Q1 and the fourth switching element Q4 to turn OFF and causes both the second switching element Q2 and the third switching element Q3 to turn ON. When controlled toward the second switching state, each of the plurality of inverter circuits 1 may deliver an output voltage having a potential level at the intermediate potential node M1 of the DC power supply unit 3. In each of the plurality of inverter circuits 1 in the second switching state, the potential at the third connection node 13 is as high as the potential level (e.g., 0) at the intermediate potential node M1.

The third switching state herein refers to a combination that causes both the first switching element Q1 and the second switching element Q2 to turn OFF and causes both the third switching element Q3 and the fourth switching element Q4 to turn ON. When controlled toward the third switching state, each of the plurality of inverter circuits 1 may deliver an output voltage having a potential level at the negative electrode N1 of the DC power supply unit 3. In each of the plurality of inverter circuits 1 in the third switching state, the potential at the third connection node 13 is as high as the potential level (e.g., -Vdc/2) at the negative electrode N1 of the DC power supply unit 3.

When the switching circuit 10 of each inverter circuit 1 is in the first switching state, a current flows along a path that passes through the positive electrode P1 of the DC power supply unit 3, the first switching element Q1, the second switching element Q2, the third connection node 13, and the output terminal 41 in this order as shown in FIG. 2 to make the voltage value of the output voltage for the AC load RA1 (refer to FIG. 1) Vdc/2.

In addition, when the switching circuit 10 of the inverter circuit 1 is in the first switching state, a voltage required for the first gate driver 61 to turn ON the first switching element Q1 is supplied from the capacitor C17 of the first bootstrap circuit 71 to the first gate driver 61. Thus, electricity is discharged from the capacitor C17 of the first bootstrap circuit 71 through a discharging path Ru1 that passes through the capacitor C17, the higher-potential power supply terminal 61H of the first gate driver 61, the lower-potential power supply terminal 61L of the first gate driver 61, and the capacitor C17 in this order as shown in FIG. 3. As a result, in the first bootstrap circuit 71, the voltage across the capacitor C17 falls with the passage of time.

Furthermore, when the switching circuit 10 of the inverter circuit 1 is in the first switching state, a voltage required for the second gate driver 62 to turn ON the second switching element Q2 is supplied from the capacitor C27 of the second bootstrap circuit 72 to the second gate driver 62. Thus, electricity is discharged from the capacitor C27 of the second bootstrap circuit 72 through a discharging path Ru2 that passes through the capacitor C27, the higher-potential power supply terminal 62H of the second gate driver 62, the lower-potential power supply terminal 62L of the second gate driver 62, and the capacitor C27 in this order. As a result, in the second bootstrap circuit 72, the voltage across the capacitor C27 falls with the passage of time.

Furthermore, supposing the voltage across the capacitor C17 is Vo1, the voltage across the capacitor C27 is Vo2, the voltage across the diode D17 is Vd1, the voltage across the resistor R17 is VR1, and the voltage across the second switching element Q2 is Vf2 as shown in FIG. 3, while the switching circuit 10 of each inverter circuit 1 is in the first switching state, the capacitor C17 is charged with the electric charges in the capacitor C27 if a first condition is satisfied. In this case, the first condition is Vo2 > (Vo1 + Vd1 + VR1 + Vf2). The charging path Ru1 for charging the capacitor C17 with the electric charges in the capacitor C27 is a path that passes through the capacitor C27, the resistor R27, the diode D17, the resistor R17, the capacitor C1, the first connection node 11, the second switching element Q2, and the capacitor C27 in this order.

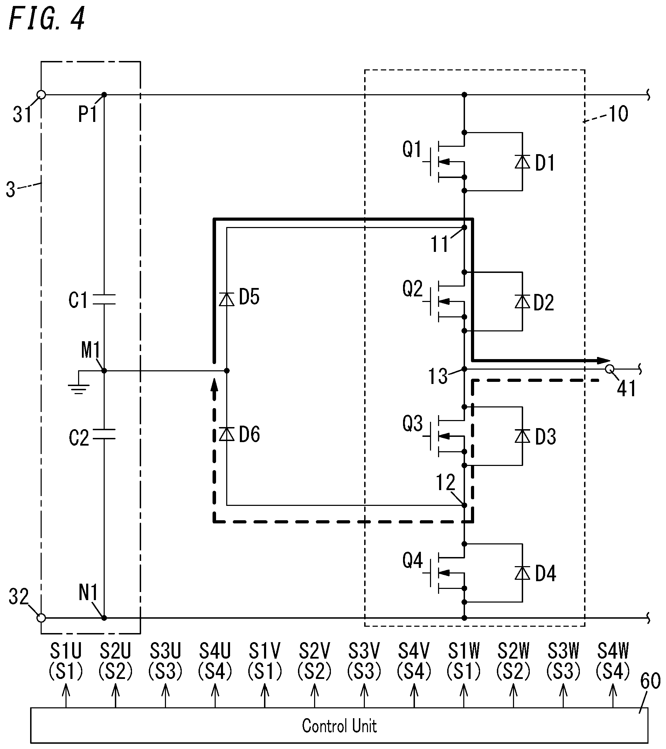

On the other hand, while the switching circuit 10 of the inverter circuit 1 is in the second switching state, a current flows along the path (i.e., the path indicated by the bold solid-line arrow) that passes through, for example, the intermediate potential node M1 of the DC power supply unit 3, the fifth diode D5, the second switching element Q2, the third connection node 13, and the output terminal 41 in this order as shown in FIG. 4, for example, to make the voltage value of the output voltage for the AC load RA1 equal to zero. More specifically, when the switching circuits 10U, 10V, 10W are in the second switching state, the third switching state, and the third switching state, respectively, the current flows along the path that passes through the intermediate potential node M1 of the DC power supply unit 3, the fifth diode D5, the second switching element Q2 of the switching circuit 10U, the third connection node 13, and the output terminal 41 in this order.

Alternatively, while the switching circuit 10 of the inverter circuit 1 is in the second switching state, a current may also flow through the path that passes through, for example, the output terminal 41, the third connection node, the third switching element Q3, the second connection node 12, and the sixth diode D6 in this order (i.e., the path indicated by the bold dashed-line arrow) as shown in FIG. 4, to make the voltage value of the output voltage for the AC load RA1 equal to zero. More specifically, when the switching circuits 10U, 10V, 10W are in the second switching state, the second switching state, and the first switching state, respectively, the current flows along the path that passes through the output terminal 41 of the inverter circuit 1U, the third connection node, the third switching element Q3, the second connection node 12, and the sixth diode D6 in this order (i.e., the path indicated by the bold dashed-line arrow) to make the voltage value of the output voltage for the AC load RA1 equal to zero.

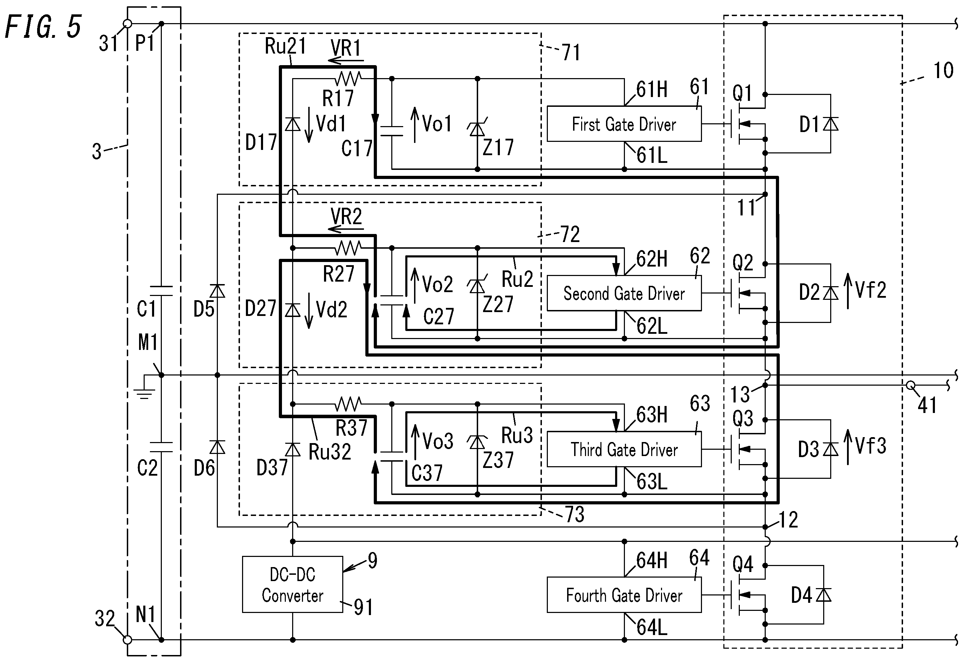

Furthermore, when the switching circuit 10 of the inverter circuit 1 is in the second switching state, a voltage required for the second gate driver 62 to turn ON the second switching element Q2 is supplied from the capacitor C27 of the second bootstrap circuit 72 to the second gate driver 62. Thus, electricity is discharged from the capacitor C27 of the second bootstrap circuit 72 through a discharging path Ru2 that passes through the capacitor C27, the higher-potential power supply terminal 62H of the second gate driver 62, the lower-potential power supply terminal 62L of the second gate driver 62, and the capacitor C27 in this order as shown in FIG. 5. In addition, when the switching circuit 10 of the inverter circuit 1 is in the second switching state, a voltage required for the third gate driver 63 to turn ON the third switching element Q3 is supplied from the capacitor C37 of the third bootstrap circuit 73 to the third gate driver 63. Thus, electricity is discharged from the capacitor C37 of the third bootstrap circuit 73 through a discharging path Ru3 that passes through the capacitor C37, the higher-potential power supply terminal 63H of the third gate driver 63, the lower-potential power supply terminal 63L of the third gate driver 63, and the capacitor C37 in this order.

Furthermore, supposing the voltages across the capacitors C17, C27, C37 are Vo1, Vo2, Vo3, respectively, the voltages across the resistors R17, R27 are VR1, VR2, respectively, and the voltages across the second switching element Q2 and the third switching element Q3 are Vf2, Vf3, respectively, as shown in FIG. 5, while the switching circuit 10 of the inverter circuit 1 is in the second switching state, the capacitor C27 is charged with electric charges in the capacitor C37 if a second condition is satisfied and the capacitor C17 is charged with electric charges in the capacitor C27 if a third condition is satisfied. The second condition is Vo3 > (Vo2 + Vd2 + VR2 + Vf3). The third condition is Vo2 > (Vo1 + Vd1 + VR1 + Vf2). The charging path Ru32 for charging the capacitor C27 with the electric charges in the capacitor C37 is a path that passes through the capacitor C37, the resistor R37, the diode D27, the resistor R27, the capacitor C27, the third connection node 13, the third switching element Q3, and the capacitor C37 in this order. The charging path Ru21 for charging the capacitor C17 with the electric charges in the capacitor C27 is a path that passes through the capacitor C27, the resistor R27, the diode D17, the resistor R17, the capacitor C17, the first connection node 11, the second switching element Q2, and the capacitor C27 in this order. The charging path Ru32 for charging the capacitor C27 with the electric charges in the capacitor C37 is a path that passes through the capacitor C37, the resistor R37, the diode D27, the resistor R27, the capacitor C27, the third connection node 13, the third switching element Q3, and the capacitor C37 in this order.

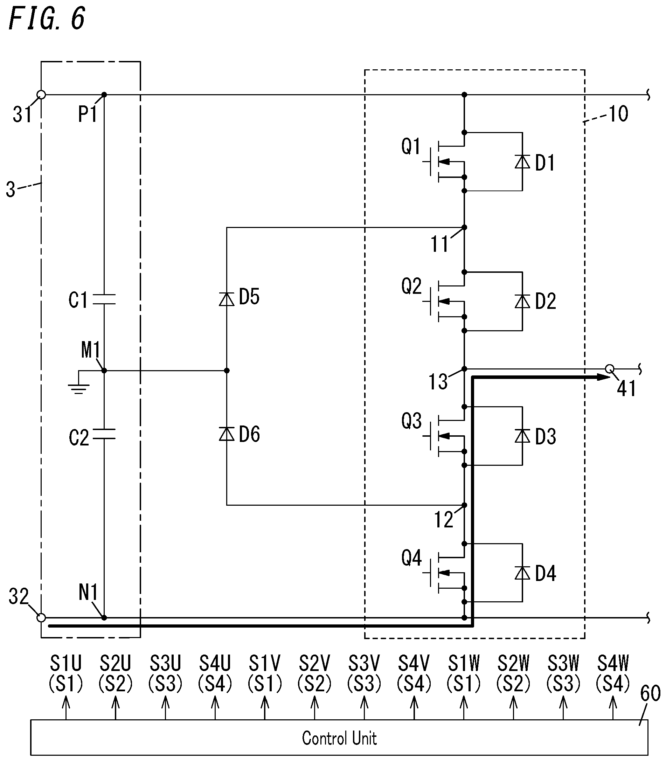

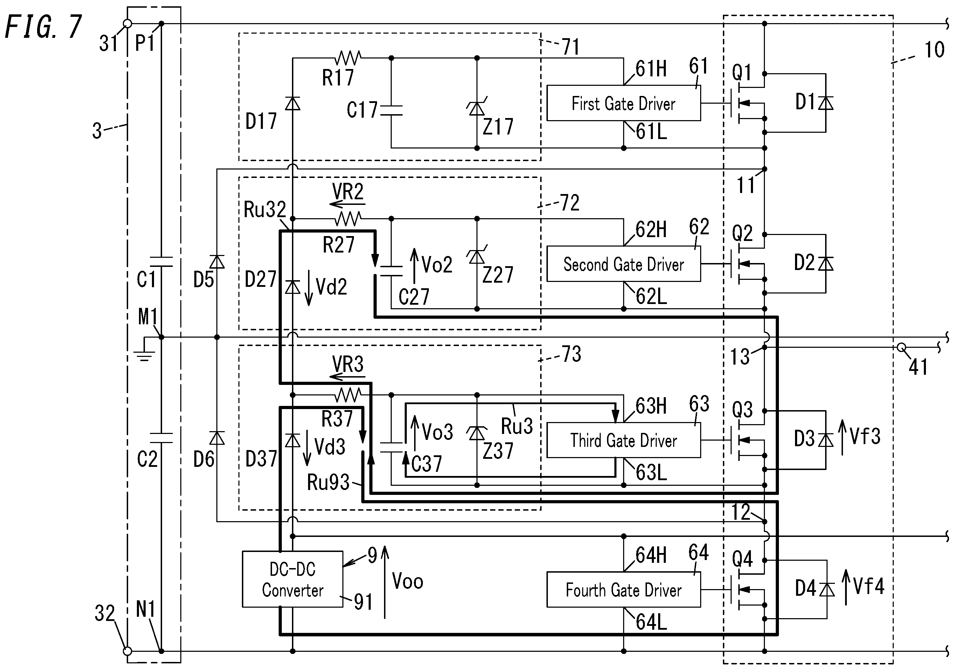

Meanwhile, while the switching circuit of the inverter circuit 1 is in the third switching state, a current flows along the path that passes through the negative electrode N1 of the DC power supply unit 3, the fourth switching element Q4, the third switching element Q3, the third connection node 13, and the output terminal 41U in this order as shown in FIG. 6 to make the voltage value of the output voltage for the AC load RA1 -Vdc/2. Also, while the switching circuit 10 of the inverter circuit 1 is in the third switching state, the capacitor C17 of the first bootstrap circuit 71 is charged with electricity, and therefore, the voltage at the capacitor C17 rises with the passage of time to eventually make the capacitor C17 fully charged. In addition, while the switching circuit 10 of the inverter circuit 1 is in the third switching state, the capacitor C27 of the second bootstrap circuit 72 (refer to FIG. 1) is charged with electricity, and therefore, the voltage at the capacitor C27 rises with the passage of time to eventually make the capacitor C27 fully charged. Furthermore, while the switching circuit 10 of the inverter circuit 1 is in the third switching state, a voltage required for the third gate driver 63 to turn ON the third switching element Q3 is supplied from the capacitor C37 of the third bootstrap circuit 73 to the third gate driver 63. Thus, electricity is discharged from the capacitor C37 of the third bootstrap circuit 73 through a discharging path Ru3 that passes through the capacitor C37, the higher-potential power supply terminal 63H of the third gate driver 63, the lower-potential power supply terminal 63L of the third gate driver 63, and the capacitor C37 in this order. Furthermore, supposing the voltage across the power supply unit 9 is Voo, the voltages across the capacitors C27, C37 are Vo2, Vo3, respectively, the voltages across the resistors R27, R37 are VR2, VR3, respectively, and the voltages across the third switching element Q3 and the fourth switching element Q4 are Vf3, Vf4, respectively, as shown in FIG. 7, while the switching circuit 10 of the inverter circuit 1 is in the third switching state, the capacitor C37 is charged with electricity by the power supply unit 9 if a fourth condition is satisfied and the capacitor C27 is charged with electric charges in the capacitor C37 if a fifth condition is satisfied. The sixth condition is Voo > (Vo3 + Vd3 + VR3 + Vf4). The fifth condition is Vo3 > (Vo2 + Vd2 + VR2 + Vf3). The charging path Ru93 for charging the capacitor C37 with the electric charges in the power supply unit 9 is a path that passes through the positive-side terminal of the power supply unit 9, the diode D37, the diode D27, the resistor R27, the capacitor C27, the third connection node 13, the third switching element Q3, the fourth switching element Q4, and the negative-side terminal of the power supply unit 9 in this order. The charging path Ru32 for charging the capacitor C27 with the electric charges in the capacitor C37 is a path that passes through the capacitor C37, the resistor R37, the diode D27, the resistor R27, the capacitor C27, the third connection node 13, the third switching element Q3, and the capacitor C37 in this order.

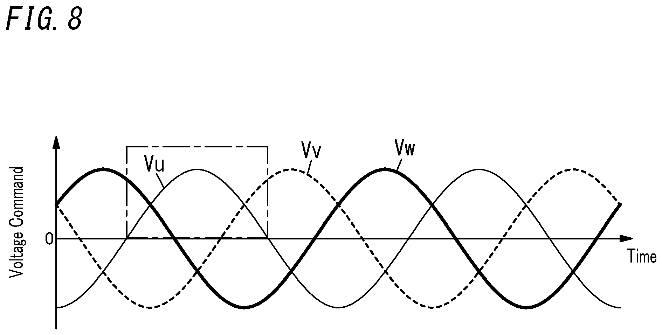

The controller 60 generates, in accordance with voltage commands Vu, Vv, Vw (refer to FIG. 8) about the respective output voltages of the inverter circuits 1U, 1V, 1W, first to fourth control signals S1-S4 (S1U-S4U) for the first to fourth switching elements Q1-Q4 of the inverter circuit 1U, first to fourth control signals S1-S4 (S1V-S4V) for the first to fourth switching elements Q1-Q4 of the inverter circuit 1V, and first to fourth control signals S1-S4 (S1W-S4W) for the first to fourth switching elements Q1-Q4 of the inverter circuit 1W.

As shown in FIG. 8, voltage commands Vu, Vv, Vw are sinusoidal wave signals, of which the phases are different from each other by 120 degrees and have values (voltage command values) that change with time. Note that the voltage commands Vu, Vv, Vw each have one cycle of the same length. Optionally, the control unit 60 may perform proportional-integral (PI) control on the voltage commands Vu, Vv, Vw in accordance with the information provided by a detection unit 8 for detecting the state of the AC load RA1. For example, if the AC load RA1 is a three-phase motor, the information provided by the detection unit 8 includes, for example, information about detection results obtained by a plurality of current sensors for detecting output currents flowing through the U-, V- and W-phases of the AC load RA1 and/or information about the detection results obtained by an encoder for detecting the number of revolutions, the rotational angle, and other parameters of the three-phase motor.

Next, it will be described how one of the three inverter circuits 1 (e.g., the U-phase inverter circuit 1U) operates.

The V-phase inverter circuit 1V and the W-phase inverter circuit 1W operate in the same way as the U-phase inverter circuit 1U. The respective output voltages of the U-phase inverter circuit 1U, the V-phase inverter circuit 1V, and the W-phase inverter circuit 1W have mutually different phases.

The control unit 60 controls the plurality of first gate drivers 61, the plurality of second gate drivers 62, the plurality of third gate drivers 63, and the plurality of fourth gate drivers 64 by performing voltage vector control.

Next, it will be described in further detail how the control unit 60 performs the voltage vector control.

The control unit 60 stores, in advance, a group of voltage vectors. Each of the group of voltage vectors is defined by a combination of respective potential levels at connection nodes (third connection nodes 13), at each of which the second switching element Q2 and the third switching element Q3 are connected to each other in a corresponding one of the plurality of inverter circuits 1. In other words, each of the group of voltage vectors is defined by the switching state of the switching circuit 10U corresponding to the U-phase, the switching state of the switching circuit 10V corresponding to the V-phase, and the switching state of the switching circuit 10W corresponding to the W-phase. The number of voltage vectors included in one group of voltage vectors is $3^3$ (= 27).

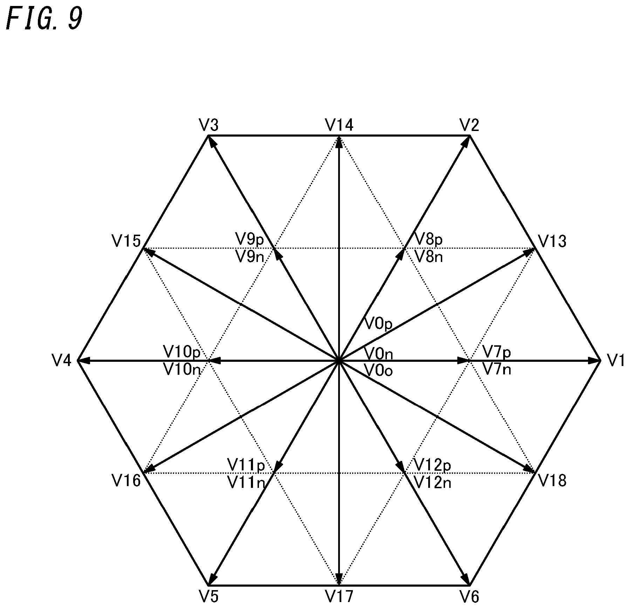

As shown in FIG. 9, one group of voltage vectors includes three zero vectors V0p, V0n, V0o, each of which has a magnitude of zero. In addition, one group of voltage vectors further includes six voltage vectors V1, V2, V3, V4, V5, V6, each of which has a magnitude of $(2/3)^{1/2} \cdot 2Vdc$ and which have mutually different directions. Furthermore, one group of voltage vectors further includes twelve voltage vectors V7p, V7n, V8p, V8n, V9p, V9n, V10p, V10n, V11p, V11n, V12p, V12n, each of which has a magnitude of $(2/3)^{1/2} \cdot Vdc$. Besides, one group of voltage vectors further includes six voltage vectors V13, V14, V15, V16, V17, V18, each of which has a magnitude of $(2/3)^{1/2} \cdot 3^{1/2} \cdot Vdc$ and which have mutually different directions. In FIG. 9, the angle formed between each pair of adjacent voltage vectors belonging to the six voltage vectors V1, V2, V3, V4, V5, V6 is 60 degrees. Likewise, the angle formed between each pair of adjacent voltage vectors belonging to the six voltage vectors V13, V14, V15, V16, V17, V18 is also 60 degrees. Note that FIG. 9 is a vector diagram in which the one group of voltage vectors are illustrated on an orthogonal d-q coordinate system.

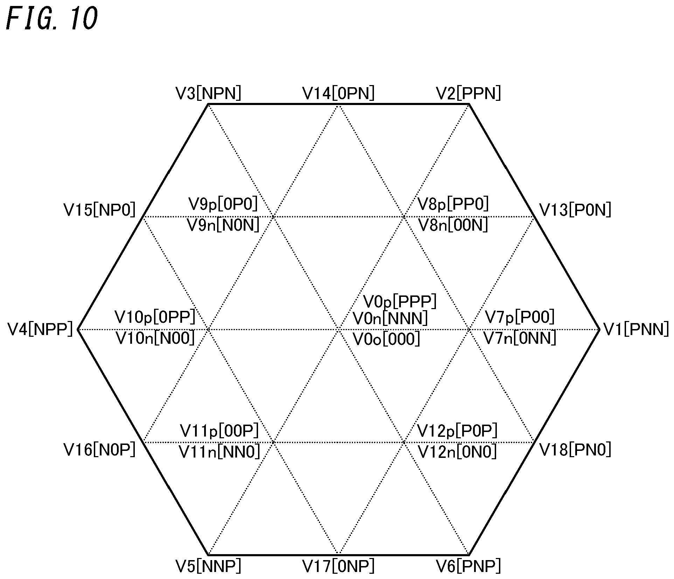

Each group of voltage vectors may be expressed as shown in FIG. 10 if their first, second, and third switching states are designated by the reference signs "P," "0," and "N," respectively, and the respective switching states of the three phases are arranged in the order of U-, V, and W-phases.

As shown in FIG. 10, the three zero vectors V0p, V0n, V0o may be expressed as V0p [PPP], V0n [NNN], V0o [000], respectively. For example, V0p [PPP] indicates that regarding the zero vector V0p, the switching state of the U-phase switching circuit 10U is "P," the switching state of the V-phase switching circuit 10V is "P," and the switching state of the W-phase switching circuit 10W is "P." A voltage vector with the suffix "p" such as V10p includes "P" but does not include "N." The same statement will apply to the rest of the description. A voltage vector with the suffix "n" such as V10n includes "N" but does not include "P." The same statement will apply to the rest of the description. A voltage vector with the suffix "o" such as V10o includes "0" but includes neither "P" nor "N." If the switching state of the switching circuit 10 is "P," then the potential at the third connection node 13 of the switching circuit 10 will be the potential at the positive electrode P1 of the DC power supply unit 3. If the switching state of the switching circuit 10 is "N," then the potential at the third connection node 13 of the switching circuit 10 will be the potential at the negative electrode N1 of the DC power supply unit 3. If the switching state of the switching circuit 10 is "0," then the potential at the third connection node 13 of the switching circuit 10 will be the potential at the intermediate potential node M1 of the DC power supply unit 3.

The six voltage vectors V1, V2, V3, V4, V5, and V6 may be expressed as V1 [PNN], V2 [PPN], V3 [NPN], V4 [NPP], V5 [NNP], and V6 [PNP], respectively. A voltage vector with none of the suffixes "p," "n," and "o" added to the numeral following "V" such as V1 [PNN], V2 [PPN], V3 [NPN], V4 [NPP], V5 [NNP], and V6 [PNP] includes "P" and "N" as two out of the three-phase switching states.

The twelve voltage vectors V7p, V7n, V8p, V8n, V9p, V9n, V10p, V10n, V11p, V11n, V12p, and V12n may be expressed as V7p [P00], V7n [0NN], V8p [PPO], V8n [00N], V9p [0P0], V9n [NON], V10p [0PP], V10n [N00], V11p [00P], V11n [NN0], V12p [POP], and V12n [0N0], respectively.

The six voltage vectors V13, V14, V15, V16, V17, and V18 may be expressed as V13 [P0N], V14 [0PN], V15 [NP0], V16 [N0P], V17 [0NP], and V18 [PN0], respectively.

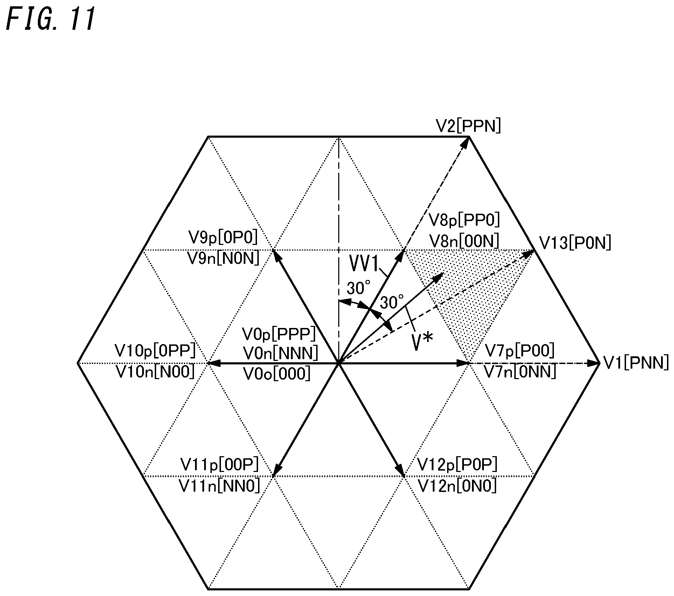

The control unit 60 transforms the instantaneous value of the command voltage with respect to the output voltage of each of the plurality of inverter circuits 1 into a command voltage vector V* (refer to FIG. 11). If the d-axis component of the command voltage vector V* on the orthogonal d-q coordinate system is Vd and the q-axis component of the command voltage vector V* on the orthogonal d-q coordinate system is Vq, then the command voltage vector V* may be given by the following Equation (1):

$$V^* = \begin{bmatrix} V d \\ V q \end{bmatrix} = \sqrt{\frac{2}{3}} \cdot \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} V u \\ V v \\ V w \end{bmatrix}$$

$$(1)$$

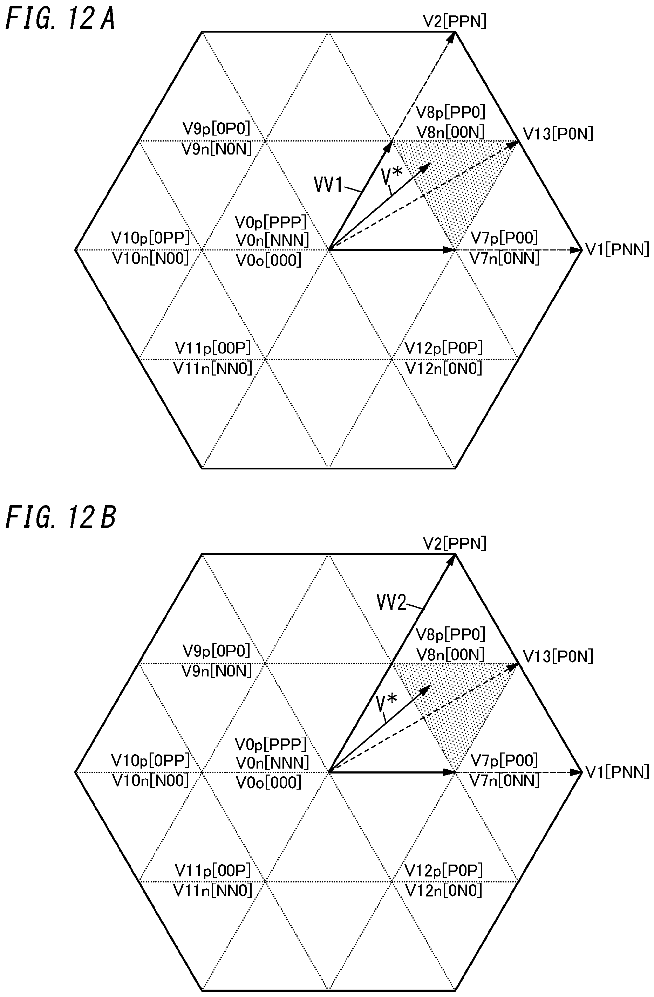

The control unit 60 selects a plurality of (e.g., five) voltage vectors located adjacent to the command voltage vector V* which belong to the group of voltage vectors. In the example shown in FIG. 12A, the plurality of voltage vectors are V8p [PPO], V8n [00N], V13 [PON], V7p [P00], and V7n [0NN].

The control unit 60 replaces first voltage vectors VV1 (e.g., V8p [PP0] and V8n [00N] in the example shown in FIGS. 11 and 12A) which belong to the plurality of voltage vectors, each have a reference magnitude, and are located closest to the command voltage vector V* with a zero vector V0n [NNN] defined by a combination of potential levels at the respective third connection nodes 13, at each of which the second switching element Q2 and the third switching element Q3 are connected to each other in a corresponding one of the plurality of inverter circuits 1 and which are as high as a potential at the negative electrode and a second voltage vector VV2 (e.g., V2 [PPN] in the example shown in FIG. 12A) having the same direction as, and a different magnitude from, the first voltage vector VV1. The reference magnitude may be, for example, $(2/3)^{1/2} \cdot$ Vdc. Thus, the plurality of voltage vectors includes, as voltage vectors of which the magnitude is the reference magnitude (i.e., reference vectors), twelve voltage vectors V7p [P00], V7n [0NN], V8p [PPO], V8n [00N], V9p [0P0], V9n [NON], V10p [0PP], V10n [N00], V11p [00P], V11n [NN0], V12p [POP], and V12n [0N0]. The angle formed between the first voltage vector VV1 located closest to the command voltage vector V* and the command voltage vector V* is smaller than 30 degrees.

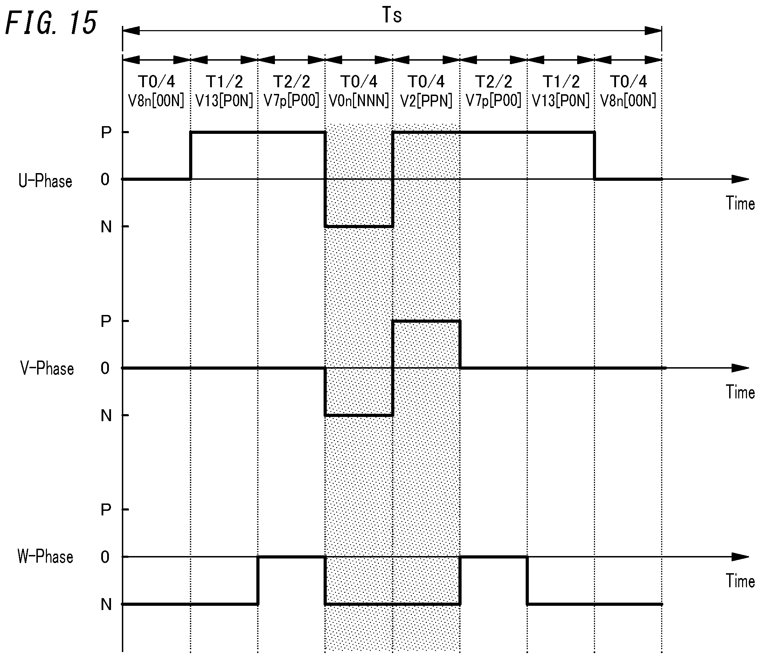

The control unit 60 controls the plurality of first gate drivers 61, the plurality of second gate drivers 62, the plurality of third gate drivers 63, and the plurality of fourth gate drivers 64 within a predetermined control cycle Ts (refer to FIG. 15) to make a synthetic vector of three voltage vectors (e.g., V13 [PON], V7p [P00], and V7n [0NN] in the example shown in FIG. 12B), other than the first voltage vectors VV1 (e.g., V8p [PP0] and V8n [00N] in the example shown in FIG. 12A) belonging to the plurality of voltage vectors, the zero vector V0n [NNN], and at least one second voltage vector VV2 equal to the command voltage vector V*. The predetermined control cycle Ts may be, for example, two cycles of a carrier signal.

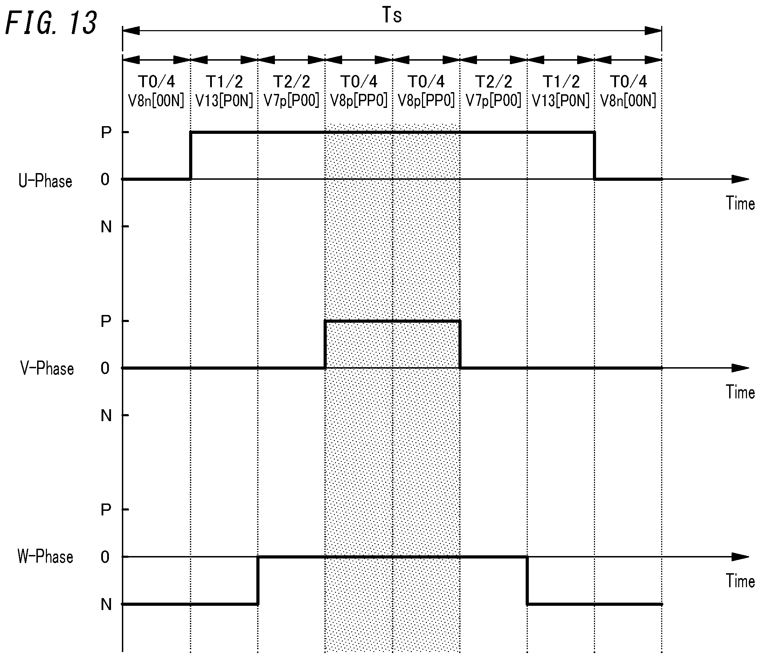

Meanwhile, in a comparative example in which a control operation is performed with the first voltage vectors VV1 not replaced with a zero vector and the second voltage vector VV2, a synthetic vector of three vectors at the three vertices of an equilateral triangle surrounding the command voltage vector V* is made equal to the command voltage vector V* within the control cycle Ts. Specifically, in the comparative example, a synthetic vector of the first voltage vectors VV1 (e.g., V8p [PP0] and V8n [00N] in the example shown in FIG. 12A), the voltage vector V13[P0N], and the voltage vectors V7p [P00] and V7n [0NN] is made equal to the command voltage vector V*. In the comparative example, the control cycle Ts is one cycle of a carrier signal. In the comparative example, in two voltage vectors arranged in line along the time series, the switching state of only one phase out of the U-, V-, and W-phases changes either between "P" and "0" or between "0" and "N" and the same voltage vector is output twice apiece within the control cycle Ts as shown in FIG. 13, for example. Specifically, in the example shown in FIG. 13, voltage vectors are output in the order of the voltage vector V8n [00N], the voltage vector V13 [P0N], the voltage vector V7p [P00], the voltage vector V8p [PPO], the voltage vector V8p [PPO], the voltage vector V7p [P00], the voltage vector V13 [PON], and the voltage vector V8n [00N]. In the example shown in FIG. 13, the time assigned out of the control cycle Ts to the voltage vectors V8p and V8n is T0, the time assigned to the voltage vector V13 is T1, and the time assigned to the voltage vectors V7p and V7n is T2. As for T0, T1, and T2, supposing the voltage vectors at the three vertices of an equilateral triangle surrounding the command voltage vector V* are Va, Vb, and Vc, respectively, the magnitude of the command voltage vector V* is V, and the angle is $\theta$, T0, T1, and T2 are determined to satisfy the following Equations (2) and (3). In Equation (2), "j" represents an imaginary unit. Note that in the example shown in FIG. 13, the voltage vector Va may be, for example, the voltage vectors V8p [PP0] and V8n [00N], the voltage vector Vb may be the voltage vector V13 [PON], and the voltage vectors Vc may be voltage vectors V7p [P00] and V7n [0NN].

$$Va \cdot T0 + Vb \cdot T1 + Vc \cdot T2$$
$$= V \cdot Ts \cdot \cos\theta + j\, V \cdot Ts \cdot \sin\theta$$

$$(2)$$

$$T0 + T1 + T2 = Ts$$

$$(3)$$

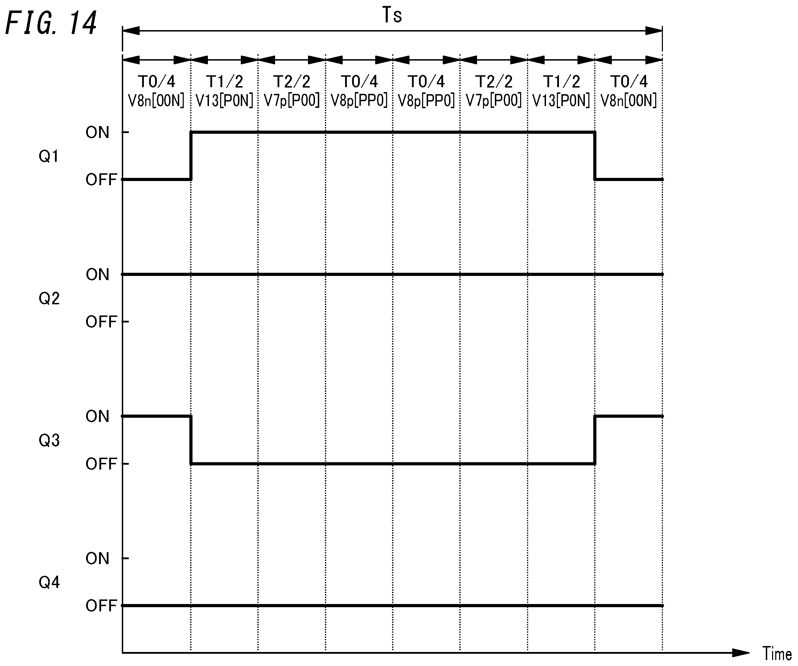

In the example shown in FIG. 13, the second switching element Q2 will remain ON, and the magnitude of voltage drop in the second bootstrap circuit 72 will increase, all through the control cycle Ts as shown in FIG. 14.

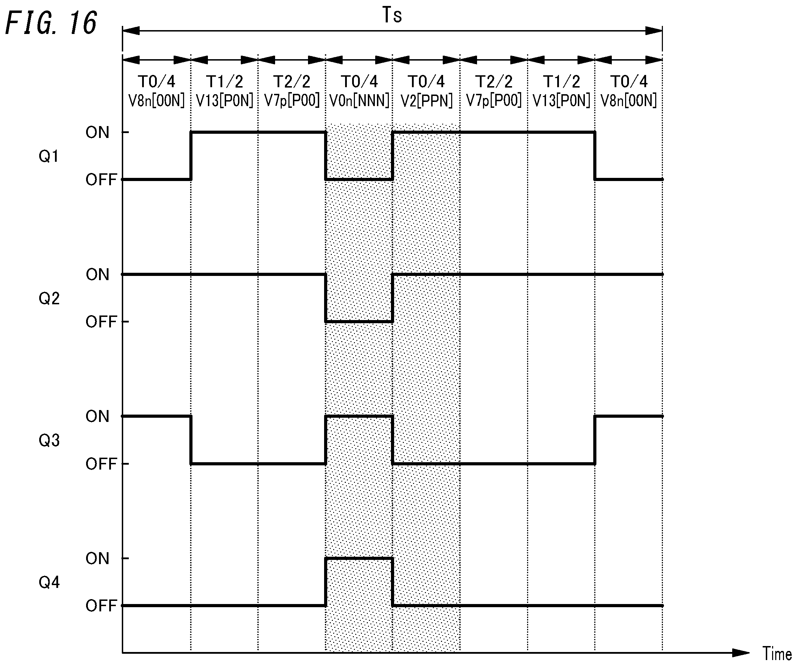

In contrast, the control unit 60 of the multi-level inverter 100 according to the first embodiment outputs the voltage vectors in the order of the voltage vector V8n [00N], the voltage vector V13 [PON], the voltage vector V7p [P00], the voltage vector V8p [PPO], the voltage vector V8p [PPO], the voltage vector V7p [P00], the voltage vector V13 [PON], and the voltage vector V8n [00N] within two cycles of the carrier signal as shown in FIG. 15, for example. The control unit 60 replaces the voltage vectors V8p [PPO], V8p [PP0] according to the comparative example with the zero vector V0n [NNN] and the second voltage vector VV2 (V2 [PPN]), respectively, thus generating a period in which the U-phase switching state is "N" as shown in FIG. 15. This allows the multi-level inverter 100 according to the first embodiment to generate the third switching state in which the first switching element Q1 and the second switching element Q2 are both OFF and the third switching element Q3 and the fourth switching element Q4 are both ON as shown in FIG. 16. Thus, the multi-level inverter 100 according to the first embodiment may reduce the chances of causing a voltage drop in the capacitors C27 of the second bootstrap circuits 72.

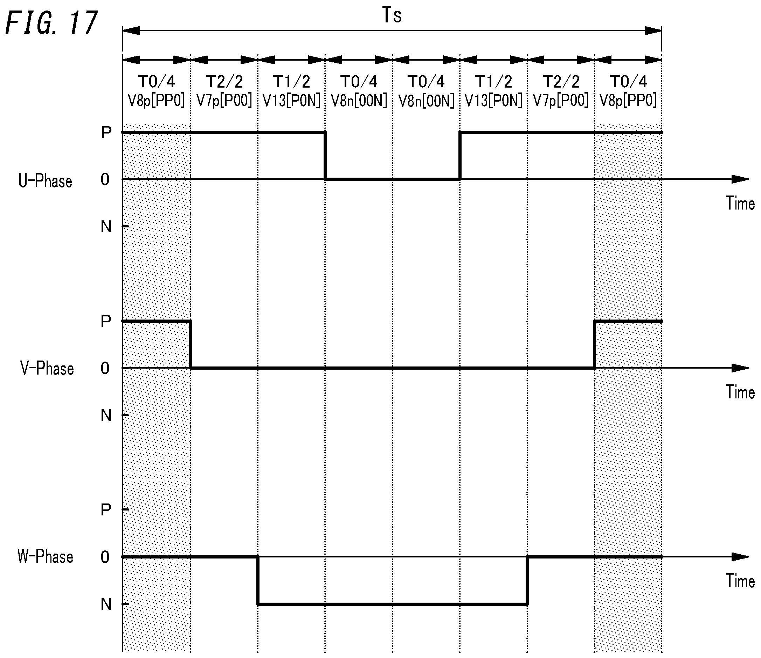

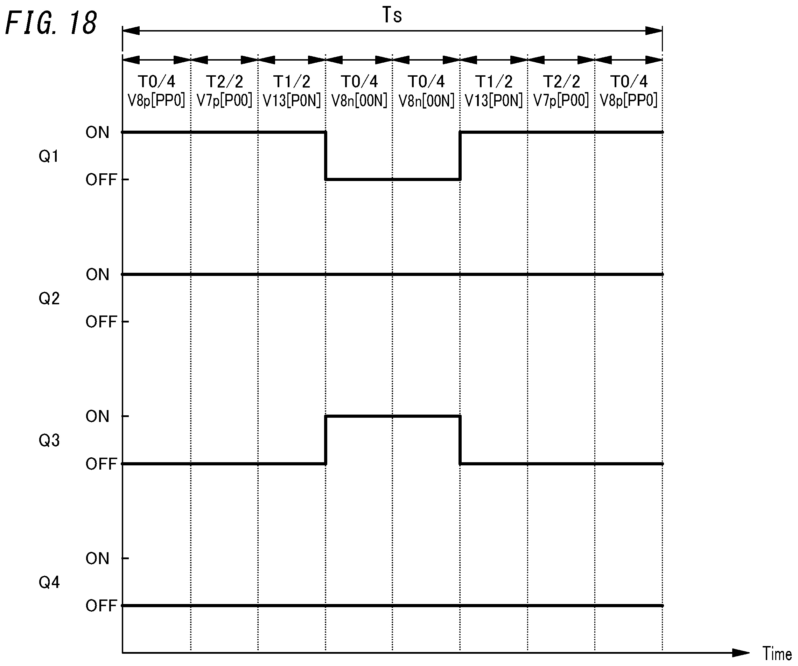

In addition, in the comparative example, even if the command voltage vector V* is the same as the one shown in FIG. 12A, the arrangement order of the voltage vectors within the control cycle Ts may be different according to the initial value of the carrier signal at the beginning of the control cycle Ts. Specifically, in the example shown in FIG. 17, the voltage vectors are output in the order of the voltage vector V8p [PPO], the voltage vector V7p [P00], the voltage vector V13 [P0N], the voltage vector V8n [00N], the voltage vector V8n [00N], the voltage vector V13 [PON], the voltage vector V7p [P00], and the voltage vector V8p [PP0]. Also, in the example shown in FIG. 17, the time assigned to the voltage vectors V8p and V8n is T0, the time assigned to the voltage vector V13 is T1, and the time assigned to the voltage vectors V7p and V7n is T2 as in the example shown in FIG. 13. In that case, the third switching state will not be generated, and the magnitude of voltage drop in the second bootstrap circuits 72 will increase, all through the control cycle Ts as shown in FIG. 18.

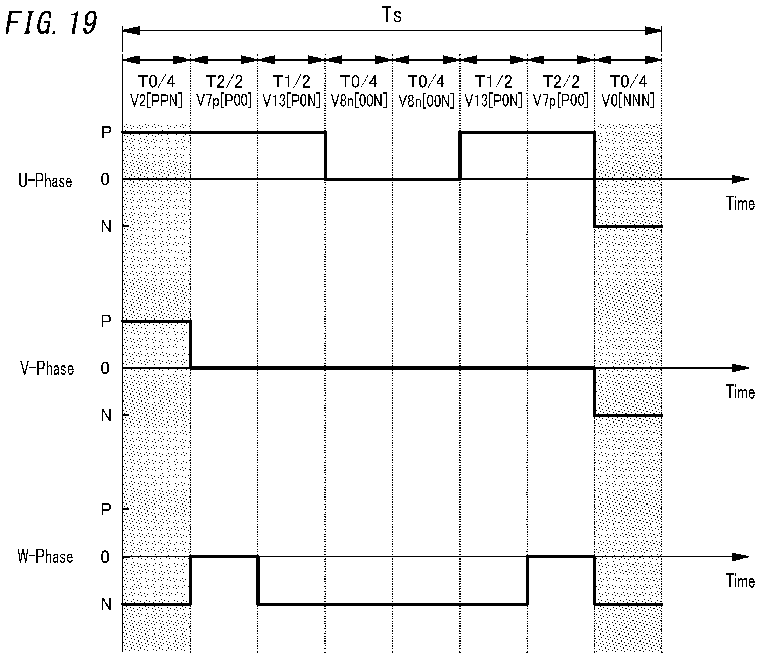

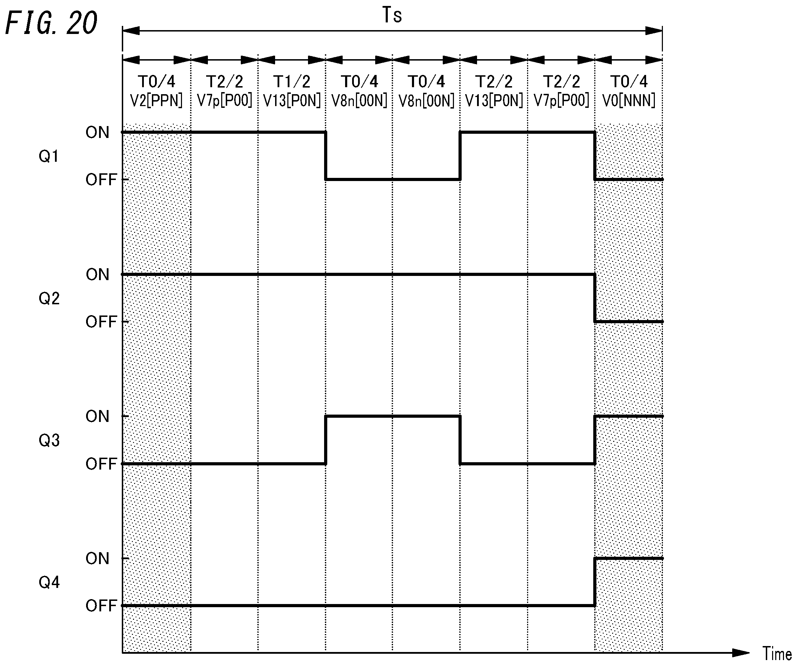

In contrast, the control unit 60 of the multi-level inverter 100 according to the first embodiment outputs the voltage vectors and the zero vector in the order of the voltage vector V2 [PPN], the voltage vector V7p [P00], the voltage vector V13 [PON], the voltage vector V8n [00N], the voltage vector V8n [00N], the voltage vector V13 [PON], the voltage vector V7p [P00], and the zero vector V0n [NNN] within two cycles of the carrier signal as shown in FIG. 19, for example. The control unit 60 replaces the voltage vectors V8p [PPO], V8p [PP0] in the example shown in FIG. 17 with the voltage vectors V2 [PPN] and V0n [NNN], respectively, thus generating a period in which the U-phase switching state is "N" as shown in FIG. 19. This allows the multi-level inverter 100 according to the first embodiment to generate the third switching state within the control cycle Ts as shown in FIG. 20. Thus, the multi-level inverter 100 according to the first embodiment may reduce the chances of causing a voltage drop in the capacitors C27 of the second bootstrap circuits 72.

Meanwhile, in the multi-level inverter 100 according to the first embodiment, the control unit 60 replaces, when the polarity of a command voltage corresponding to the command voltage vector V* is positive, the first voltage vectors VV1 with the zero vector V0n [NNN] and the second voltage vector VV2. In the multi-level inverter 100 according to the first embodiment, the control unit 60 does not replace, when the polarity of a command voltage corresponding to the command voltage vector V* is negative, the first voltage vectors VV1 with the zero vector V0n [NNN] and the second voltage vector VV2.

Furthermore, in the multi-level inverter 100, the control unit 60 controls the plurality of first gate drivers 61, the plurality of second gate drivers 62, the plurality of third gate drivers 63, and the plurality of fourth gate drivers 64 to prevent the respective output voltages of the plurality of first bootstrap circuits 71 and the plurality of second bootstrap circuits 72 from decreasing to a predetermined value or less.

(3) Recapitulation

In the multi-level inverter 100 according to the first embodiment, the control unit 60 selects a plurality of (five) voltage vectors (e.g., V8p [PPO], V8n [00N], V13 [PON], V7p [P00], and V7n [0NN]) located adjacent to a command voltage vector V* which belong to a group of (27) voltage vectors. Each of the group of voltage vectors is defined by a combination of potential levels at respective third connection nodes 13, at each of which the second switching element Q2 and the third switching element Q3 are connected to each other in a corresponding one of the plurality of inverter circuits 1. The control unit 60 replaces one first voltage vector VV1 out of two first voltage vectors VV1 with a zero vector V0n [NNN] and a second voltage vector VV2. The two first voltage vectors VV1 belong to the plurality of voltage vectors, each have a reference magnitude, and are located closest to the command voltage vector V*. The zero vector V0n [NNN] is defined by a combination of potential levels at the respective third connection nodes 13, at each of which the second switching element Q2 and the third switching element Q3 are connected to each other in a corresponding one of the plurality of inverter circuits 1 and which are as high as a potential at the negative electrode N1. The second voltage vector VV2 has the same direction as, and twice as large a magnitude as, the first voltage vector VV1. The control unit 60 controls the plurality of first gate drivers 61, the plurality of second gate drivers 62, the plurality of third gate drivers 63, and the plurality of fourth gate drivers 64 within a predetermined control cycle Ts to make a synthetic vector of a voltage vector included in the plurality of voltage vectors but the first voltage vectors VV1, the other first voltage vector VV1 out of the two first voltage vectors VV1, the zero vector V0n [NNN], and the second voltage vector VV2 equal to the command voltage vector V*.

The multi-level inverter 100 according to the first embodiment may reduce the chances of causing a voltage drop in a bootstrap circuit. More specifically, the multi-level inverter 100 according to this aspect may reduce the chances of causing a voltage drop in the capacitors C17 of the plurality of first bootstrap circuits 71, the capacitors C27 of the plurality of second bootstrap circuits 72, and the capacitors C37 of the plurality of third bootstrap circuits 73.

In addition, in the multi-level inverter 100 according to the first embodiment, the DC-DC converter 91 included in the power supply unit 9 supplies a voltage to the plurality of fourth gate drivers 64 and the plurality of third bootstrap circuits 73. Thus, the multi-level inverter 100 according to the first embodiment may contribute to downsizing.

(Second embodiment)

A multi-level inverter 100 according to a second embodiment has the same circuit configuration as the multi-level inverter 100 (refer to FIG. 1) according to the first embodiment, and therefore, illustration and description thereof will be omitted herein.

In the multi-level inverter 100 according to the first embodiment, the control unit 60 replaces only one first voltage vector VV1 out of the two first voltage vectors VV1 (such as V8n [00N] and V8p [PP0]) with the zero vector V0n [NNN] and the second voltage vector VV2 (such as V2 [PPN]) as in the example shown in FIG. 15.

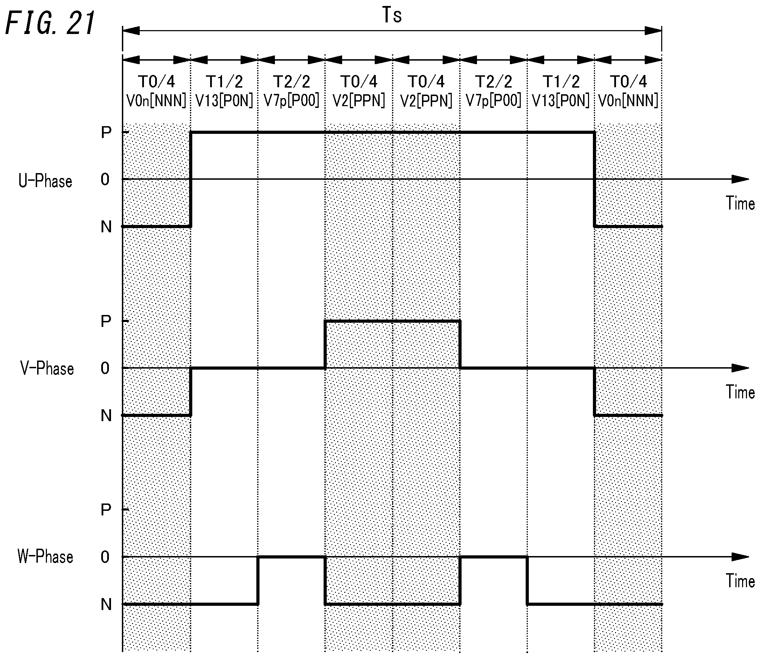

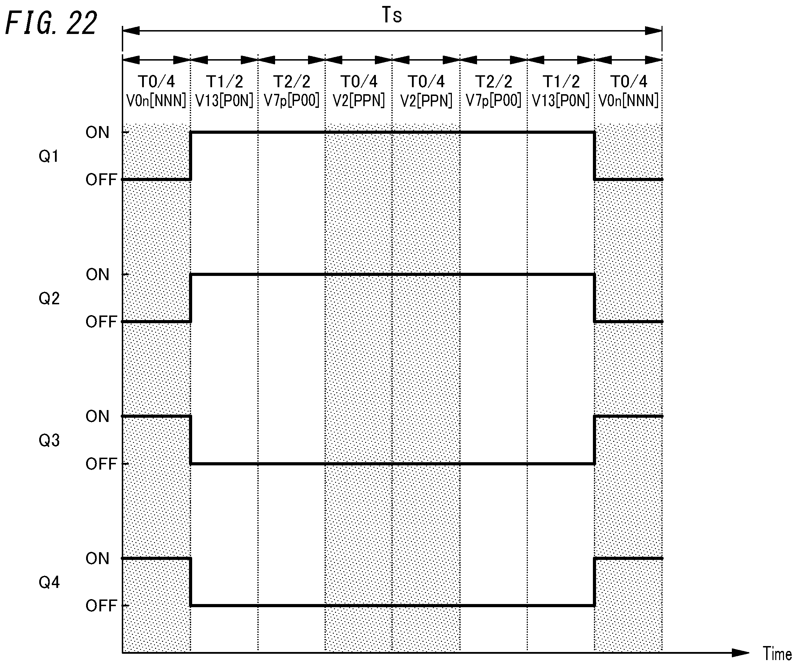

On the other hand, in the multi-level inverter 100 according to the second embodiment, the control unit 60 replaces one first voltage vector VV1 (such as V8n [00N]) out of the two first voltage vectors VV1 (such as V8n [00N] and V8p [PP0]) with the zero vector V0n [NNN] and replaces the other first voltage vector VV1 (such as V8p [PP0]) with the second voltage vector V2 (such as V2 [PPN]) as in the example shown in FIG. 21, for instance. In that case, the control unit 60 of the multi-level inverter 100 according to the second embodiment outputs, within two cycles of the carrier signal, the voltage vectors and the zero vectors in the order of the zero vector V0n [NNN], the voltage vector V13 [PON], the voltage vector V7p [P00], the voltage vector V2 [PPN], the voltage vector V2 [PPN], the voltage vector V7p [P00], the voltage vector V13 [PON], and the zero vector V0 [NNN] as shown in FIG. 21. The control unit 60 replaces the voltage vectors V8n [00N], V8p [PPO], V8p [PPO], and V8n [00N] in the example shown in FIG. 13 with the zero vector V0n [NNN], the voltage vector V2 [PPN], the voltage vector V2 [PPN], and the zero vector V0n [NNN], respectively, thus generating a period in which the U-phase switching state is "N" as shown in FIG. 21. This allows the multi-level inverter 100 according to the second embodiment to generate the third switching state within the control cycle Ts as shown in FIG. 22. Consequently, the multi-level inverter 100 according to the second embodiment may reduce the chances of causing a voltage drop in the capacitors C27 of the second bootstrap circuits 72.

Furthermore, in the multi-level inverter 100 according to the first embodiment, the control unit 60 replaces only one first voltage vector VV1 (such as V8p [PP0]) out of the two first voltage vectors VV1 (such as V8n [00N] and V8p [PP0]) with the zero vector V0n [NNN] and the second voltage vector VV2 (such as V2 [PPN]) in the example shown in FIG. 19.

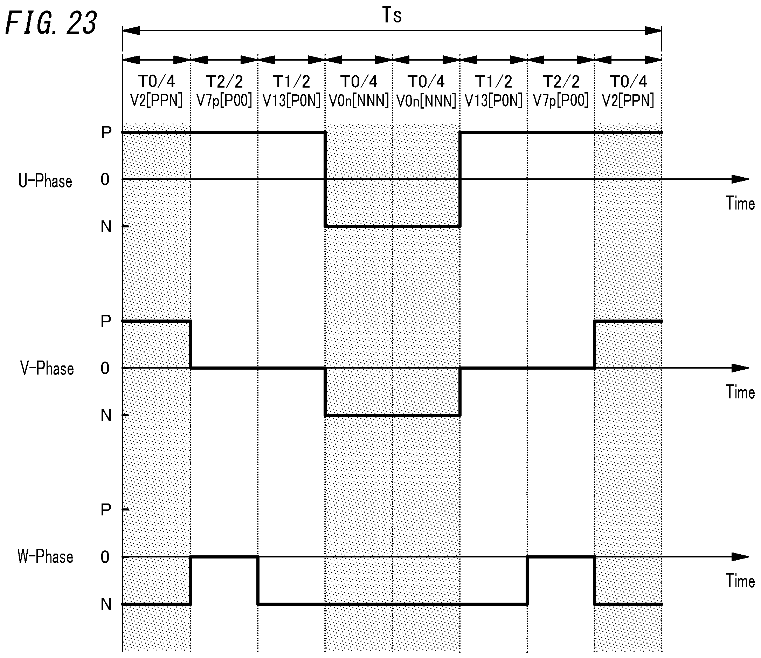

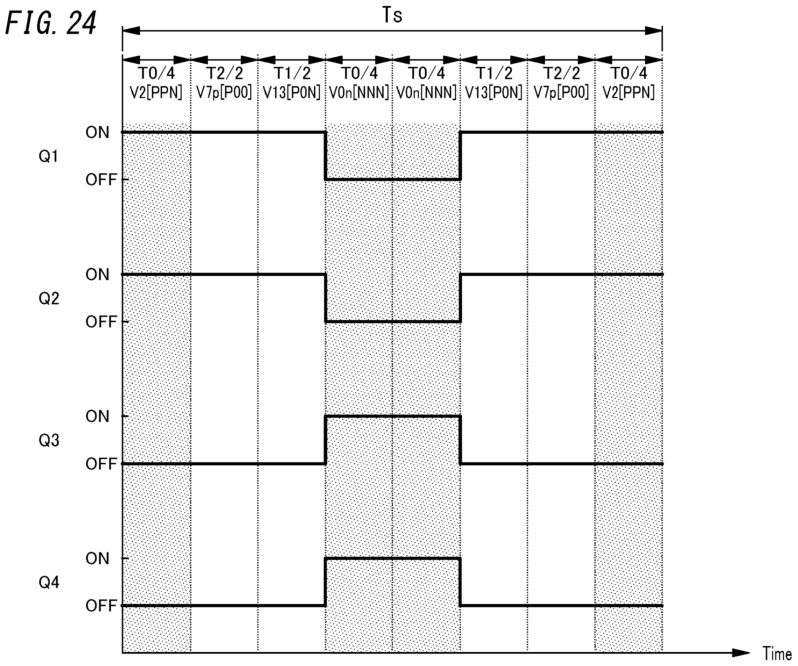

In contrast, in the multi-level inverter 100 according to the second embodiment, the control unit 60 replaces one first voltage vector VV1 (such as V8n [00N]) out of the two first voltage vectors VV1 (such as V8n [00N] and V8p [PP0]) with the zero vector V0n [NNN] and replaces the other first voltage vector VV1 (such as V8p [PP0]) with the second voltage vector VV2 (such as V2 [PPN]) as in the example shown in FIG. 23, for instance. In that case, in the multi-level inverter 100 according to the second embodiment, the control unit 60 outputs, within two cycles of the carrier signal, the voltage vectors and zero vectors in the order of the voltage vector V2 [PPN], the voltage vector V7p [P00], the voltage vector V13 [PON], the zero vector V0n [NNN], the zero vector V0n [NNN], the voltage vector V13 [PON], the voltage vector V7p [P00], and the voltage vector V2 [PPN] as shown in FIG. 23. The control unit 60 replaces the voltage vectors V8p [PPO], V8n [00N], V8n [00N], and V8p [PP0] of the example shown in FIG. 17 with the voltage vectors and zero vectors V2 [PPN], V0n [NNN], V0n [NNN], and V2 [PPN], respectively, thus generating a period in which the U-phase switching state is "N" as shown in FIG. 23. This allows the multi-level inverter 100 according to the second embodiment to generate the third switching state within the control cycle Ts as shown in FIG. 24. Consequently, the multi-level inverter 100 according to the second embodiment may reduce the chances of causing a voltage drop in the capacitors C27 of the second bootstrap circuits 72.

In the multi-level inverter 100 according to the second embodiment, the control unit 60 replaces the first voltage vector VV1, which belongs to the plurality of voltage vectors, has a reference magnitude, and is located closest to the command voltage vector V*, with a zero vector V0n [NNN] defined by a combination of potential levels at the respective third connection nodes 13, at each of which the second switching element Q2 and the third switching element Q3 are connected to each other in a corresponding one of the plurality of inverter circuits 1 and which are as high as a potential at the negative electrode N1 and the second voltage vector VV2 having the same direction as, and twice as large a magnitude as, the first voltage vector VV1. The control unit 60 controls the plurality of first gate drivers 61, the plurality of second gate drivers 62, the plurality of third gate drivers 63, and the plurality of fourth gate drivers 64 within a predetermined control cycle Ts to make a synthetic vector of a voltage vector included in the plurality of voltage vectors but the first voltage vector VV1, the zero vector V0n [NNN], and the second voltage vector VV2 equal to the command voltage vector V*.

The multi-level inverter 100 according to the second embodiment may reduce the chances of causing a voltage drop in a bootstrap circuit. More specifically, the multi-level inverter 100 according to this aspect may reduce the chances of causing a voltage drop in the capacitors C17 of the plurality of first bootstrap circuits 71, the capacitors C27 of the plurality of second bootstrap circuits 72, and the capacitors C37 of the plurality of third bootstrap circuits 73.

(Other variations)

Note that the first and second embodiments described above are only exemplary ones of various embodiments of the present disclosure and should not be construed as limiting. Rather, the first and second embodiments may be readily modified in various manners depending on a design choice or any other factor without departing from the scope of the present disclosure.

For example, the plurality of first switching elements Q1, the plurality of second switching elements Q2, the plurality of third switching elements Q3, and the plurality of fourth switching elements Q4 do not have to be MOSFETs but may also be insulated gate bipolar transistors (IGBTs). In that case, in each of the plurality of first switching elements Q1, the plurality of second switching elements Q2, the plurality of third switching elements Q3, and the plurality of fourth switching elements Q4, the control terminal, first main terminal, and second main terminal thereof are a gate terminal, a collector terminal, and an emitter terminal, respectively.

Also, in the multi-level inverter 100 according to the first and second embodiments, the control unit 60 may replace the first voltage vector VV1 with the zero vector V0n [NNN] and the second voltage vector VV2 not only when the polarity of the command voltage corresponding to the command voltage vector V* is positive but also when the polarity of the command voltage corresponding to the command voltage vector V* is negative.

Each of the plurality of first bootstrap circuits 71 includes a Zener diode Z17 in the embodiments described above but may also have a configuration including no Zener diodes Z17. Likewise, each of the plurality of second bootstrap circuits 72 includes a Zener diode Z27 in the embodiments described above but may also have a configuration including no Zener diodes Z27. Likewise, each of the plurality of third bootstrap circuits 73 includes a Zener diode Z37 in the embodiments described above but may also have a configuration including no Zener diodes Z37.

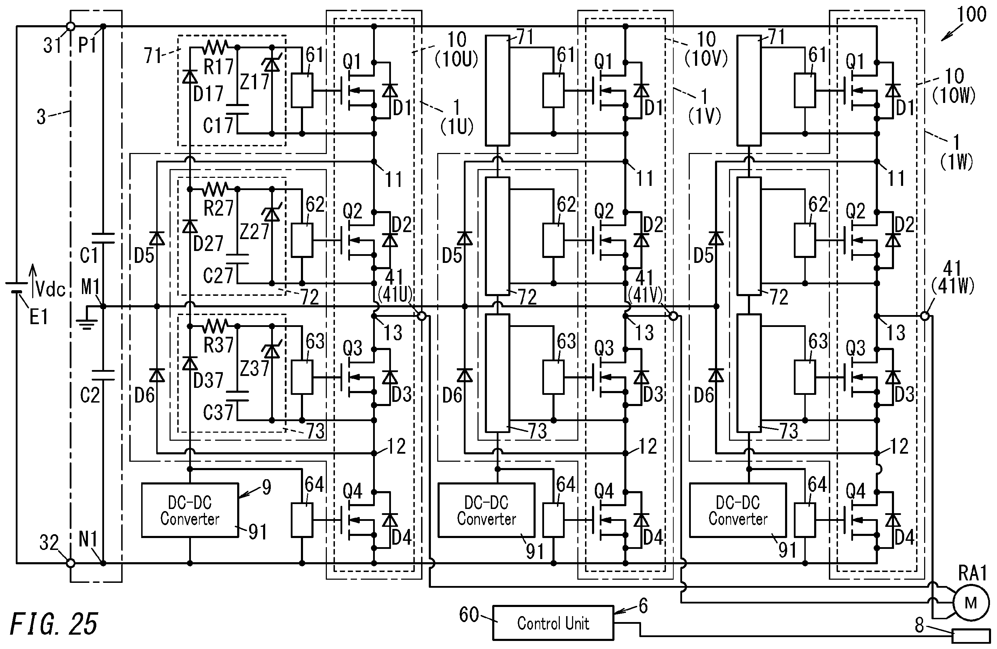

In the embodiments described above, the multi-level inverter 100 includes only one DC-DC converter 91 as shown in FIG. 1 as the power supply unit 9 for supplying a voltage to the three fourth gate drivers 64. Alternatively, as in the multi-level inverter 100 according to the variation shown in FIG. 25, the power supply unit 9 may include a plurality of (e.g., three) DC-DC converters 91. The plurality of DC-DC converters 91 are provided one to one for the plurality of (e.g., three) fourth gate drivers 64. Each of the plurality of DC-DC converters 91 supplies a voltage to a corresponding one of the fourth gate drivers 64. In the case of the multi-level inverter 100 according to the variation, in each of the plurality of first bootstrap circuits 71, the anode of the diode D17 is connected to the positive-side terminal of a corresponding one of the plurality of DC-DC converters 91. Also, in each of the plurality of second bootstrap circuits 72, the anode of the diode D27 is connected to the positive-side terminal of a corresponding one of the plurality of DC-DC converters 91. Furthermore, in each of the plurality of third bootstrap circuits 73, the anode of the diode D37 is connected to the positive-side terminal of a corresponding one of the plurality of DC-DC converters 91.

Also, the multi-level inverter 100 only needs to be a multi-level inverter with at least three levels and may be, for example, a five-level inverter.

(Third embodiment)

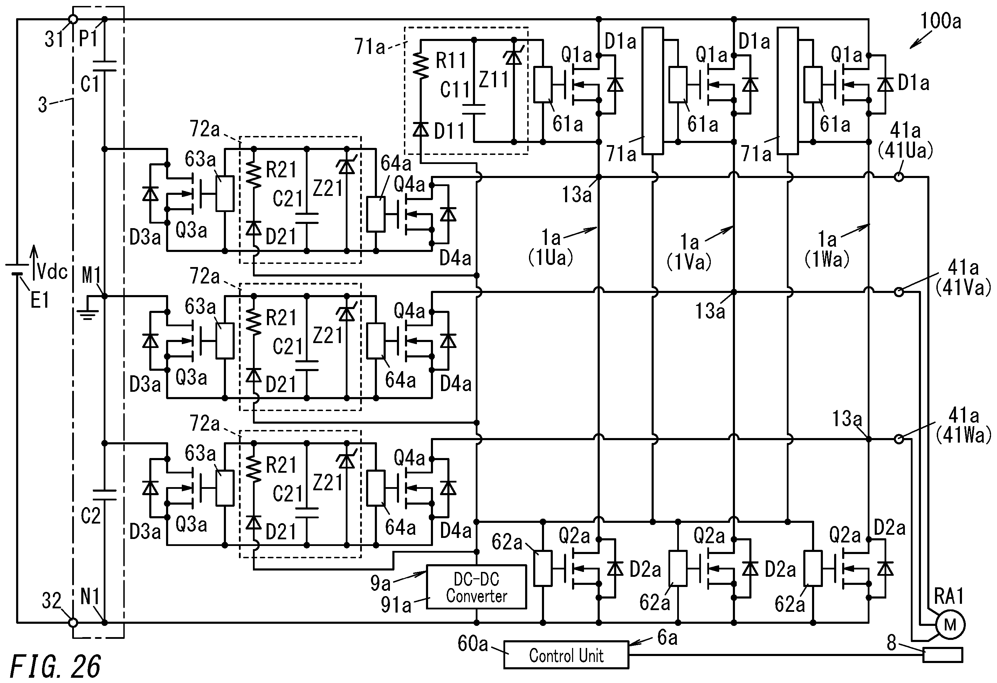

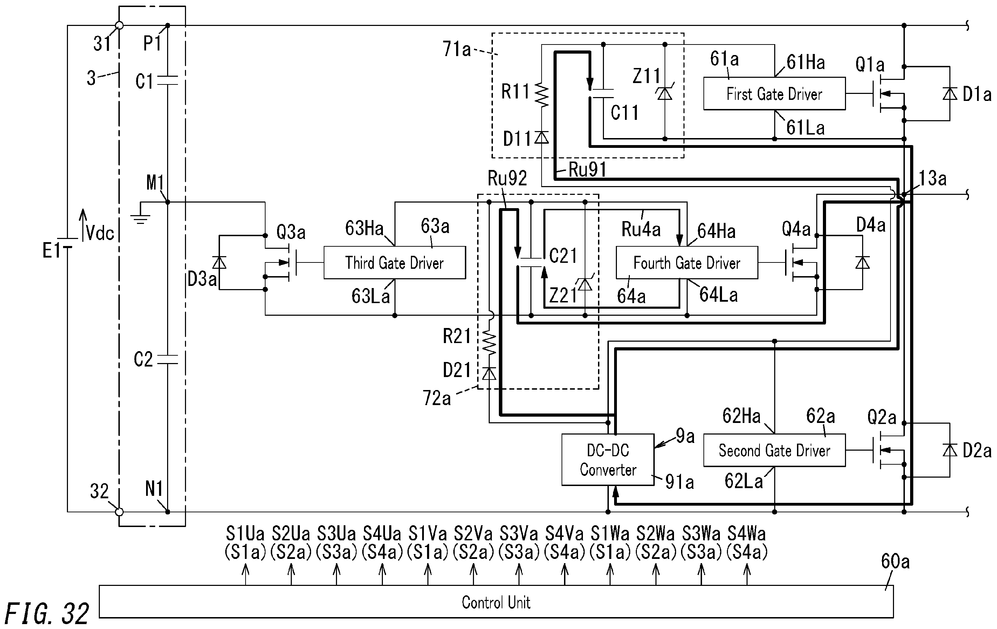

A multi-level inverter 100a according to a third embodiment will now be described with reference to FIGS. 26-38B.

(1) Overview

The multi-level inverter 100a may include, for example, a DC power supply unit 3, a plurality of (e.g., three) inverter circuits 1a, and a controller 6a as shown in FIG. 26. The DC power supply unit 3 includes a positive electrode P1, a negative electrode N1, and an intermediate potential node M1. The plurality of inverter circuits 1a are connected between the positive electrode P1 and the negative electrode N1 of the DC power supply unit 3. The controller 6a controls the plurality of inverter circuits 1a.

The multi-level inverter 100a is a T-type three-level three-phase inverter. In the multi-level inverter 100a, each of the plurality of inverter circuits 1a has an output terminal 41a. In the multi-level inverter 100a, an AC load RA1 is connected to the plurality of output terminals (AC terminals) 41a. The AC load RA1 may be, for example, a three-phase motor. In the multi-level inverter 100a, one of the plurality of inverter circuits 1a is an inverter circuit 1Ua for outputting a U-phase voltage, another one of the plurality of inverter circuits 1a is an inverter circuit 1Va for outputting a V-phase voltage, and the other one of the plurality of inverter circuits 1a is an inverter circuit 1Wa for outputting a W-phase voltage.

Each of the plurality of inverter circuits 1a includes: a first switching element Q1a, a second switching element

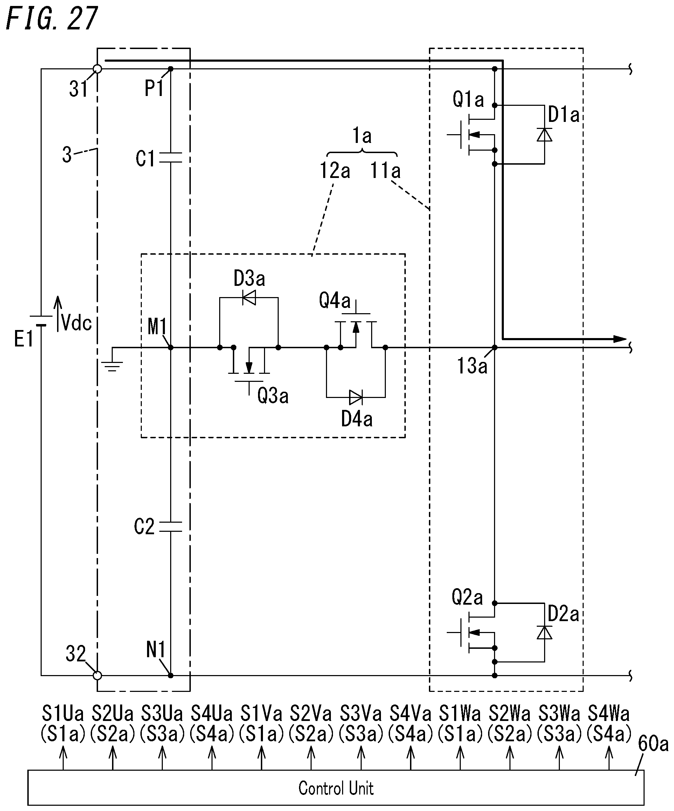

Q2a, a third switching element Q3a, and a fourth switching element Q4a; and a first diode D1a, a second diode D2a, a third diode D3a, and a fourth diode D4a. The first diode D1a, the second diode D2a, the third diode D3a, and the fourth diode D4a are connected in anti-parallel to the first switching element Q1a, the second switching element Q2a, the third switching element Q3a, and the fourth switching element Q4a, respectively. In each of the plurality of inverter circuits 1a, the first switching element Q1a and the second switching element Q2a are connected in series to be arranged in this order from the positive electrode P1 toward the negative electrode N1. That is to say, as shown in FIGS. 26 and 27, a series circuit (a first circuit 11a) of the first switching element Q1a and the second switching element Q2a is connected between the positive electrode P1 and the negative electrode N1. In each of the plurality of inverter circuits 1a, a series circuit (a second circuit 12a) of the third switching element Q3a and the fourth switching element Q4a is connected between the intermediate potential node M1 and an output node. The output node is a connection node 13a between the first switching element Q1a and the second switching element Q2a. The second circuit 12a includes a bidirectional switch including the third switching element Q3a, the fourth switching element Q4a, the third diode D3a, and the fourth diode D4a.

The controller 6a includes a plurality of (e.g., three) first gate drivers 61a, a plurality of (e.g., three) second gate drivers 62a, a plurality of (e.g., three) third gate drivers 63a, and a plurality of (e.g., three) fourth gate drivers 64a. The controller 6a further includes a plurality of (e.g., three) bootstrap circuits 71a (hereinafter also referred to as "first bootstrap circuits 71a"), a plurality of (e.g., three) second bootstrap circuits 72a, a power supply unit 9a, and a control unit 60a.

Each of the plurality of first gate drivers 61a drives the first switching element Q1a of a corresponding one of the plurality of inverter circuits 1a. Each of the plurality of second gate drivers 62a drives the second switching element Q2a of a corresponding one of the plurality of inverter circuits 1a. Each of the plurality of third gate drivers 63a drives the third switching element Q3a of a corresponding one of the plurality of inverter circuits 1a. Each of the plurality of fourth gate drivers 64a drives the fourth switching element Q4a of a corresponding one of the plurality of inverter circuits 1a.

The plurality of first bootstrap circuits 71a are provided one to one for the plurality of first gate drivers 61a. Each of the plurality of first bootstrap circuits 71a supplies a voltage to a corresponding one of the plurality of first gate drivers 61a. The plurality of second bootstrap circuits 72a are provided one to one for the plurality of third gate drivers 63a and the plurality of fourth gate drivers 64a. Each of the plurality of second bootstrap circuits 72a supplies a voltage to a corresponding one of the plurality of third gate drivers 63a and a corresponding one of the plurality of fourth gate drivers 64a. The power supply unit 9a supplies a voltage to the plurality of second gate drivers 62a.

The control unit 60a controls the plurality of first gate drivers 61a, the plurality of second gate drivers 62a, the plurality of third gate drivers 63a, and the plurality of fourth gate drivers 64a.

(2) Details of power converter

The DC power supply unit 3 includes a first capacitor C1 and a second capacitor C2. In the DC power supply unit 3, the first capacitor C1 and the second capacitor C2 are connected in series. In the DC power supply unit 3, a first terminal of the first capacitor C1 is connected to a first DC terminal 31, a second terminal of the first capacitor C1 is connected to a first terminal of the second capacitor C2, and a second terminal of the second capacitor C2 is connected to a second DC terminal 32. In the DC power supply unit 3, a connection node between the first capacitor C1 and the second capacitor C2 is an intermediate potential node M1. The DC power supply unit 3 further includes the first DC terminal 31 connected to the positive electrode P1 and the second DC terminal 32 connected to the negative electrode N1. A DC voltage source E1, for example, may be connected between the first DC terminal 31 and the second DC terminal 32. In that case, an output voltage Vdc of the DC voltage source E1 is applied to between the positive electrode P1 and negative electrode N1 of the DC power supply unit 3. Note that the capacitance of the second capacitor C2 is equal to the capacitance of the first capacitor C1. As used herein, the expression "the capacitance of the second capacitor C2 is equal to the capacitance of the first capacitor C1" refers to not only a situation where the capacitance of the second capacitor C2 is perfectly equal to the capacitance of the first capacitor C1 but also a situation where the capacitance of the second capacitor C2 is equal to or greater than 95% and equal to or less than 105% of the capacitance of the first capacitor C1.

In the following description, as for the plurality of output terminals 41a, the output terminal 41a included in the inverter circuit 1Ua will be hereinafter referred to as an "output terminal 41Ua," the output terminal 41a included in the inverter circuit 1Va will be hereinafter referred to as an "output terminal 41Va," and the output terminal 41a included in the inverter circuit 1Wa will be hereinafter referred to as an "output terminal 41Wa" for the sake of convenience of description.

In each inverter circuit 1a, the first switching element Q1a, the second switching element Q2a, the third switching element Q3a, and the fourth switching element Q4a each have a control terminal, a first main terminal, and a second main terminal. The first switching element Q1a, the second switching element Q2a, the third switching element Q3a, and the fourth switching element Q4a of each inverter circuit 1a may be, for example, MOSFETs. Thus, in each inverter circuit 1a, the control terminal, the first main terminal, and the second main terminal of each of the first switching element Q1a, the second switching element Q2a, the third switching element Q3a, and the fourth switching element Q4a are a gate terminal, a drain terminal, and a source terminal, respectively. In each inverter circuit 1a, the MOSFETs serving as the first switching element Q1a, the second switching element Q2a, the third switching element Q3a, and the fourth switching element Q4a may be, for example, normally OFF n-channel MOSFETs. Note that the MOSFETs may be, for example, Si-based MOSFETs or SiC-based MOSFETs.

In each inverter circuit 1a, the control terminal of the first switching element Q1a is connected to a corresponding one of the plurality of first gate drivers 61a. Also, in each inverter circuit 1a, the control terminal of the second switching element Q2a is connected to a corresponding one of the plurality of second gate drivers 62a. Furthermore, in each inverter circuit 1a, the control terminal of the third switching element Q3a is connected to a corresponding one of the plurality of third gate drivers 63a. Furthermore, in each inverter circuit 1a, the control terminal of the fourth switching element Q4 is connected to a corresponding one of the plurality of fourth gate drivers 64a.

In each inverter circuit 1a, the first main terminal of the first switching element Q1a is connected to the positive electrode P1 of the DC power supply unit 3, and the second main terminal of the first switching element Q1a is connected to the first main terminal of the second switching element Q2a. Also, in each inverter circuit 1a, the second main terminal of the second switching element Q2a is connected to the negative electrode N1 of the DC power supply unit 3.

In each inverter circuit 1a, the first main terminal of the third switching element Q3a is connected to the intermediate potential node M1, the second main terminal of the third switching element Q3a is connected to the second main terminal of the fourth switching element Q4a, and the first main terminal of the fourth switching element Q4a is connected to the connection node 13a. Thus, the bidirectional switch included in the second circuit 12a (refer to FIG. 27) is a common source bidirectional switch in which the respective second main terminals (source terminals) of the third switching element Q3a and the fourth switching element Q4a are connected to each other. As used herein, the "intermediate potential node M1" refers to a node at which the potential is intermediate between the potential at the positive electrode P1 of the DC power supply unit 3 and the potential at the negative electrode N1 thereof. In the third embodiment, the intermediate potential node M1 is connected to the ground, and therefore, the potential at the intermediate potential node M1 is 0 V. In this case, supposing the voltage across the DC power supply unit 3 is Vdc, the potential at the positive electrode P1 is Vdc/2 and the potential at the negative electrode N1 is -Vdc/2.

In the inverter circuit 1Ua, the connection node 13a between the first switching element Q1a and the second switching element Q2a is connected to the output terminal 41Ua. In the inverter circuit 1Va, the connection node 13a between the first switching element Q1a and the second switching element Q2a is connected to the output terminal 41Va. In the inverter circuit 1Wa, the connection node 13a between the first switching element Q1a and the second switching element Q2a is connected to the output terminal 41Wa. To the connection node 13a of the inverter circuit 1Ua, connected, via the output terminal 41Ua, is the U-phase of the AC load RA1, for example. To the connection node 13a of the inverter circuit 1Va, connected, via the output terminal 41Va, is the V-phase of the AC load RA1, for example. To the connection node 13a of the inverter circuit 1Wa, connected, via the output terminal 41Wa, is the W-phase of the AC load RA1, for example.

In each inverter circuit 1a, the anode of the first diode D1a is connected to the second main terminal (source terminal) of the first switching element Q1a, and the cathode of the first diode D1a is connected to the first main terminal (drain terminal) of the first switching element Q1a. Also, in each inverter circuit 1a, the anode of the second diode D2a is connected to the second main terminal (source terminal) of the second switching element Q2a, and the cathode of the second diode D2a is connected to the first main terminal (drain terminal) of the second switching element Q2a. Furthermore, in each inverter circuit 1a, the anode of the third diode D3a is connected to the second main terminal (source terminal) of the third switching element Q3a, and the cathode of the third diode D3a is connected to the first main terminal (drain terminal) of the third switching element Q3a. Furthermore, in each inverter circuit 1a, the anode of the fourth diode D4a is connected to the second main terminal (source terminal) of the fourth switching element Q4a, and the cathode of the fourth diode D4a is connected to the first main terminal (drain terminal) of the fourth switching element Q4a.

In each inverter circuit 1a, the first diode D1a may be replaced with a parasitic diode of a MOSFET serving as the first switching element Q1a. Also, in each inverter circuit 1a, the second diode D2a may be replaced with a parasitic diode of a MOSFET serving as the second switching element Q2a. Furthermore, in each inverter circuit 1a, the third diode D3a may be replaced with a parasitic diode of a MOSFET serving as the third switching element Q3a. Furthermore, in each inverter circuit 1a, the fourth diode D4a may be replaced with a parasitic diode of a MOSFET serving as the fourth switching element Q4a.

The plurality of first gate drivers 61a are provided one to one for the plurality of first switching elements Q1a. Each of the plurality of first gate drivers 61a is connected to the control terminal of a corresponding one of the first switching elements Q1a. Each of the plurality of first gate drivers 61a drives a corresponding one of the first switching elements Q1a. The plurality of first gate drivers 61a are connected to the control unit 60a. The control unit 60a outputs a plurality of first control signals S1 (refer to FIG. 27) which are associated one to one with the plurality of first gate drivers 61a. Each of the plurality of first gate drivers 61a controls the ON/OFF states of the corresponding first switching element Q1a in accordance with the first control signal S1a supplied thereto.

The plurality of second gate drivers 62a are provided one to one for the plurality of second switching elements Q2a. Each of the plurality of second gate drivers 62a is connected to the control terminal of a corresponding one of the second switching elements Q2a. Each of the plurality of second gate drivers 62a drives a corresponding one of the second switching elements Q2a. The plurality of second gate drivers 62a are connected to the control unit 60a. The control unit 60a outputs a plurality of second control signals S2a (refer to FIG. 27) which are associated one to one with the plurality of second gate drivers 62a. Each of the plurality of second gate drivers 62a controls the ON/OFF states of the corresponding second switching element Q2a in accordance with the second control signal S2a supplied thereto.

The plurality of third gate drivers 63a are provided one to one for the plurality of third switching elements Q3a. Each of the plurality of third gate drivers 63a is connected to the control terminal of a corresponding one of the third switching elements Q3a. Each of the plurality of third gate drivers 63a drives a corresponding one of the third switching elements Q3a. The plurality of third gate drivers 63a are connected to the control unit 60a. The control unit 60a outputs a plurality of third control signals S3a (refer to FIG. 27) which are associated one to one with the plurality of third gate drivers 63a. Each of the plurality of third gate drivers 63a controls the ON/OFF states of the corresponding third switching element Q3a in accordance with the third control signal S3a supplied thereto.

The plurality of fourth gate drivers 64a are provided one to one for the plurality of fourth switching elements Q4a. Each of the plurality of fourth gate drivers 64a is connected to the control terminal of a corresponding one of the fourth switching elements Q4a. Each of the plurality of fourth gate drivers 64a drives a corresponding one of the fourth switching elements Q4a. The plurality of fourth gate drivers 64a are connected to the control unit 60a. The control unit 60a outputs a plurality of fourth control signals S4a (refer to FIG. 27) which are associated one to one with the plurality of fourth gate drivers 64a. Each of the plurality of fourth gate drivers 64a controls the ON/OFF states of the corresponding fourth switching element Q4a in accordance with the fourth control signal S4a supplied thereto.

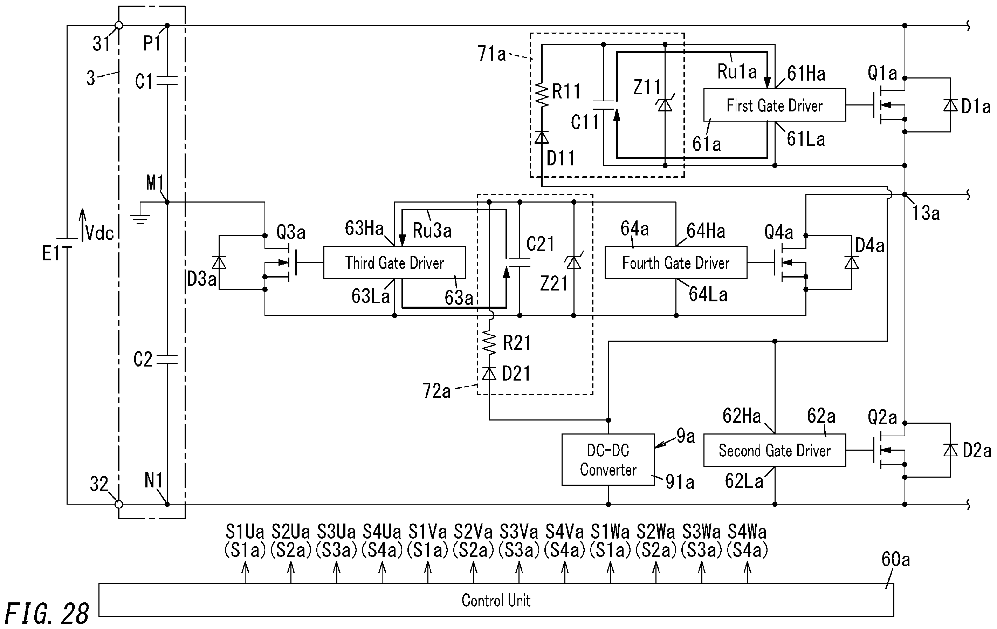

The plurality of first bootstrap circuits 71a are provided one to one for the plurality of first gate drivers 61a. Each of the plurality of first bootstrap circuits 71a supplies a voltage to a corresponding one of the first gate drivers 61a. Each of the plurality of first bootstrap circuits 71a includes a diode D11, a resistor R11, and a capacitor C11 (hereinafter referred to as a "boosting capacitor C11") as shown in FIGS. 26 and 28. In each of the first bootstrap circuits 71a, the anode of the diode D11 is connected to a positive-side terminal of the power supply unit 9a and the cathode of the diode D11 is connected to a first terminal of the capacitor C11 via the resistor R11. The first terminal of the capacitor C11 is connected to a higher-potential power supply terminal 61Ha (refer to FIG. 28) of the corresponding first gate driver 61a. A second terminal of the capacitor C11 is connected to a lower-potential power supply terminal 61La (refer to FIG. 28) of the corresponding first gate driver 61a. The first bootstrap circuit 71a supplies, to the corresponding first gate driver 61a, a voltage required for the first gate driver 61a to turn ON the first switching element Q1a. Each of the plurality of first bootstrap circuits 71 further includes a Zener diode Z11 connected to the capacitor C11 in parallel.

The plurality of second bootstrap circuits 72a are provided one to one for the plurality of third gate drivers 63a and the plurality of fourth gate drivers 64a. Each of the plurality of second bootstrap circuits 72a supplies a voltage to a corresponding one of the third gate drivers 63a and a corresponding one of the fourth gate drivers 64a. Each of the plurality of second bootstrap circuits 72a includes a diode D21, a resistor R21, and a capacitor C21 (hereinafter referred to as a "boosting capacitor C21"). In each of the second bootstrap circuits 72a, the anode of the diode D21 is connected to the positive-side terminal of the power supply unit 9a and the cathode of the diode D21 is connected to a first terminal of the capacitor C21 via the resistor R21. The first terminal of the capacitor C21 is connected to a higher-potential power supply terminal 63Ha (refer to FIG. 28) of the corresponding third gate driver 63a and a higher-potential power supply terminal 64Ha (refer to FIG. 28) of the corresponding fourth gate driver 64a. A second terminal of the capacitor C21 is connected to a lower-potential power supply terminal 63La (refer to FIG. 28) of the corresponding third gate driver 63a and a lower-potential power supply terminal 64La (refer to FIG. 28) of the corresponding fourth gate driver 64a. The second bootstrap circuit 72a supplies, to the corresponding third gate driver 63a, a voltage required for the third gate driver 63a to turn ON the third switching element Q3a and also supplies, to the corresponding fourth gate driver 64a, a voltage required for the fourth gate driver 64a to turn ON the fourth switching element Q4a. Each of the plurality of second bootstrap circuits 72a further includes a Zener diode Z21 connected to the capacitor C21 in parallel.

The power supply unit 9a supplies a voltage to the plurality of (three) first bootstrap circuits 71a, the plurality of (three) second bootstrap circuits 72a, and the plurality of (three) second gate drivers 62a. The power supply unit 9a may be, for example, a DC power supply including an insulating DC-DC converter 91a. The positive-side terminal of the power supply unit 9a is connected to the higher-potential power supply terminal 62Ha (refer to FIG. 28) of each of the plurality of second gate drivers 62a, and the negative-side terminal of the power supply unit 9a is connected to the lower-potential power supply terminal 62La (refer to FIG. 28) of each of the plurality of second gate drivers 62a.

The control unit 60a controls the plurality of first gate drivers 61a, the plurality of second gate drivers 62a, the plurality of third gate drivers 63a, and the plurality of fourth gate drivers 64a. This allows the control unit 60a to control the plurality of first switching elements Q1a, the plurality of second switching elements Q2a, the plurality of third switching elements Q3a, and the plurality of fourth switching elements Q4a. The agent that performs the functions of the control unit 60a includes a computer system. The computer system includes a single or a plurality of computers. The computer system may include a processor and a memory as principal hardware components thereof. The computer system serves as the agent that performs the functions of the control unit 60a according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The control unit 60a outputs a plurality of (three) first control signals S1a (refer to FIG. 27) for controlling the plurality of (three) first switching elements Q1a, a plurality of (three) second control signals S2a (refer to FIG. 27) for controlling the plurality of (three) second switching elements Q2a, a plurality of (three) third control signals S3a (refer to FIG. 27) for controlling the plurality of third switching elements Q3a, and a plurality of (three) fourth control signals S4a for controlling the plurality of (three) fourth switching elements Q4a. Note that in FIG. 27, only one of the three inverter circuits 1a is shown with illustration of the other two inverter circuits 1a omitted. Also, in FIG. 27, illustration of the plurality of first gate drivers 61a, the plurality of second gate drivers 62a, the plurality of third gate drivers 63a, the plurality of fourth gate drivers 64a, the plurality of first bootstrap circuits 71a, the plurality of second bootstrap circuits 72a, and the power supply unit 9a is omitted. Likewise, in FIG. 28, only one of the three inverter circuits 1a is shown with illustration of the other two inverter circuits 1a omitted. Also, in FIG. 28, illustration of the other two first gate drivers 61a, the other two second gate drivers 62a, the other two third gate drivers 63a, the other two fourth gate drivers 64a, the other two first bootstrap circuits 71a, and the other two second bootstrap circuits 72a is omitted.

The three first control signals S1a are a first control signal S1Ua for controlling the first switching element Q1a of the inverter circuit 1Ua, a first control signal S1Va for controlling the first switching element Q1a of the inverter circuit 1Va, and a first control signal S1Wa for controlling the first switching element Q1a of the inverter circuit 1Wa.

The three second control signals S2a are a second control signal S2Ua for controlling the second switching element Q2a of the inverter circuit 1Ua, a second control signal S2Va for controlling the second switching element Q2a of the inverter circuit 1Va, and a second control signal S2Wa for controlling the second switching element Q2a of the inverter circuit 1Wa.

The three third control signals S3a are a third control signal S3Ua for controlling the third switching element Q3a of the inverter circuit 1Ua, a third control signal S3Va for controlling the third switching element Q3a of the inverter circuit 1Va, and a third control signal S3Wa for controlling the third switching element Q3a of the inverter circuit 1Wa.

The three fourth control signals S4a are a fourth control signal S4Ua for controlling the fourth switching element Q4a of the inverter circuit 1Ua, a fourth control signal S4Va for controlling the fourth switching element Q4a of the inverter circuit 1Va, and a fourth control signal S4Wa for controlling the fourth switching element Q4a of the inverter circuit 1Wa.

Each of the plurality of first control signals S1a, the plurality of second control signals S2a, the plurality of third control signals S3a, and the plurality of fourth control signals S4a may be, for example, a signal having a potential level that alternates between a first potential level (hereinafter referred to as a "low level") and a second potential level (hereinafter referred to as a "high level") higher than the first potential level. The first potential level may be 0 V, for example, and the second potential level is a potential level higher than a gate threshold voltage of the MOSFET. That is to say, in each of the plurality of control signals (including the plurality of first control signals S1a, the plurality of second control signals S2a, the plurality of third control signals S3a, and the plurality of fourth control signals S4a), the first potential level is a potential level for turning OFF the switching element associated with the control signal, and the second potential level is a potential level for turning ON the switching element associated with the control signal.

Each of the plurality of first switching elements Q1a turns ON when its associated first control signal S1a has high level and turns OFF when its associated first control signal S1a has low level. Each of the plurality of second switching elements Q2a turns ON when its associated second control signal S2a has high level and turns OFF when its associated second control signal S2a has low level. Each of the plurality of third switching elements Q3a turns ON when its associated third control signal S3a has high level and turns OFF when its associated third control signal S3a has low level. Each of the plurality of fourth switching elements Q4a turns ON when its associated fourth control signal S4a has high level and turns OFF when its associated fourth control signal S4a has low level.

In the multi-level inverter 100a, each of the plurality of inverter circuits 1a is controlled toward one of a first switching state, a second switching state, or a third switching state. That is to say, in the multi-level inverter 100a, in each of the three inverter circuits 1Ua, 1Va, 1Wa, the switching state is controlled toward any one of the first, second, and third switching states. The first, second, and third switching states are different from each other in the combination of ON/OFF states of the first to fourth switching elements Q1a-Q4a. In each of the plurality of inverter circuits 1a, its output voltage in the first switching state, its output voltage in the second switching state, and its output voltage in the third switching state are different from each other. That is to say, in each of the plurality of inverter circuits 1a, the potential level of the output voltage changes in three levels according to the states of the first to fourth switching elements Q1a-Q4a. Note that as for the output voltages of the plurality of inverter circuits 1a, the output voltage of the U-phase inverter circuit 1Ua, the output voltage of the V-phase inverter circuit 1Va, and the output voltage of the W-phase inverter circuit 1Wa have mutually different phases.

The first switching state herein refers to a combination that causes both the first switching element Q1a and the third switching element Q3a to turn ON and causes both the second switching element Q2a and the fourth switching element Q4a to turn OFF. When controlled toward the first switching state, each of the plurality of inverter circuits 1a may deliver an output voltage having a potential level at the positive electrode P1 of the DC power supply unit 3. In each of the plurality of inverter circuits 1a in the first switching state, the potential at the connection node 13a is as high as the potential level (e.g., Vdc/2) at the positive electrode P1 of the DC power supply unit 3.

The second switching state herein refers to a combination that causes both the first switching element Q1a and the second switching element Q2a to turn OFF and causes both the third switching element Q3a and the fourth switching element Q4a to turn ON. When controlled toward the second switching state, each of the plurality of inverter circuits 1a may deliver an output voltage having a potential level at the intermediate potential node M1 of the DC power supply unit 3. In each of the plurality of inverter circuits 1a in the second switching state, the potential at the connection node 13a is as high as the potential level (e.g., 0) at the intermediate potential node M1.

The third switching state herein refers to a combination that causes both the first switching element Q1a and the third switching element Q3a to turn OFF and causes both the second switching element Q2a and the fourth switching element Q4a to turn ON. When controlled toward the third switching state, each of the plurality of inverter circuits 1a may deliver an output voltage having a potential level at the negative electrode N1 of the DC power supply unit 3. In each of the plurality of inverter circuits 1a in the third switching state, the potential at the connection node 13a is as high as the potential level (e.g., -Vdc/2) at the negative electrode N1 of the DC power supply unit 3.

When the inverter circuit 1a is in the first switching state, a current flows along a path that passes through the positive electrode P1 of the DC power supply unit 3, the first switching element Q1a, the connection node 13a, and the output terminal 41a (refer to FIG. 26) in this order as shown in FIG. 27 to make the voltage value of the output voltage for the AC load RA1 (refer to FIG. 26) equal to Vdc/2.

In addition, when the inverter circuit 1a is in the first switching state, the capacitor C11 of the first bootstrap circuit 71a is not charged with electricity by the power supply unit 9 but a voltage required for the first gate driver 61a to turn ON the first switching element Q1a is supplied from the capacitor C11 of the first bootstrap circuit 71a to the first gate driver 61a. Thus, electricity is discharged from the capacitor C11 of the first bootstrap circuit 71a through a discharging path Ru1a that passes through the capacitor C11, the higher-potential power supply terminal 61Ha of the first gate driver 61a, the lower-potential power supply terminal 61La of the first gate driver 61a, and the capacitor C11 in this order as shown in FIG. 28. As a result, in the first bootstrap circuit 71a, the voltage across the capacitor C11 falls with the passage of time.

Furthermore, when the inverter circuit 1a is in the first switching state, the capacitor C21 of the second bootstrap circuit 72a is not charged with electricity by the power supply unit 9 but a voltage required for the third gate driver 63a to turn ON the third switching element Q3a is supplied from the capacitor C21 of the second bootstrap circuit 72a to the third gate driver 63a. Thus, electricity is discharged from the capacitor C21 of the second bootstrap circuit 72a through a discharging path Ru3a that passes through the capacitor C21, the higher-potential power supply terminal 63Ha of the third gate driver 63a, the lower-potential power supply terminal 63La of the third gate driver 63a, and the capacitor C21 in this order as shown in FIG. 28. As a result, in the second bootstrap circuit 72a, the voltage across the capacitor C21 falls with the passage of time.

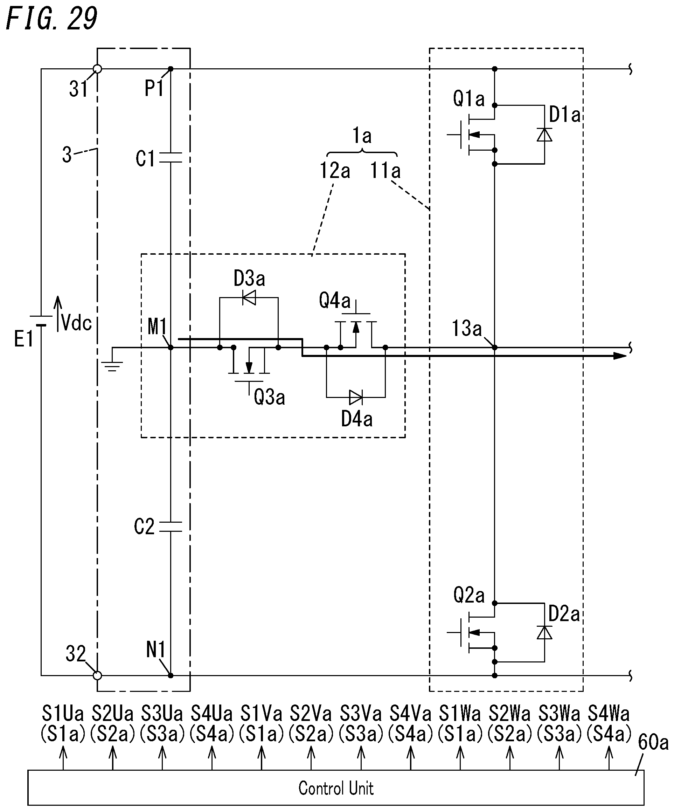

On the other hand, while the inverter circuit 1a is in the second switching state (i.e., if the state of the inverter circuit 1a has changed from the first switching state to the second switching state), a current flows along the path (refer to FIG. 26) that passes through, for example, the intermediate potential node M1 of the DC power supply unit 3, the third switching element Q3a, the fourth switching element Q4a, the connection node 13a, and the output terminal 41a to make the voltage value of the output voltage for the AC load RA1 zero as shown in FIG. 29, for example. More specifically, when the inverter circuits 1Ua, 1Va, 1Wa are in the second switching state, the third switching state, and the third switching state, respectively, the current flows along the path that passes through the intermediate potential node M1 of the DC power supply unit 3, the third switching element Q3a of the inverter circuit 1Ua, the fourth switching element Q4a of the inverter circuit 1Ua, the connection node 13a, and the output terminal 41Ua in this order.

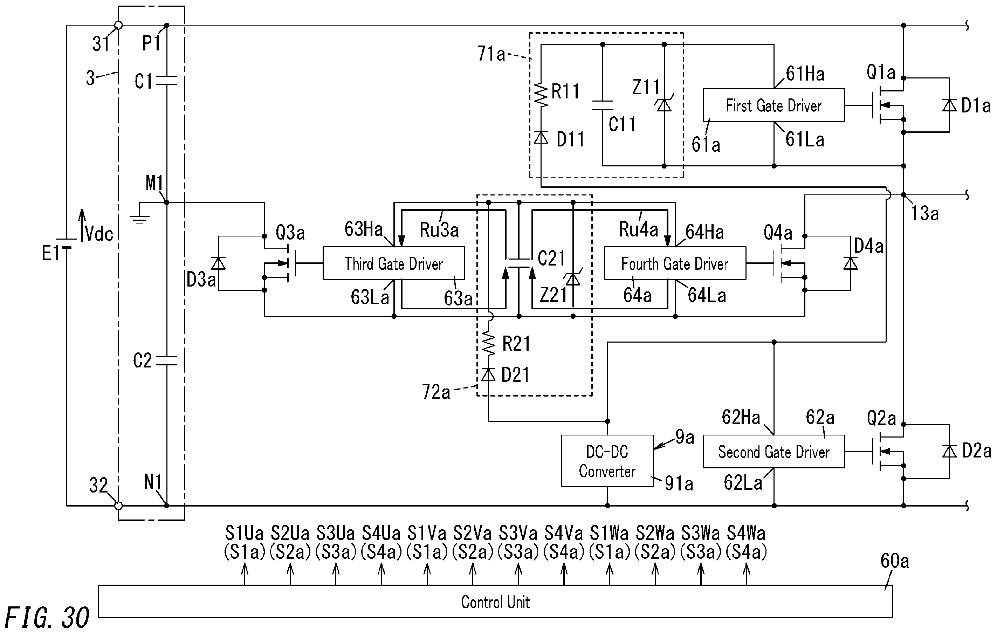

Alternatively, while the inverter circuit 1a is in the second switching state, a voltage required for the third gate driver 63a to turn ON the third switching element Q3a is supplied from the capacitor C21 of the second bootstrap circuit 72a to the third gate driver 63a. Thus, electricity is discharged from the capacitor C21 of the second bootstrap circuit 72a through a discharging path Ru3a that passes through the capacitor C21, the higher-potential power supply terminal 63Ha of the third gate driver 63a, the lower-potential power supply terminal 63La of the third gate driver 63a, and the capacitor C21 in this order as shown in FIG. 30. In addition, when the inverter circuit 1a is in the second switching state, a voltage required for the fourth gate driver 64a to turn ON the fourth switching element Q4a is supplied from the capacitor C21 of the second bootstrap circuit 72a to the fourth gate driver 64a. Thus, electricity is discharged from the capacitor C21 of the second bootstrap circuit 72a through a discharging path Ru4a that passes through the capacitor C21, the higher-potential power supply terminal 64Ha of the fourth gate driver 64a, the lower-potential power supply terminal 64La of the fourth gate driver 64a, and the capacitor C21 in this order.

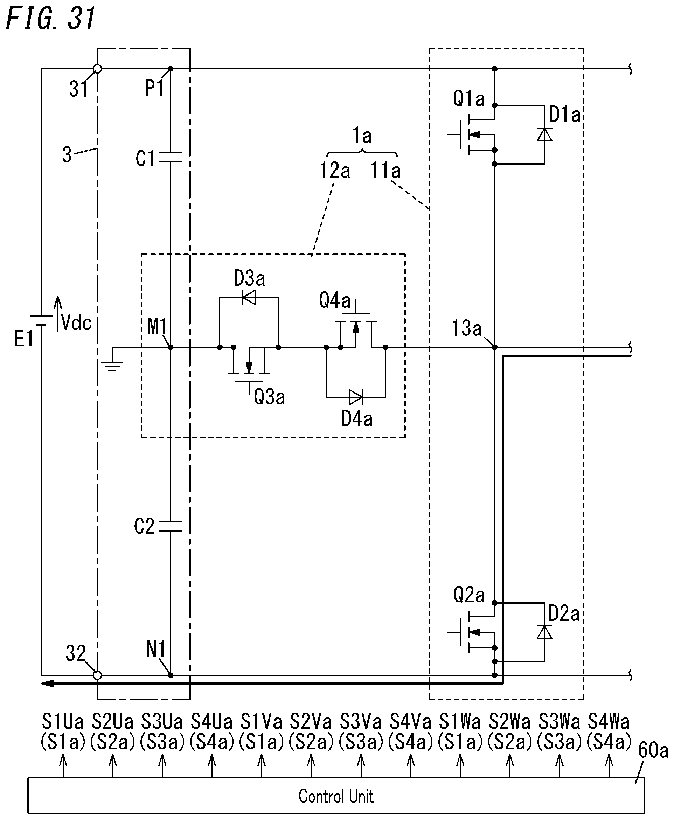

Meanwhile, while the inverter circuit 1a is in the third switching state, a current flows along the path that passes through the output terminal 41a, the connection node 13a, the second switching element Q2a, and the negative electrode N1 of the DC power supply unit 3 in this order as shown in FIG. 31 to make the voltage value of the output voltage for the AC load RA1 -Vdc/2. Also, while the inverter circuit 1a is in the third switching state, the capacitor C11 of the first bootstrap circuit 71a is charged with electricity by the power supply unit 9a, and therefore, the voltage at the capacitor C11 rises with the passage of time to eventually make the capacitor C11 fully charged. The charging path Ru91 for charging the capacitor C11 with electricity by the power supply unit 9a is a path that passes through the positive-side terminal of the power supply unit 9a, the diode D11, the resistor R11, the capacitor C11, the connection node 13a, the second switching element Q2a, and the negative-side terminal of the power supply unit 9a in this order.

Furthermore, while the inverter circuit 1a is in the third switching state, the capacitor C21 of the second bootstrap circuit 72a is charged with electricity by the power supply unit 9. The charging path Ru92 for charging the capacitor C21 with electricity by the power supply unit 9a is a path that passes through the positive-side terminal of the power supply unit 9a, the diode D21, the resistor R21, the capacitor C21, the fourth switching element Q4a, the connection node 13a, the second switching element Q2a, and the negative-side terminal of the power supply unit 9a in this order.

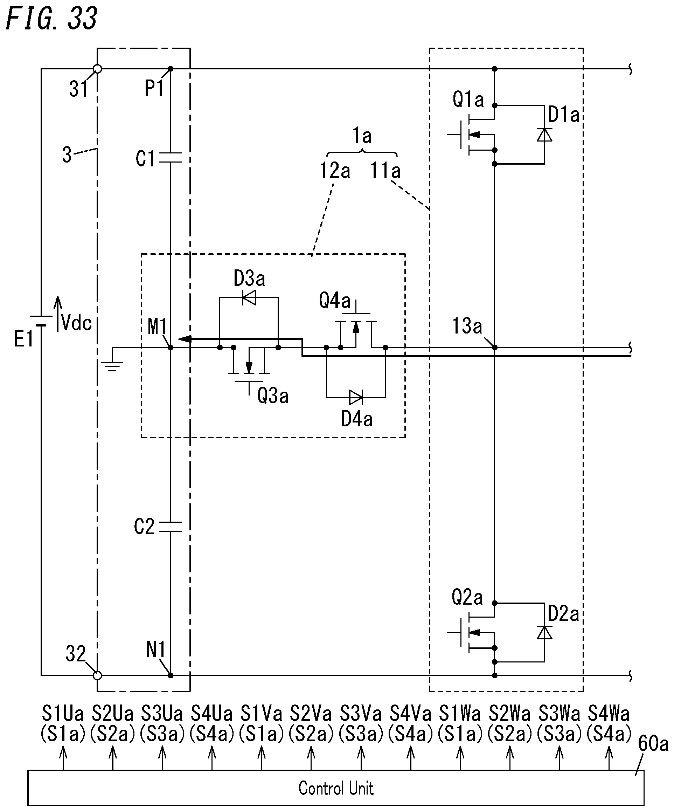

Furthermore, while the inverter circuit 1a is in the second switching state (i.e., if the switching state has changed from the third switching state to the second switching state), a current flows along the path that passes through, for example, the output terminal 41a (refer to FIG. 26), the connection node 13a, the fourth switching element Q4a, the third switching element Q3a, and the intermediate potential node M1 as shown in FIG. 33 to make the voltage value of the output voltage for the AC load RA1 equal to zero. More specifically, when the inverter circuits 1Ua, 1Va, 1Wa are in the second switching state, the second switching state, and the first switching state, respectively, the current flows along the path that passes through the output terminal 41a of the inverter circuit 1Ua, the connection node 13a, the fourth switching element Q4a, the third switching element Q3a, and the intermediate potential node M1 in this order to make the voltage value of the output voltage for the AC load RA1 equal to zero.

In this case, while the inverter circuit 1a is in the second switching state, electricity is discharged through the discharging paths Ru3a, Ru4a shown in FIG. 30 as described above.

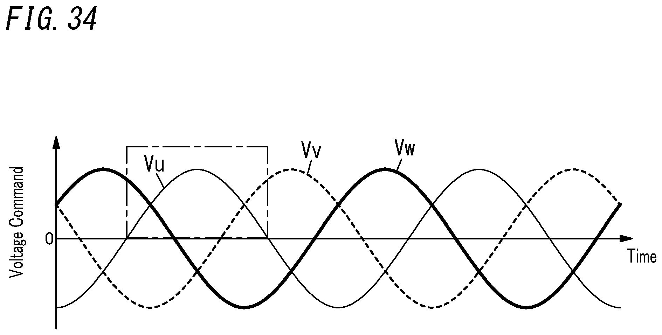

The controller 60a generates, in accordance with voltage commands Vu, Vv, Vw (refer to FIG. 34) about the respective output voltages of the inverter circuits 1Ua, 1Va, 1Wa, for example, first to fourth control signals S1a-S4a (S1Ua-S4Ua) for the first to fourth switching elements Q1a-Q4a, respectively, of the inverter circuit 1Ua, first to fourth control signals S1a-S4a (S1VaS4Va) for the first to fourth switching elements Q1a-Q4a, respectively, of the inverter circuit 1Va, and first to fourth control signals S1a-S4a(S1Wa-S4Wa) for the first to fourth switching elements Q1a-Q4a, respectively, of the inverter circuit 1Wa.

As shown in FIG. 34, voltage commands Vu, Vv, Vw are sinusoidal wave signals, of which the phases are different from each other by 120 degrees and have values (voltage command values) that change with time. Note that the voltage commands Vu, Vv, Vw each have one cycle of the same length. Optionally, the control unit 60a may perform proportional-integral (PI) control on the voltage commands Vu, Vv, Vw in accordance with the information provided by a detection unit 8 for detecting the state of the AC load RA1. For example, if the AC load RA1 is a three-phase motor, the information provided by the detection unit 8 includes, for example, information about detection results obtained by a plurality of current sensors for detecting output currents flowing through the U-, V- and W-phases of the AC load RA1 and/or information about the detection results obtained by an encoder for detecting the number of revolutions, the rotational angle, and other parameters of the three-phase motor.

Next, it will be described how one of the three inverter circuits 1a (e.g., the U-phase inverter circuit 1Ua) operates. The V-phase inverter circuit 1Va and the W-phase inverter circuit 1Wa operate in the same way as the U-phase inverter circuit 1Ua. The respective output voltages of the U-phase inverter circuit 1Ua, the V-phase inverter circuit 1Va, and the W-phase inverter circuit 1Wa have mutually different phases.

The control unit 60a controls the plurality of first gate drivers 61a, the plurality of second gate drivers 62a, the plurality of third gate drivers 63a, and the plurality of fourth gate drivers 64a by performing voltage vector control.

Next, it will be described in further detail how the control unit 60a performs the voltage vector control.

The control unit 60a stores, in advance, a group of voltage vectors. Each of the group of voltage vectors is defined by a combination of respective potential levels at connection nodes 13a, at each of which the first switching element Q1a and the second switching element Q2a are connected to each other in a corresponding one of the plurality of inverter circuits 1a. In other words, each of the group of voltage vectors is defined by the switching state of the inverter circuit 1Ua corresponding to the U-phase, the switching state of the inverter circuit 1Va corresponding to the V-phase, and the switching state of the inverter circuit 1Wa corresponding to the W-phase. The number of voltage vectors included in one group of voltage vectors is $3^3$ (= 27).

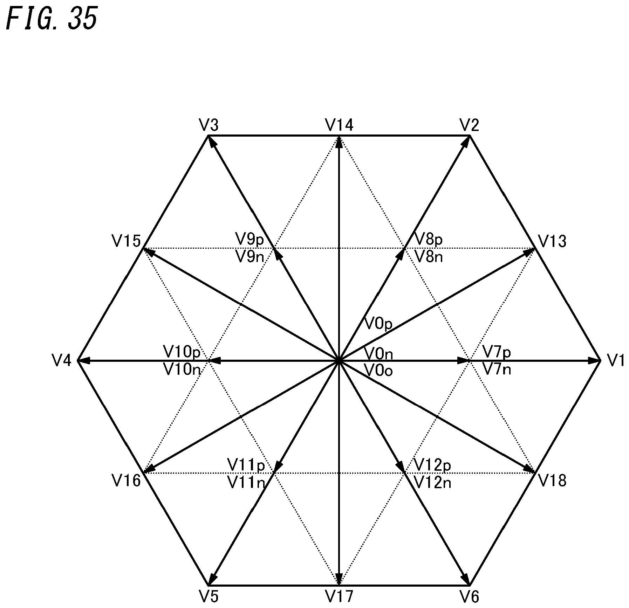

As shown in FIG. 35, one group of voltage vectors includes three zero vectors V0p, V0n, V0o, each of which has a magnitude of zero. In addition, one group of voltage vectors further includes six voltage vectors V1, V2, V3, V4, V5, V6, of which the magnitude is $(2/3)^{/2} \bullet 2Vdc$ and which have mutually different directions. Furthermore, one group of voltage vectors further includes twelve voltage vectors V7p, V7n, V8p, V8n, V9p, V9n, V10p, V10n, V11p, V11n, V12p, V12n, each of which has a magnitude of $(2/3)^{1/2}$ ∎ Vdc. Besides, one group of voltage vectors further includes six voltage vectors V13, V14, V15, V16, V17, V18, each of which has a magnitude of $(2/3)^{1/2}$ ∎ $3^{1/2}$ ∎ Vdc and which have mutually different directions. In FIG. 35, the angle formed between each pair of adjacent voltage vectors belonging to the six voltage vectors V1, V2, V3, V4, V5, V6 is 60 degrees. Likewise, the angle formed between each pair of adjacent voltage vectors belonging to the six voltage vectors V13, V14, V15, V16, V17, V18 is also 60 degrees. Note that FIG. 35 is a vector diagram in which the one group of voltage vectors are illustrated on an orthogonal d-q coordinate system.

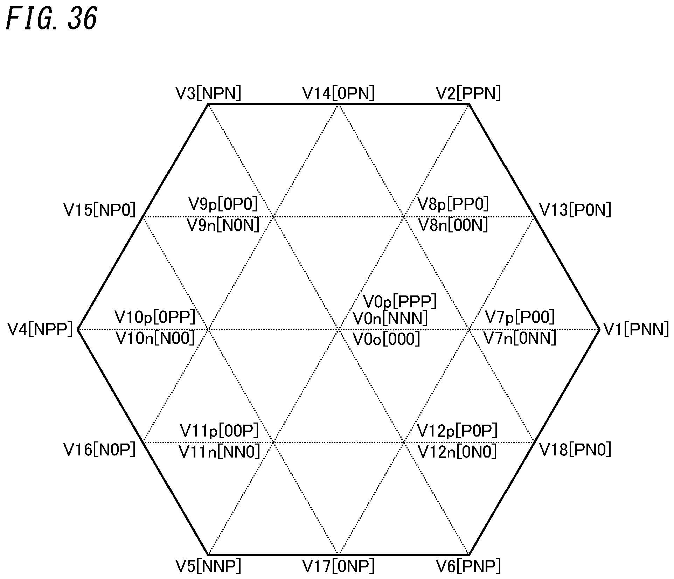

The one group of voltage vectors may be expressed as shown in FIG. 36 if their first, second, and third switching states are designated by the reference signs "P," "0," and "N," respectively, and the respective switching states of the three phases are arranged in the order of U-, V, and W-phases.

As shown in FIG. 36, the three zero vectors V0p, V0n, V0o may be expressed as V0p [PPP], V0n [NNN], V0o [000], respectively. For example, V0p [PPP] indicates that regarding the zero vector V0p, the switching state of the U-phase inverter circuit 1Ua is "P," the switching state of the V-phase inverter circuit 1Va is "P," and the switching state of the W-phase inverter circuit 1Wa is "P." A voltage vector with the suffix "p" such as V10p includes "P" but does not include "N." The same statement will apply to the rest of the description. A voltage vector with the suffix "n" such as V10n includes "N" but does not include "P." The same statement will apply to the rest of the description. A voltage vector with the suffix "o" such as V10o includes "0" but includes neither "P" nor "N." If the switching state of the inverter circuit 1a is "P," then the potential at the connection node 13a of the inverter circuit 1a will be the potential at the positive electrode P1 of the DC power supply unit 3. If the switching state of the inverter circuit 1a is "N," then the potential at the connection node 13a of the inverter circuit 1a will be the potential at the negative electrode N1 of the DC power supply unit 3. If the switching state of the inverter circuit 1a is "0," then the potential at the connection node 13a of the inverter circuit 1a will be the potential at the intermediate potential node M1 of the DC power supply unit 3.

The six voltage vectors V1, V2, V3, V4, V5, V6 may be expressed as V1 [PNN], V2 [PPN], V3 [NPN], V4 [NPP], V5 [NNP], and V6 [PNP], respectively. A voltage vector with none of the suffixes "p," "n," and "o" added to the numeral following "V" such as V1 [PNN], V2 [PPN], V3 [NPN], V4 [NPP], V5 [NNP], and V6 [PNP] includes "P" and "N" as two out of the three-phase switching states.

The twelve voltage vectors V7p, V7n, V8p, V8n, V9p, V9n, V10p, V10n, V11p, V11n, V12p, and V12n may be expressed as V7p [P00], V7n [0NN], V8p [PP0], V8n [00N], V9p [0P0], V9n [N0N], V10p [0PP], V10n [N00], V11p [00P], V11n [NN0], V12p [P0P], and V12n [0N0], respectively.

The six voltage vectors V13, V14, V15, V16, V17, and V18 may be expressed as V13 [P0N], V14 [0PN], V15 [NP0], V16 [N0P], V17 [0NP], and V18 [PN0], respectively.

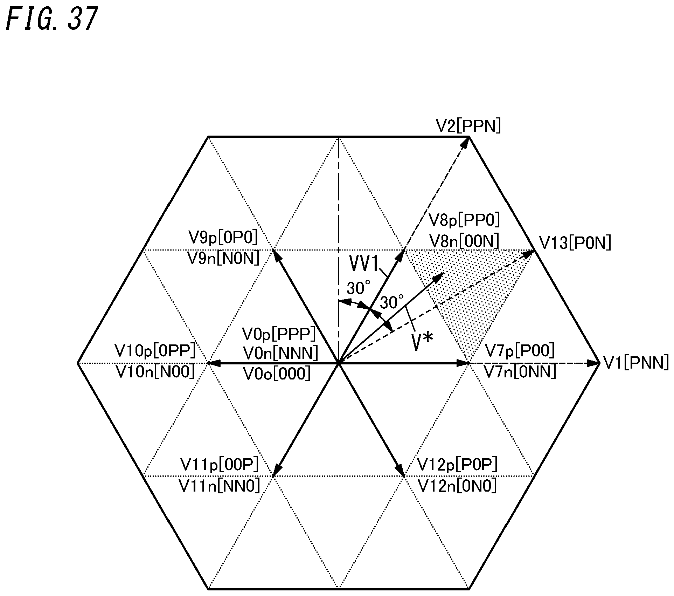

The control unit 60a transforms the instantaneous value of the command voltage with respect to the output voltage of each of the plurality of inverter circuits 1a into a command voltage vector V* (refer to FIG. 37). If the d-axis component of the command voltage vector V* on the orthogonal d-q coordinate system is Vd and the q-axis component of the command voltage vector V* on the orthogonal d-q coordinate system is Vq, then the command voltage vector V* may be given by the following Equation (4):

$$V^* = \begin{bmatrix} Vd \\ Vq \end{bmatrix} = \sqrt{\frac{2}{3}} \cdot \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} Vu \\ Vv \\ Vw \end{bmatrix} \tag{4}$$

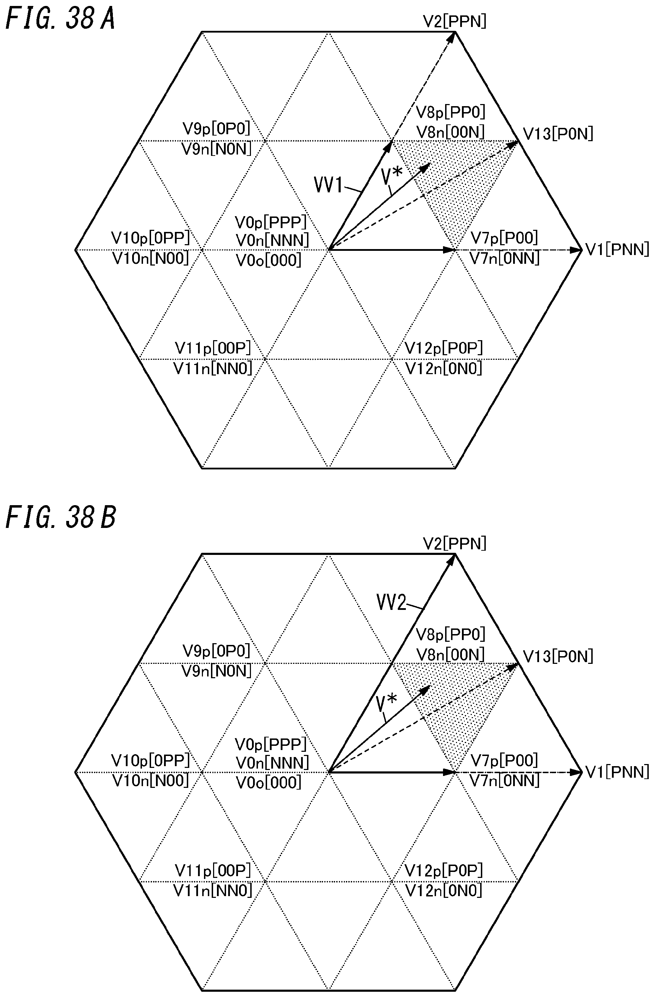

The control unit 60a selects a plurality of (e.g., five) voltage vectors adjacent to the command voltage vector V* belonging to the group of voltage vectors. In the example shown in FIG. 38A, the plurality of voltage vectors are V8p [PP0], V8n [00N], V13 [P0N], V7p [P00], and V7n [0NN].

The control unit 60a replaces one first voltage vector VV1 out of two first voltage vectors VV1 (e.g., V8p [PP0] and V8n [00N] in the example shown in FIGS. 37 and 38A) which belong to the plurality of voltage vectors, each have a reference magnitude, and are located closest to the command voltage vector V* with a zero vector V0n [NNN] defined by a combination of potential levels at the respective connection nodes 13a of the plurality of inverter circuits 1a which are as high as a potential at the negative electrode and at least one second voltage vector VV2 (e.g., V2 [PPN] in the example shown in FIG. 38A) having the same direction as, and a different magnitude from, the first voltage vector VV1. The reference magnitude may be, for example, $(2/3)^{1/2}$ ∎ Vdc. Thus, the plurality of voltage vectors includes, as voltage vectors of which the magnitude is the reference magnitude (i.e., reference vectors), twelve voltage vectors V7p [P00], V7n [0NN], V8p [PP0], V8n [00N], V9p [0P0], V9n [N0N], V10p [0PP], V10n [N00], V11p [00P], V11n [NN0], V12p [P0P], and

V12n [0N0]. The angle formed between the two first voltage vectors VV1 located closest to the command voltage vector V* and the command voltage vector V* is smaller than 30 degrees.

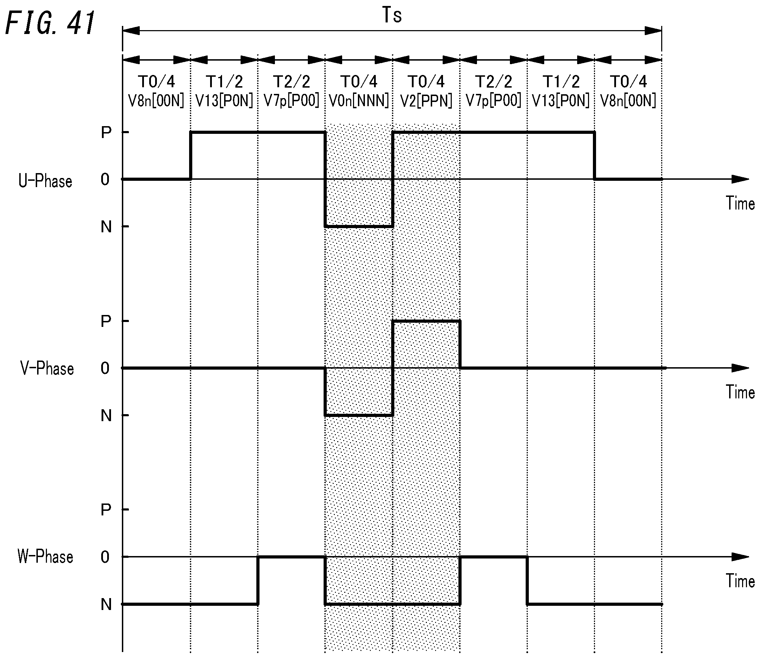

The control unit 60a controls the plurality of first gate drivers 61a, the plurality of second gate drivers 62a, the plurality of third gate drivers 63a, and the plurality of fourth gate drivers 64a within a predetermined control cycle Ts (refer to FIG. 41) to make a synthetic vector of three voltage vectors (e.g., V13 [PON], V7p [P00], and V7n [0NN] in the example shown in FIG. 38B), other than the first voltage vectors VV1 (e.g., V8p [PP0] and V8n [00N] in the example shown in FIG. 38A) out of the plurality of voltage vectors, the zero vector V0n [NNN], and at least one second voltage vector VV2 equal to the command voltage vector V*. The predetermined control cycle Ts may be, for example, two cycles of a carrier signal.

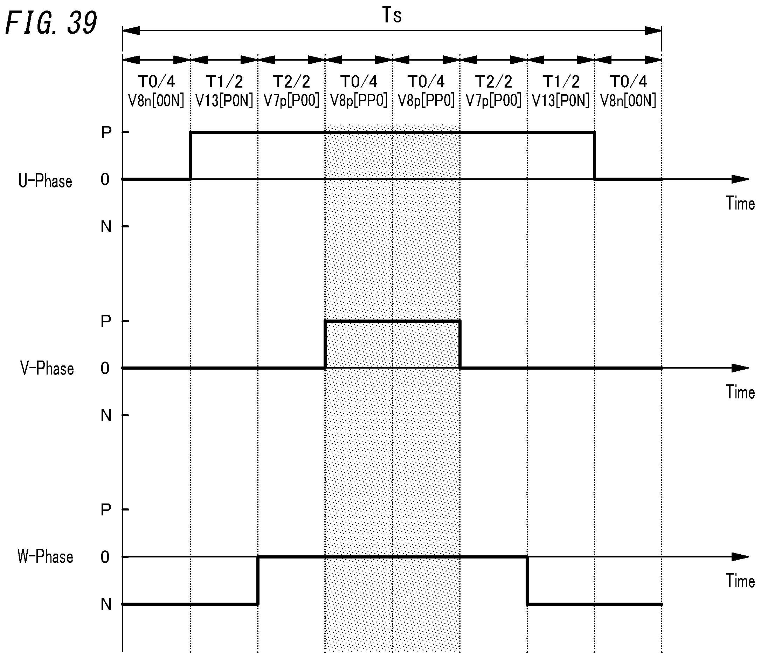

Meanwhile, in a comparative example in which a control operation is performed with the first voltage vectors not replaced with a zero vector and the second voltage vector, a synthetic vector of three vectors at the three vertices of an equilateral triangle surrounding the command voltage vector V* is made equal to the command voltage vector V* within the control cycle Ts. Specifically, in the comparative example, a synthetic vector of one of the two first voltage vectors VV1 (e.g., V8p [PP0] and V8n [00N] in the example shown in FIG. 38A), the voltage vector V13 [P0N], and the voltage vectors V7p [P00] and V7n [0NN] is made equal to the command voltage vector V*. In the comparative example, the control cycle Ts is one cycle of a carrier signal. In the comparative example, in two voltage vectors arranged in line along the time series, the switching state of only one phase out of the U-, V-, and W-phases changes either between "P" and "0" or between "0" and "N" and the same voltage vector is output twice apiece within the control cycle Ts as shown in FIG.39, for example. Specifically, in the example shown in FIG. 39, voltage vectors are output in the order of the voltage vector V8n [00N], the voltage vector V13 [P0N], the voltage vector V7p [P00], the voltage vector V8p [PP0], the voltage vector V8p [PP0], the voltage vector V7p [P00], the voltage vector V13 [P0N], and the voltage vector V8n [00N]. In the example shown in FIG. 39, the time assigned out of the control cycle Ts to the voltage vectors V8p and V8n is T0, the time assigned to the voltage vector V13 is T1, and the time assigned to the voltage vectors V7p and V7n is T2. As for T0, T1, and T2, supposing the voltage vectors at the three vertices of an equilateral triangle surrounding the command voltage vector V* are Va, Vb, and Vc, respectively, the magnitude of the command voltage vector V* is V, and the angle is $\theta$, the control unit 60a determines T0, T1, and T2 to satisfy the following Equations (5) and (6). In Equation (5), "j" represents an imaginary unit. Note that in the example shown in FIG. 39, the voltage vector Va may be, for example, the voltage vectors V8p [PP0] and V8n [00N], the voltage vector Vb may be the voltage vector V13 [P0N], and the voltage vectors Vc may be V7p [P00] and V7n [0NN].

$$Va \cdot T0 + Vb \cdot T1 + Vc \cdot T2 = V \cdot Ts \cdot \cos\theta + j\,V \cdot Ts \cdot \sin\theta \tag{5}$$

$$T0 + T1 + T2 = Ts \tag{6}$$

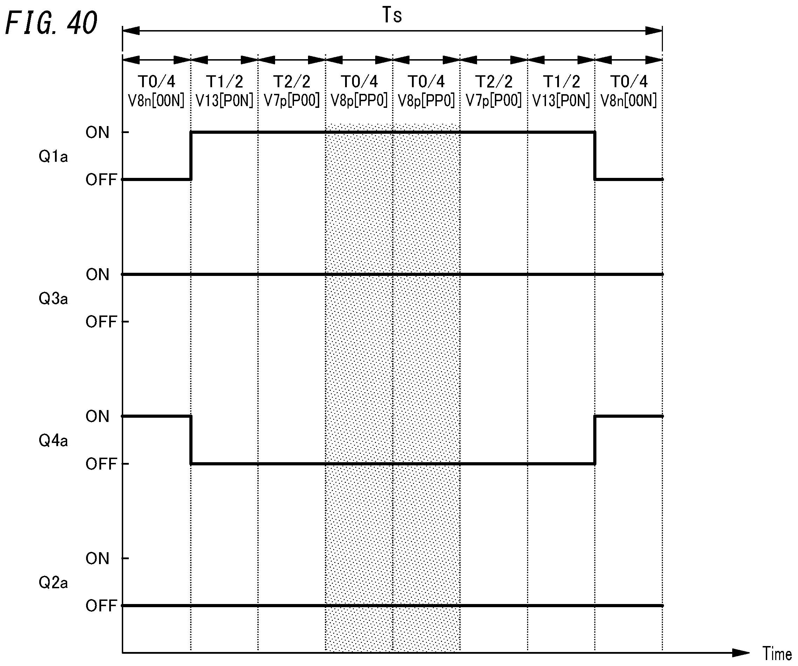

In the example shown in FIG. 39, the third switching element Q3a will remain ON, and the magnitude of voltage drop in the second bootstrap circuits 72a will increase, all through the control cycle Ts as shown in FIG. 40.

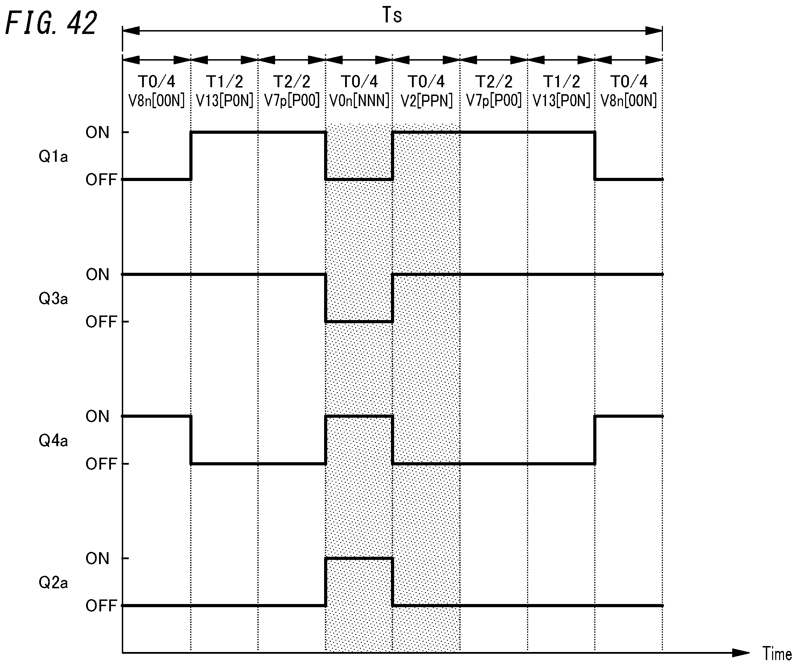

In contrast, the control unit 60a of the multi-level inverter 100a according to the third embodiment outputs the voltage vectors in the order of the voltage vector V8n [00N], the voltage vector V13 [P0N], the voltage vector V7p [P00], the voltage vector V8p [PP0], the voltage vector V8p [PP0], the voltage vector V7p [P00], the voltage vector V13 [P0N], and the voltage vector V8n [00N] within two cycles of the carrier signal as shown in FIG. 41, for example. The control unit 60a replaces the voltage vectors V8p [PP0], V8p [PP0] according to the comparative example with the zero vector V0n [NNN] and the second voltage vector VV2 (V2 [PPN]), respectively, thus generating a period in which the U-phase switching state is "N" as shown in FIG. 41. This allows the multi-level inverter 100a according to the third embodiment to generate the third switching state in which the first switching element Q1a and the third switching element Q3a are both OFF and the second switching element Q2a and the fourth switching element Q4a are both ON as shown in FIG. 42. Thus, the multi-level inverter 100a according to the third embodiment may reduce the chances of causing a voltage drop in the capacitors C11 of the first bootstrap circuits 71a and the capacitors C21 of the second bootstrap circuits 72a.

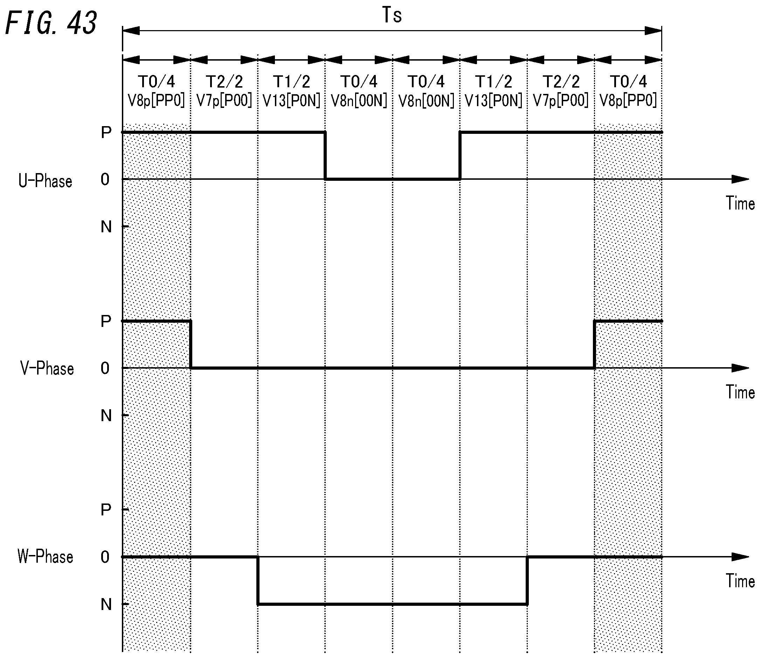

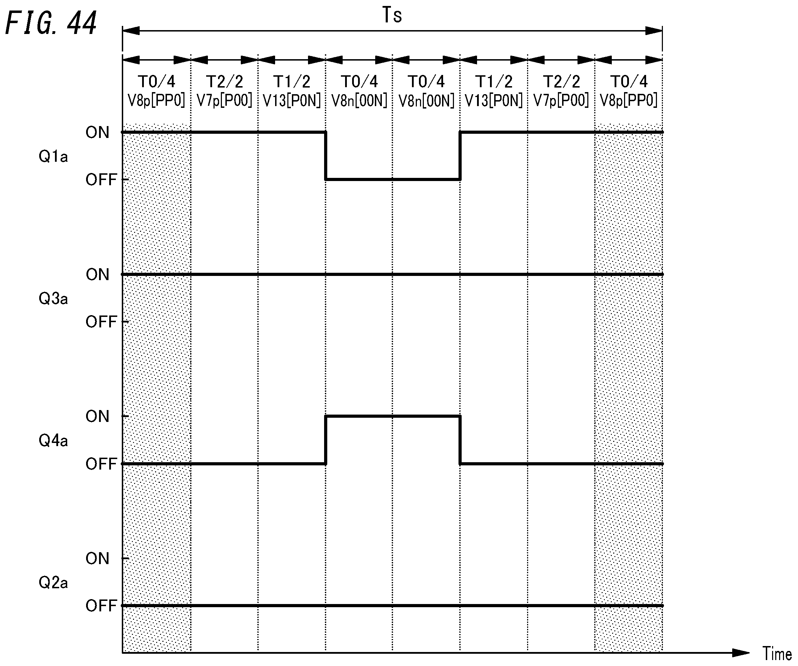

In addition, in the comparative example, even if the command voltage vector V* is the same as the one shown in FIG. 38A, the arrangement order of the voltage vectors within the control cycle Ts may be different according to the initial value of the carrier signal at the beginning of the control cycle Ts. Specifically, in the example shown in FIG. 43, the voltage vectors are output in the order of the voltage vector V8p [PP0], the voltage vector V7p [P00], the voltage vector V13 [P0N], the voltage vector V8n [00N], the voltage vector V8n [00N], the voltage vector V13 [P0N], the voltage vector V7p [P00], and the voltage vector V8p [PP0]. Also, in the example shown in FIG. 43, the time assigned to the voltage vectors V8p and V8n is T0, the time assigned to the voltage vector V13 is T1, and the time assigned to the voltage vectors V7p and V7n is T2 as in the example shown in FIG. 39. In that case, the third switching state will not be generated, and the magnitude of voltage drops in the capacitors C11 of the first bootstrap circuits 71a and the second bootstrap circuits 72a will increase, all through the control cycle Ts as shown in FIG. 44.

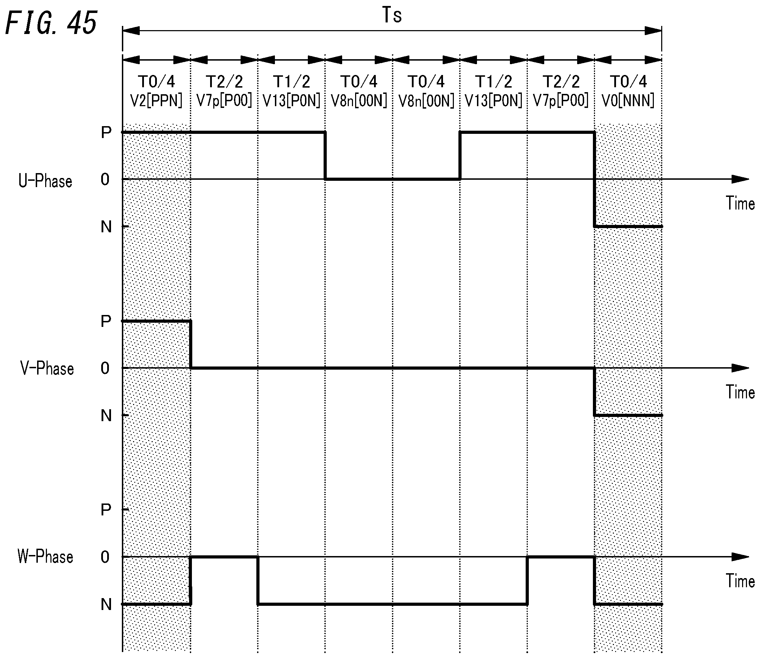

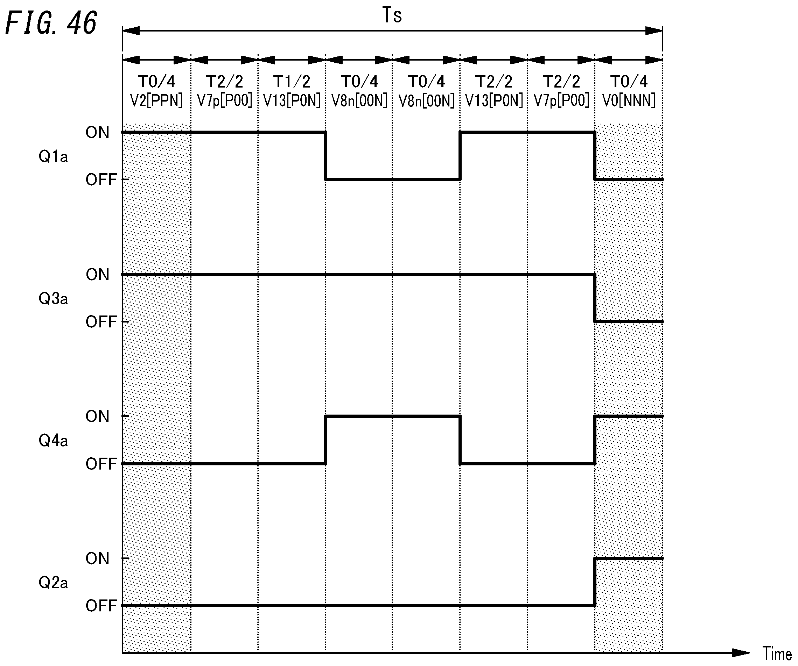

In contrast, the control unit 60a of the multi-level inverter 100a according to the third embodiment outputs the voltage vectors and the zero vector in the order of the voltage vector V2 [PPN], the voltage vector V7p [P00], the voltage vector V13 [PON], the voltage vector V8n [00N], the voltage vector V8n [00N], the voltage vector V13 [PON], the voltage vector V7p [P00], and the zero vector V0n [NNN] within two cycles of the carrier signal as shown in FIG. 45, for example. The control unit 60a replaces the voltage vectors V8p [PPO], V8p [PP0] in the example shown in FIG. 43 with the voltage vectors V2 [PPN] and V0n [NNN], respectively, thus generating a period in which the U-phase switching state is "N" as shown in FIG. 45. This allows the multi-level inverter 100a according to the third embodiment to generate the third switching state within the control cycle Ts as shown in FIG. 46. Thus, the multi-level inverter 100a according to the third embodiment may reduce the chances of causing a voltage drop in the capacitors C11 of the first bootstrap circuits 71a and the capacitors C21 of the second bootstrap circuits 72a.

Meanwhile, in the multi-level inverter 100a according to the third embodiment, the control unit 60a replaces, when the polarity of a command voltage corresponding to the command voltage vector V* is positive, one of the two first voltage vectors VV1 with the zero vector V0n [NNN] and the second voltage vector VV2. In the multi-level inverter 100a according to the third embodiment, the control unit 60a does not replace, when the polarity of a command voltage corresponding to the command voltage vector V* is negative, the first voltage vector VV1 with the zero vector V0n [NNN] and the second voltage vector VV2.

Furthermore, in the multi-level inverter 100a, the control unit 60a controls the plurality of first gate drivers 61a, the plurality of second gate drivers 62a, the plurality of third gate drivers 63a, and the plurality of fourth gate drivers 64a to prevent the respective output voltages of the plurality of first bootstrap circuits 71a and the plurality of second bootstrap circuits 72a from decreasing to a predetermined value or less.

(3) Recapitulation

In the multi-level inverter 100a according to the third embodiment, the control unit 60a selects a plurality of (five) voltage vectors (e.g., V8p [PPO], V8n [00N], V13 [PON], V7p [P00], V7n [0NN]) located adjacent to a command voltage vector V* which belong to a group of (27) voltage vectors. Each of the group of voltage vectors is defined by a combination of potential levels at connection nodes 13a of the plurality of inverter circuits 1a. The control unit 60a replaces one first voltage vector VV1 out of two first voltage vectors VV1 with a zero vector V0n [NNN] and a second voltage vector VV2. The two first voltage vectors VV1 belong to the plurality of voltage vectors, each have a reference magnitude, and are located closest to the command voltage vector V*. The zero vector V0n [NNN] is defined by a combination of potential levels at the connection nodes 13a of the plurality of inverter circuits 1a which are as high as a potential at the negative electrode N1. The second voltage vector VV2 has the same direction as, and twice as large a magnitude as, the first voltage vector VV1. The control unit 60a controls the plurality of first gate drivers 61a, the plurality of second gate drivers 62a, the plurality of third gate drivers 63a, and the plurality of fourth gate drivers 64a within a predetermined control cycle Ts to make a synthetic vector of a voltage vector included in the plurality of voltage vectors but the first voltage vectors VV1, the other first voltage vector VV1 out of the two first voltage vectors VV1, the zero vector V0n [NNN], and the second voltage vector VV2 equal to the command voltage vector V*.

The multi-level inverter 100a according to the third embodiment may reduce the chances of causing a voltage drop in a bootstrap circuit. More specifically, the multi-level inverter 100a according to the third embodiment may reduce the chances of causing a voltage drop in the capacitors C11 of the plurality of first bootstrap circuits 71a and the capacitors C21 of the plurality of second bootstrap circuits 72a.

In addition, in the multi-level inverter 100a according to the third embodiment, the DC-DC converter 91a included in the power supply unit 9a supplies a voltage to the plurality of second gate drivers 62a, the plurality of first bootstrap circuits 71a, and the plurality of second bootstrap circuits 72a. Thus, the multi-level inverter 100a according to the third embodiment may contribute to downsizing.

(Fourth embodiment)

A multi-level inverter 100a according to a fourth embodiment has the same circuit configuration as the multi-level inverter 100a (refer to FIG. 26) according to the third embodiment, and therefore, illustration and description thereof will be omitted herein.

In the multi-level inverter 100a according to the third embodiment, the control unit 60a replaces only one first voltage vector VV1 out of the two first voltage vectors VV1 (such as V8n [00N] and V8p [PP0]) with the zero vector and the second voltage vector VV2 as in the example shown in FIG. 41.

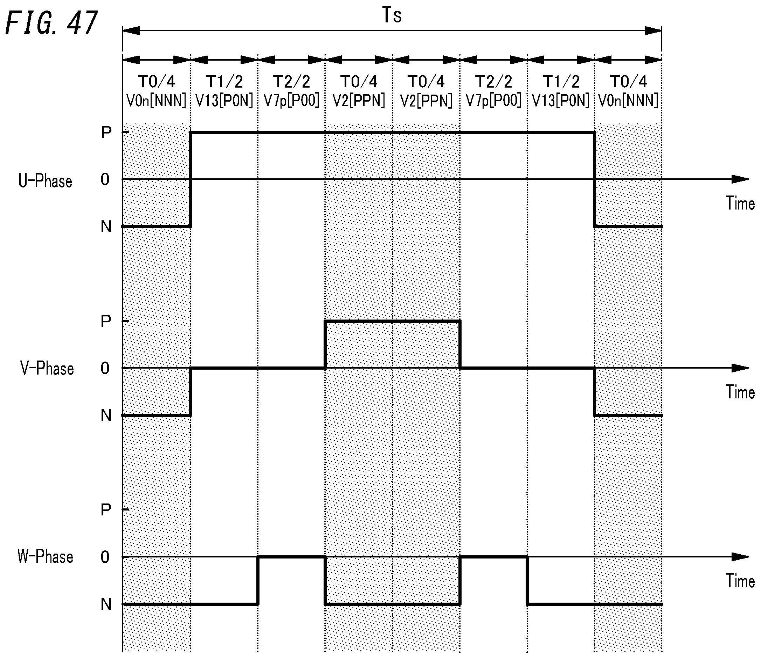

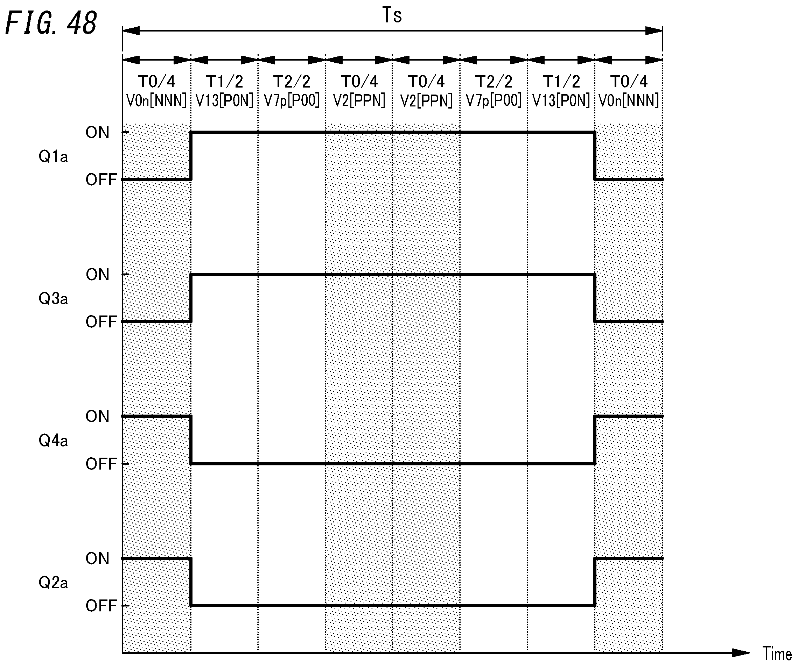

On the other hand, in the multi-level inverter 100a according to the fourth embodiment, the control unit 60a replaces one first voltage vector VV1 (such as V8n [00N]) out of the two first voltage vectors VV1 (such as V8n [00N] and V8p [PP0] shown in FIG. 39) with the zero vector V0n [NNN] and replaces the other first voltage vector VV1 (such as V8p [PP0]) with the second voltage vector VV2 (such as V2 [PPN]) as in the example shown in FIG. 47, for instance. In that case, the control unit 60a of the multi-level inverter 100a according to the fourth embodiment outputs, within two cycles of the carrier signal, the voltage vectors and the zero vectors in the order of the zero vector V0n [NNN], the voltage vector V13 [PON], the voltage vector V7p [P00], the voltage vector V2 [PPN], the voltage vector V2 [PPN], the voltage vector V7p [P00], the voltage vector V13 [PON], and the zero vector V0 [NNN] as shown in FIG. 47. The control unit 60a replaces the voltage vectors V8n [00N], V8p [PPO], V8p [PPO], and V8n [00N] in the example shown in FIG. 39 with the zero vector V0n [NNN], the voltage vector V2 [PPN], the voltage vector V2 [PPN], and the zero vector V0n [NNN], respectively, thus generating a period in which the U-phase switching state is "N" as shown in FIG. 47. This allows the multi-level inverter 100a according to the fourth embodiment to generate the third switching state within the control cycle Ts as shown in FIG. 48. Consequently, the multi-level inverter 100a according to the fourth embodiment may reduce the chances of causing a voltage drop in the capacitors C27 of the second bootstrap circuits 72a.

Furthermore, in the multi-level inverter 100a according to the third embodiment, the control unit 60 replaces only one first voltage vector VV1 (such as V8p [PP0]) out of the two first voltage vectors VV1 (such as V8n [00N] and V8p [PP0]) shown in FIG. 43 with the zero vector V0n [NNN] and the second voltage vector VV2 (such as V2 [PPN]) as in the example shown in FIG. 45.

In contrast, in the multi-level inverter 100a according to the fourth embodiment, the control unit 60a replaces one first voltage vector VV1 (such as V8n [00N]) out of the two first voltage vectors VV1 (such as V8n [00N] and V8p [PP0]) shown in FIG. 43 with the zero vector V0n [NNN] and replaces the other first voltage vector VV1 (such as V8p [PP0]) with the second voltage vector VV2 (such as V2 [PPN]) as in the example shown in FIG. 47, for instance. In that case, in the multi-level inverter 100 according to the fourth embodiment, the control unit 60a outputs, within two cycles of the carrier signal, the voltage vectors and zero vectors in the order of the zero vector V0n [NNN], the voltage vector V13 [PON], the voltage vector V7p [P00], the voltage vector V2 [PPN], the voltage vector V2 [PPN], the voltage vector V7p [P00], the voltage vector V13 [PON], and the zero vector V0n [NNN] as shown in FIG. 47. The control unit 60a replaces the voltage vectors V8p [PPO], V8n [00N], V8n [00N], and V8p [PP0] of the example shown in FIG. 43 with the voltage vectors V0n [NNN], V2 [PPN], V2 [PPN], and V0n [NNN], respectively, thus generating a period in which the U-phase switching state is "N" as shown in FIG. 47. This allows the multi-level inverter 100a according to the fourth embodiment to generate the third switching state within the control cycle Ts as shown in FIG. 48. Consequently, the multi-level inverter 100a according to the fourth embodiment may reduce the chances of causing a voltage drop in the capacitors C21 of the second bootstrap circuits 72a.

In the multi-level inverter 100a according to the fourth embodiment, the control unit 60a replaces each of the two first voltage vectors VV1, which belong to the plurality of voltage vectors, each have a reference magnitude, and are located closest to the command voltage vector V*, with a zero vector V0n [NNN] defined by a combination of potential levels at the respective connection nodes 13a of the plurality of inverter circuits 1a which are as high as a potential at the negative electrode N1 and the second voltage vector VV2 having the same direction as, and twice as large a magnitude as, the first voltage vector VV1. The control unit 60a controls the plurality of first gate drivers 61a, the plurality of second gate drivers 62a, the plurality of third gate drivers 63a, and the plurality of fourth gate drivers 64a within a predetermined control cycle Ts to make a synthetic vector of a voltage vector included in the plurality of voltage vectors but the first voltage vectors VV1, the zero vector V0n [NNN], and the second voltage vector VV2 equal to the command voltage vector V*.

The multi-level inverter 100a according to the fourth embodiment may reduce the chances of causing a voltage drop in a bootstrap circuit. More specifically, the multi-level inverter 100a according to the fourth embodiment may reduce the chances of causing a voltage drop in the capacitors C11 of the plurality of first bootstrap circuits 71a and the capacitors C21 of the plurality of second bootstrap circuits 72a.

In addition, in the comparative example, even if the command voltage vector V* is the same as the one shown in FIG. 38A, the arrangement order of the voltage vectors within the control cycle Ts may be different according to the initial value of the carrier signal at the beginning of the control cycle Ts. Specifically, in the example shown in FIG. 43, the voltage vectors are output in the order of the voltage vector V8p [PPO], the voltage vector V7p [P00], the voltage vector V13 [P0N], the voltage vector V8n [00N], the voltage vector V8n [00N], the voltage vector V13 [PON], the voltage vector V7p [P00], and the voltage vector V8p [PP0]. Also, in the example shown in FIG. 43, the time assigned to the voltage vectors V8p and V8n is T0, the time assigned to the voltage vector V13 is T1, and the time assigned to the voltage vectors V7p and V7n is T2 as in the example shown in FIG. 39. In that case, the third switching state will not be generated, and the magnitude of voltage drop in the second bootstrap circuits 72a will increase, all through the control cycle Ts as shown in FIG. 44.

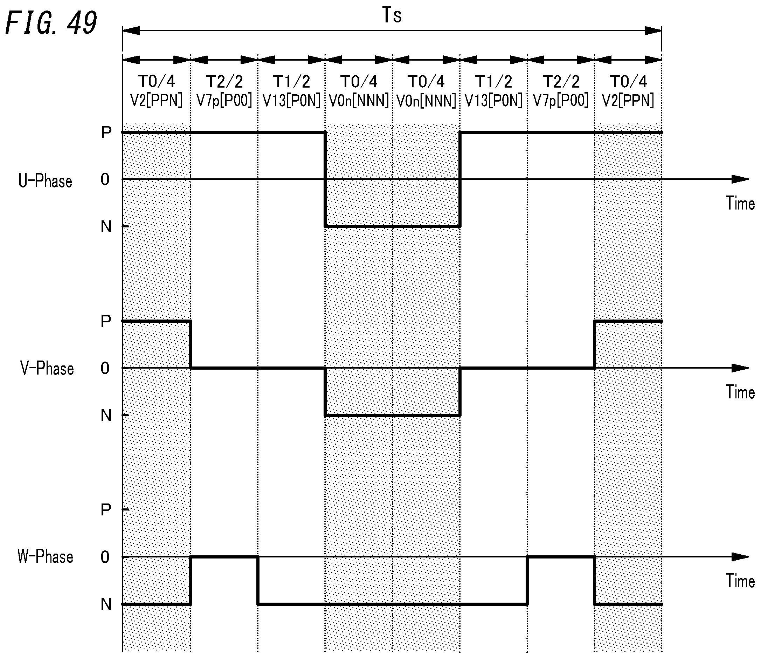

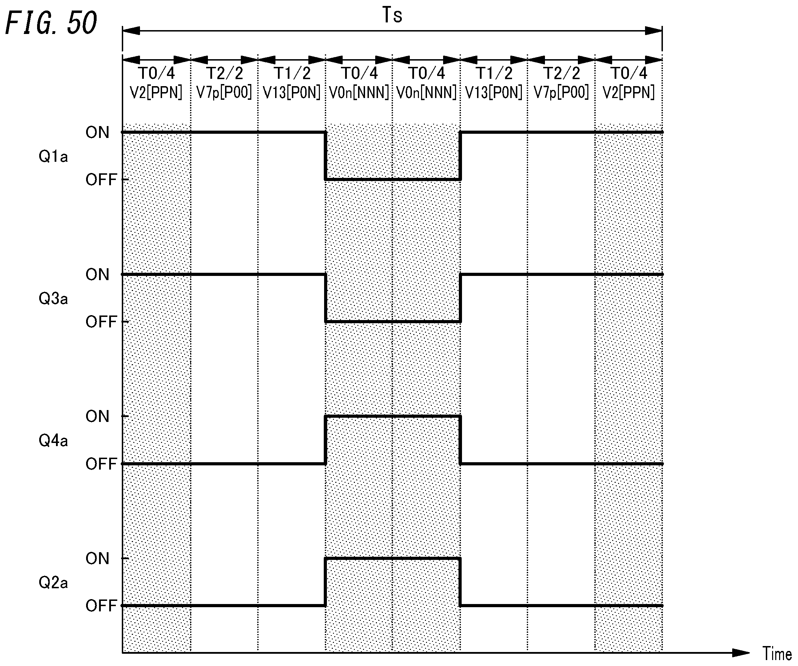

In contrast, the control unit 60a of the multi-level inverter 100a according to the fourth embodiment outputs the voltage vectors and the zero vectors in the order of the voltage vector V2 [PPN], the voltage vector V7p [P00], the voltage vector V13 [PON], the voltage vector V0n [NNN], the voltage vector V0n [NNN], the voltage vector V13 [PON], the voltage vector V7p [P00], and the voltage vector V2 [PPN] within two cycles of the carrier signal as shown in FIG. 49, for example. The control unit 60a replaces the voltage vectors V8p [PPO], V8n [00N] in the example shown in FIG. 43 with the voltage vector V2 [PPN] and V0n [NNN], respectively, thus generating a period in which the U-phase switching state is "N" as shown in FIG. 49. This allows the multi-level inverter 100 according to the fourth embodiment to generate the third switching state within the control cycle Ts as shown in FIG. 50. Thus, the multi-level inverter 100a according to the fourth embodiment may reduce the chances of causing a voltage drop in the capacitors C21 of the second bootstrap circuits 72a.

(Fifth embodiment)

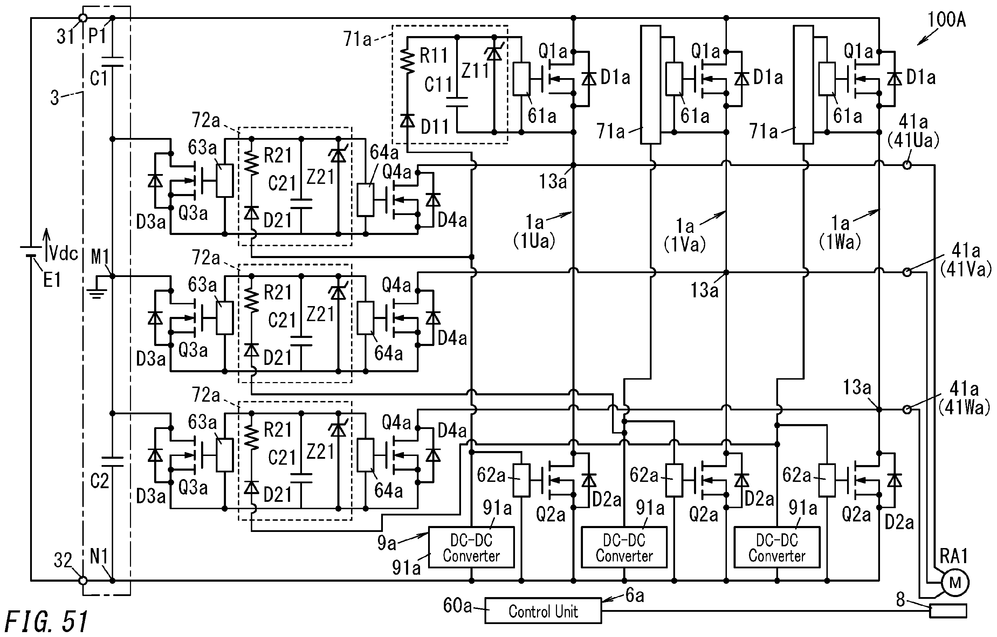

A multi-level inverter 100A according to a fifth embodiment will be described with reference to FIG. 51. In the following description, any constituent element of the multi-level inverter 100A, having the same function as a counterpart of the multi-level inverter 100a (refer to FIG. 26) according to the third embodiment described above, will be designated by the same reference numeral as that counterpart's, and description thereof will be omitted herein.

In the multi-level inverter 100A, the power supply unit 9a thereof includes a plurality of (e.g., three) DC-DC converters 91a, which is a difference from the multi-level inverter 100a.

In the multi-level inverter 100A, the plurality of DC-DC converters 91a are provided one to one for the plurality of (e.g., three) fourth gate drivers 64a. Each of the plurality of DC-DC converters 91a supplies a voltage to a corresponding one of the fourth gate drivers 64a. In addition, in the multi-level inverter 100A, the plurality of DC-DC converters 91a are provided one to one for the plurality of first bootstrap circuits 71a. Each of the plurality of DC-DC converters 91a is connected to a corresponding one of the first bootstrap circuits 71a. More specifically, each of the plurality of DC-DC converters 91a has a positive-side terminal thereof connected to the anode of the diode D11 of a corresponding one of the first bootstrap circuit 71a and has a negative-side terminal thereof connected to the negative electrode N1 of the DC power supply unit 3.

In the multi-level inverter 100A, the control unit 60a thereof controls the plurality of first gate drivers 61a, the plurality of second gate drivers 62a, the plurality of third gate drivers 63a, and the plurality of fourth gate drivers 64a by performing the same voltage vector control as the control unit 60a of the multi-level inverter 100a.

Consequently, the multi-level inverter 100A according to the fifth embodiment, as well as the multi-level inverter 100a, may reduce the chances of causing a voltage drop in the capacitors C11 of the plurality of first bootstrap circuits 71a and the capacitors C21 of the plurality of second bootstrap circuits 72a.

(Sixth embodiment)

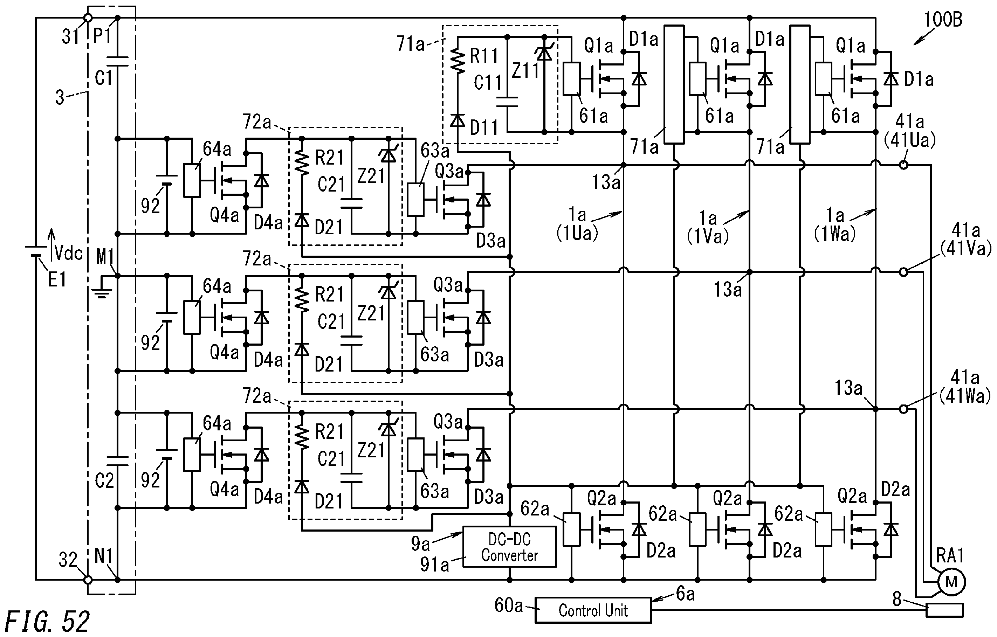

A multi-level inverter 100B according to a sixth embodiment will be described with reference to FIG. 52. In the following description, any constituent element of the multi-level inverter 100B, having the same function as a counterpart of the multi-level inverter 100a (refer to FIG. 26) according to the third embodiment described above, will be designated by the same reference numeral as that counterpart's, and description thereof will be omitted herein.

In the multi-level inverter 100B, a bidirectional switch including the third switching element Q3a and the fourth switching element Q4a is a common-drain bidirectional switch in which the respective first main terminals (source terminals) of the third switching element Q3a and the fourth switching element Q4a are connected to each other. In the bidirectional switch of the multi-level inverter 100B, the second main terminal of the fourth switching element Q4a is connected to the intermediate potential node M1 and the third switching element Q3a is connected to the connection node 13a.

In addition, in the multi-level inverter 100B, the power supply unit 9a thereof includes not only the DC-DC converter 91a (hereinafter referred to as a "first DC-DC converter 91a") but also a plurality of (e.g., three) second DC-DC converters 92 as well. Note that in FIG. 52, each of the plurality of second DC-DC converters 92 is represented by the symbol of a DC power supply.

The first DC-DC converter 91a supplies a voltage to the plurality of second gate drivers 62a, the plurality of first bootstrap circuits 71a, and the plurality of second bootstrap circuits 72a.

The plurality of second DC-DC converters 92 are provided one to one for the plurality of fourth gate drivers 64a. Each of the plurality of second DC-DC converters 92 supplies a voltage to a corresponding one of the plurality of fourth gate drivers 64a. Each of the second DC-DC converters 92 has a positive-side terminal thereof connected to the higher-potential power supply terminal of the corresponding fourth gate driver 64a and has a negative-side terminal thereof connected to the intermediate potential node M1, the lower-potential power supply terminal of the corresponding fourth gate driver 64a, and the second main terminal of the fourth switching element Q4.

In the multi-level inverter 100B, the control unit 60a thereof controls the plurality of first gate drivers 61a, the plurality of second gate drivers 62a, the plurality of third gate drivers 63a, and the plurality of fourth gate drivers 64a by performing the same voltage vector control as the control unit 60a of the multi-level inverter 100a.

Consequently, the multi-level inverter 100B according to the sixth embodiment, as well as the multi-level inverter 100a, may reduce the chances of causing a voltage drop in the capacitors C11 of the plurality of first bootstrap circuits 71a and the capacitors C21 of the plurality of second bootstrap circuits 72a.

(Seventh embodiment)

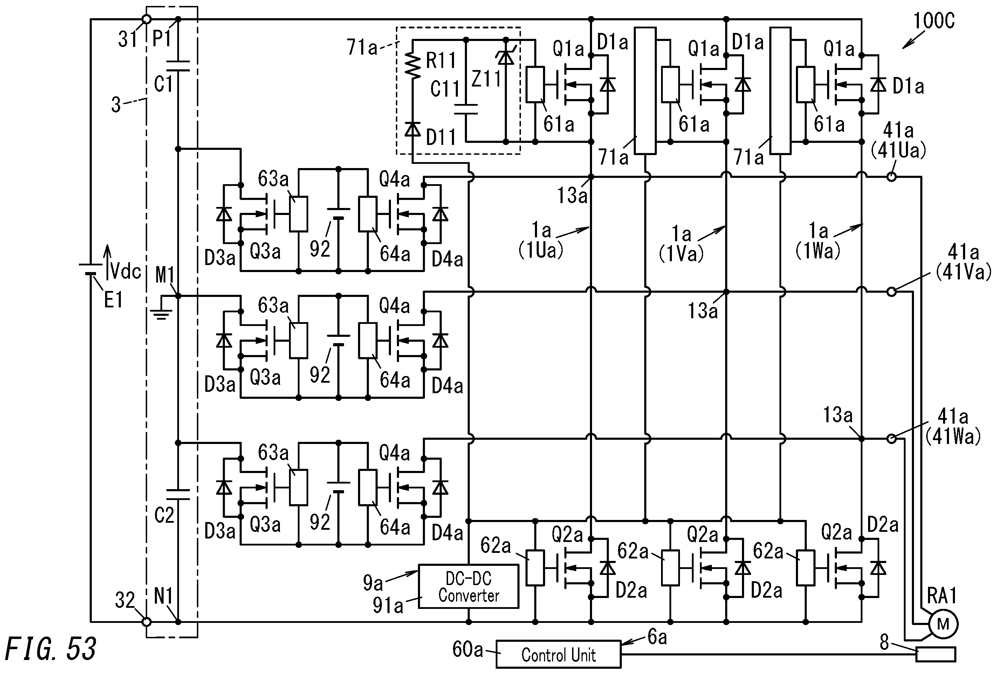

A multi-level inverter 100C according to a seventh embodiment will be described with reference to FIG. 53. In the following description, any constituent element of the multi-level inverter 100C, having the same function as a counterpart of the multi-level inverter 100a (refer to FIG. 26) according to the third embodiment described above, will be designated by the same reference numeral as that counterpart's, and description thereof will be omitted herein.

The multi-level inverter 100C does not include the plurality of second bootstrap circuits 72a of the multi-level inverter 100a. The power supply unit 9a thereof includes not only the DC-DC converter 91a (hereinafter referred to as a "first DC-DC converter 91a") but also a plurality of (e.g., three) second DC-DC converters 92 as well. Note that in FIG. 53, each of the plurality of second DC-DC converters 92 is represented by the symbol of a DC power supply.

The first DC-DC converter 91a supplies a voltage to the plurality of second gate drivers 62a, the plurality of first bootstrap circuits 71a, and the plurality of second bootstrap circuits 72a.

The plurality of second DC-DC converters 92 are provided for the plurality of third gate drivers 63a and the plurality of fourth gate drivers 64a. Each of the plurality of second DC-DC converters 92 supplies a voltage to a corresponding one of the plurality of third gate drivers 63a and a corresponding one of the plurality of fourth gate drivers 64a. Each of the plurality of second DC-DC converters 92 has a positive-side terminal thereof connected to the higher-potential power supply terminal of the corresponding third gate driver 63a and the higher-potential power supply terminal of the corresponding fourth gate driver 64a. Each of the plurality of second DC-DC converters 92 has a negative-side terminal thereof connected to the lower-potential power supply terminal of the corresponding third gate driver 63a and the lower-potential power supply terminal of the corresponding fourth gate driver 64a.

In the multi-level inverter 100C, the control unit 60a thereof controls the plurality of first gate drivers 61a, the plurality of second gate drivers 62a, the plurality of third gate drivers 63a, and the plurality of fourth gate drivers 64a by performing the same voltage vector control as the control unit 60a of the multi-level inverter 100a.

Consequently, the multi-level inverter 100C according to the seventh embodiment may reduce the chances of causing a voltage drop in the capacitors C11 of the plurality of first bootstrap circuits 71a.

(Eighth embodiment)

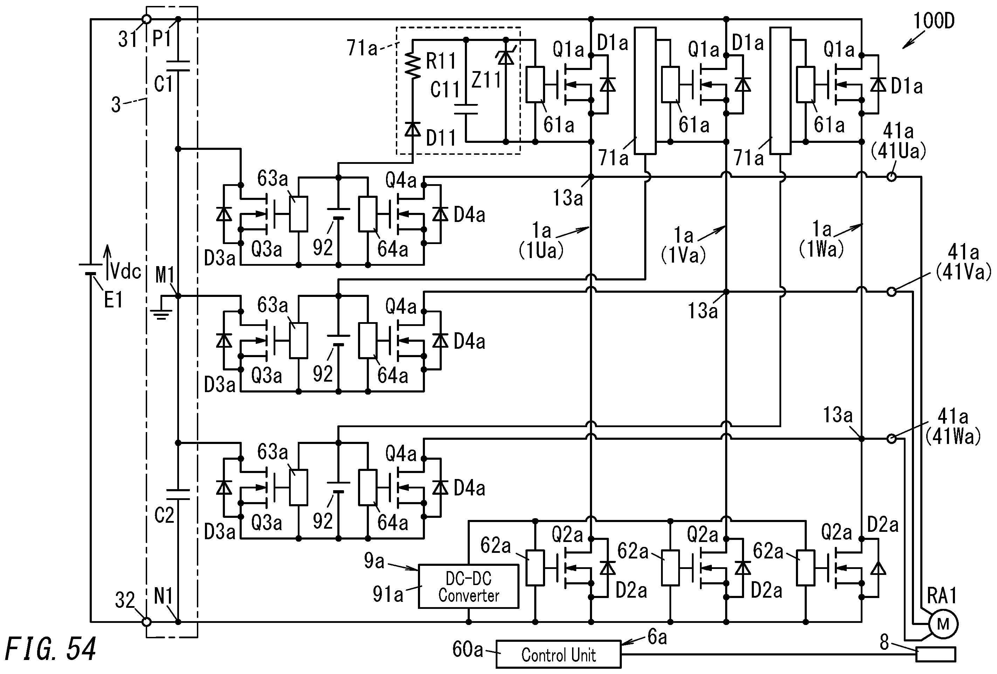

A multi-level inverter 100D according to an eighth embodiment will be described with reference to FIG. 54. In the following description, any constituent element of the multi-level inverter 100D, having the same function as a counterpart of the multi-level inverter 100C (refer to FIG. 53) according to the seventh embodiment described above, will be designated by the same reference numeral as that counterpart's, and description thereof will be omitted herein.

In the multi-level inverter 100D, the first DC-DC converter 91a is not connected to the plurality of first bootstrap circuit 71a and the positive-side terminal of each second DC-DC converter 92 is connected to the anode of the diode D11 of a corresponding one of the first bootstrap circuits 71a.

In the multi-level inverter 100D, the control unit 60a thereof controls the plurality of first gate drivers 61a, the plurality of second gate drivers 62a, the plurality of third gate drivers 63a, and the plurality of fourth gate drivers 64a by performing the same voltage vector control as the control unit 60a of the multi-level inverter 100a according to the third embodiment.

Consequently, the multi-level inverter 100D according to the eighth embodiment may reduce the chances of causing a voltage drop in the capacitors C11 of the plurality of first bootstrap circuits 71a.

(Other variations)

Note that the third to eighth embodiments described above are only exemplary ones of various embodiments of the present disclosure and should not be construed as limiting. Rather, the third to eighth embodiments may be readily modified in various manners depending on a design choice or any other factor without departing from the scope of the present disclosure.

For example, the plurality of first switching elements Q1a, the plurality of second switching elements Q2a, the plurality of third switching elements Q3a, and the plurality of fourth switching elements Q4a do not have to be MOSFETs but may also be insulated gate bipolar transistors (IGBTs). In that case, in each of the plurality of first switching elements Q1a, the plurality of second switching elements Q2a, the plurality of third switching elements Q3a, and the plurality of fourth switching elements Q4a, the control terminal, first main terminal, and second main terminal thereof are a gate terminal, a collector terminal, and an emitter terminal, respectively.

Also, in the multi-level inverters 100a and 100A-100D according to the third to eighth embodiments, the control unit 60a thereof may replace the first voltage vector VV1 with the zero vector V0n [NNN] and the second voltage vector VV2 not only when the polarity of the command voltage corresponding to the command voltage vector V* is positive but also when the polarity of the command voltage corresponding to the command voltage vector V* is negative.

EP 4 586 489 A1

Each of the plurality of first bootstrap circuits 71a includes the Zener diode Z11 in the embodiments described above but may also have a configuration with no Zener diodes Z11. Each of the plurality of second bootstrap circuits 72a includes the Zener diode Z21 in the embodiments described above but may also have a configuration with no Zener diodes Z21.

Also, the multi-level inverter 100a only needs to be a multi-level inverter with at least three levels and may be, for example, a five-level inverter.

(Aspects)

The foregoing description provides specific implementations of the following aspects of the present disclosure.

A multi-level inverter (100) according to a first aspect includes a DC power supply unit (3), a plurality of inverter circuits (1), and a controller (6). The DC power supply unit (3) includes a positive electrode (P1), a negative electrode (N1), and an intermediate potential node (M1). The plurality of inverter circuits (1) are connected between the positive electrode (P1) and the negative electrode (N1) of the DC power supply unit (3). The controller (6) controls the plurality of inverter circuits (1). Each of the plurality of inverter circuits (1) includes a switching circuit (10), a first diode (D1), a second diode (D2), a third diode (D3), a fourth diode (D4), a fifth diode (D5), and a sixth diode (D6). In the switching circuit (10), a first switching element (Q1), a second switching element (Q2), a third switching element (Q3), and a fourth switching element (Q4) are connected in series to be arranged in line in this order from the positive electrode (P1) toward the negative electrode (N1). The first diode (D1) is connected to the first switching element (Q1) in anti-parallel. The second diode (D2) is connected to the second switching element (Q2) in anti-parallel. The third diode (D3) is connected to the third switching element (Q3) in anti-parallel. The fourth diode (D4) is connected to the fourth switching element (Q4) in anti-parallel. The fifth diode (D5) has a cathode connected to a first connection node (11) between the first switching element (Q1) and the second switching element (Q2) and an anode connected to the intermediate potential node (M1). The sixth diode (D6) has an anode connected to a second connection node (12) between the third switching element (Q3) and the fourth switching element (Q4) and a cathode connected to the intermediate potential node (M1). The controller (6) includes a plurality of first gate drivers (61), a plurality of second gate drivers (62), a plurality of third gate drivers (63), a plurality of fourth gate drivers (64), a plurality of first bootstrap circuits (71), a plurality of second bootstrap circuits (72), a power supply unit (9), and a control unit (60). Each of the plurality of first gate drivers (61) drives the first switching element (Q1) of a corresponding one of the plurality of inverter circuits (1). Each of the plurality of second gate drivers (62) drives the second switching element (Q2) of a corresponding one of the plurality of inverter circuits (1). Each of the plurality of third gate drivers (63) drives the third switching element (Q3) of a corresponding one of the plurality of inverter circuits (1). Each of the plurality of fourth gate drivers (64) drives the fourth switching element (Q4) of a corresponding one of the plurality of inverter circuits (1). The plurality of first bootstrap circuits (71) are provided one to one for the plurality of first gate drivers (61). Each of the plurality of first bootstrap circuits (71) supplies a voltage to a corresponding one of the plurality of first gate drivers (61). The plurality of second bootstrap circuits (72) are provided one to one for the plurality of second gate drivers (62). Each of the plurality of second bootstrap circuits (72) supplies a voltage to a corresponding one of the plurality of second gate drivers (62). The plurality of third bootstrap circuits (73) are provided one to one for the plurality of third gate drivers (63). Each of the plurality of third bootstrap circuits (73) supplies a voltage to a corresponding one of the plurality of third gate drivers (63). The power supply unit (9) supplies a voltage to the plurality of fourth gate drivers (64). The control unit (60) controls the plurality of first gate drivers (61), the plurality of second gate drivers (62), the plurality of third gate drivers (63), and the plurality of fourth gate drivers (64). The control unit (60) selects a plurality of voltage vectors located adjacent to a command voltage vector (V*) from a group of voltage vectors. Each of the group of voltage vectors is defined by a combination of potential levels at respective third connection nodes (13), at each of which the second switching element (Q2) and the third switching element (Q3) are connected to each other in a corresponding one of the plurality of inverter circuits (1). The control unit (60) replaces one first voltage vector (VV1) out of two first voltage vectors (VV1) with a zero vector (VOn [NNN]) and a second voltage vector (VV2). The two first voltage vectors (VV1) belong to the plurality of voltage vectors, each have a reference magnitude, and are located closest to the command voltage vector (V*). The zero vector (VOn [NNN]) is defined by a combination of potential levels at the respective third connection nodes (13), at each of which the second switching element (Q2) and the third switching element (Q3) are connected to each other in a corresponding one of the plurality of inverter circuits (1) and which are as high as a potential at the negative electrode (N1). The second voltage vector (VV2) has the same direction as, and twice as large a magnitude as, the first voltage vector (VV1). The control unit (60) controls the plurality of first gate drivers (61), the plurality of second gate drivers (62), the plurality of third gate drivers (63), and the plurality of fourth gate drivers (64) within a predetermined control cycle (Ts) to make a synthetic vector of a voltage vector included in the plurality of voltage vectors but the first voltage vectors (VV1), the other first voltage vector (VV1) out of the two first voltage vectors (VV1), the zero vector (VOn [NNN]), and the second voltage vector (VV2) equal to the command voltage vector (V*).

This aspect may reduce the chances of causing a voltage drop in a bootstrap circuit. More specifically, this aspect may reduce the chances of causing a voltage drop in capacitors (C17) of the plurality of first bootstrap circuits (71),

31

capacitors (C27) of the plurality of second bootstrap circuits (72), and capacitors (C37) of the plurality of third bootstrap circuits (73).

A multi-level inverter (100) according to a second aspect includes a DC power supply unit (3), a plurality of inverter circuits (1), and a controller (6). The DC power supply unit (3) includes a positive electrode (P1), a negative electrode (N1), and an intermediate potential node (M1). The plurality of inverter circuits (1) are connected between the positive electrode (P1) and the negative electrode (N1) of the DC power supply unit (3). The controller (6) controls the plurality of inverter circuits (1). Each of the plurality of inverter circuits (1) includes a switching circuit (10), a first diode (D1), a second diode (D2), a third diode (D3), a fourth diode (D4), a fifth diode (D5), and a sixth diode (D6). In the switching circuit (10), a first switching element (Q1), a second switching element (Q2), a third switching element (Q3), and a fourth switching element (Q4) are connected in series to be arranged in line in this order from the positive electrode (P1) toward the negative electrode (N1). The first diode (D1) is connected to the first switching element (Q1) in anti-parallel. The second diode (D2) is connected to the second switching element (Q2) in anti-parallel. The third diode (D3) is connected to the third switching element (Q3) in anti-parallel. The fourth diode (D4) is connected to the fourth switching element (Q4) in anti-parallel. The fifth diode (D5) has a cathode connected to a first connection node (11) between the first switching element (Q1) and the second switching element (Q2) and an anode connected to the intermediate potential node (M1). The sixth diode (D6) has an anode connected to a second connection node (12) between the third switching element (Q3) and the fourth switching element (Q4) and a cathode connected to the intermediate potential node (M1). The controller (6) includes a plurality of first gate drivers (61), a plurality of second gate drivers (62), a plurality of third gate drivers (63), a plurality of fourth gate drivers (64), a plurality of first bootstrap circuits (71), a plurality of second bootstrap circuits (72), a power supply unit (9), and a control unit (60). Each of the plurality of first gate drivers (61) drives the first switching element (Q1) of a corresponding one of the plurality of inverter circuits (1). Each of the plurality of second gate drivers (62) drives the second switching element (Q2) of a corresponding one of the plurality of inverter circuits (1). Each of the plurality of third gate drivers (63) drives the third switching element (Q3) of a corresponding one of the plurality of inverter circuits (1). Each of the plurality of fourth gate drivers (64) drives the fourth switching element (Q4) of a corresponding one of the plurality of inverter circuits (1). The plurality of first bootstrap circuits (71) are provided one to one for the plurality of first gate drivers (61). Each of the plurality of first bootstrap circuits (71) supplies a voltage to a corresponding one of the plurality of first gate drivers (61). The plurality of second bootstrap circuits (72) are provided one to one for the plurality of second gate drivers (62). Each of the plurality of second bootstrap circuits (72) supplies a voltage to a corresponding one of the plurality of second gate drivers (62). The plurality of third bootstrap circuits (73) are provided one to one for the plurality of third gate drivers (63). Each of the plurality of third bootstrap circuits (73) supplies a voltage to a corresponding one of the plurality of third gate drivers (63). The power supply unit (9) supplies a voltage to the plurality of fourth gate drivers (64). The control unit (60) controls the plurality of first gate drivers (61), the plurality of second gate drivers (62), the plurality of third gate drivers (63), and the plurality of fourth gate drivers (64). The control unit (60) selects a plurality of voltage vectors located adjacent to a command voltage vector (V*) from a group of voltage vectors. Each of the group of voltage vectors is defined by a combination of potential levels at respective third connection nodes (13), at each of which the second switching element (Q2) and the third switching element (Q3) are connected to each other in a corresponding one of the plurality of inverter circuits (1). The control unit (60) replaces a first voltage vector (VV1) with a zero vector (Vo [NNN]) and a second voltage vector (VV2). The first voltage vector (VV1) belongs to the plurality of voltage vectors, has a reference magnitude, and is located closest to the command voltage vector (V*). The zero vector (Vo [NNN]) is defined by a combination of potential levels at the respective third connection nodes (13), at each of which the second switching element (Q2) and the third switching element (Q3) are connected to each other in a corresponding one of the plurality of inverter circuits (1) and which are as high as a potential at the negative electrode (N1). The second voltage vector (VV2) has the same direction as, and twice as large a magnitude as, the first voltage vector (VV1). The control unit (60) controls the plurality of first gate drivers (61), the plurality of second gate drivers (62), the plurality of third gate drivers (63), and the plurality of fourth gate drivers (64) within a predetermined control cycle (Ts) to make a synthetic vector of a voltage vector included in the plurality of voltage vectors but the first voltage vector (VV1), the zero vector (Vo [NNN]), and the second voltage vector (VV2) equal to the command voltage vector (V*).

This aspect may reduce the chances of causing a voltage drop in a bootstrap circuit. More specifically, this aspect may reduce the chances of causing a voltage drop in capacitors (C17) of the plurality of first bootstrap circuits (71), capacitors (C27) of the plurality of second bootstrap circuits (72), and capacitors (C37) of the plurality of third bootstrap circuits (73).

In a multi-level inverter (100) according to a third aspect, which may be implemented in conjunction with the first or second aspect, when polarity of a command voltage corresponding to the command voltage vector (V*) is positive, the control unit (60) replaces the first voltage vector (VV1) with the zero vector (VOn [NNN]) and the second voltage vector (VV2).

This aspect may reduce the number of times the first voltage vector (VV1) needs to be replaced with the zero vector (VOn [NNN]) and the second voltage vector (VV2).

In a multi-level inverter (100) according to a fourth aspect, which may be implemented in conjunction with any one of the first to third aspects, the control unit (60) controls the plurality of first gate drivers (61), the plurality of second gate drivers (62), the plurality of third gate drivers (63), and the plurality of fourth gate drivers (64) to prevent an output voltage of each of the plurality of first bootstrap circuits (71) and the plurality of second bootstrap circuits (72) from decreasing to a predetermined value or less.

This aspect may prevent an output voltage of each of the plurality of first bootstrap circuits (71) and the plurality of second bootstrap circuits (72) from decreasing to a predetermined value or less.

In a multi-level inverter (100) according to a fifth aspect, which may be implemented in conjunction with any one of the first to fourth aspects, each of the plurality of first bootstrap circuits (71) and the plurality of second bootstrap circuits (72) includes a capacitor (C17), a diode (D17), and a resistor (R17). The diode (D17) is connected to the capacitor (C17) in series. The resistor (R17) is connected to the capacitor (C17) in series.

In a multi-level inverter (100) according to a sixth aspect, which may be implemented in conjunction with any one of the first to fifth aspects, the power supply unit (9) includes a DC-DC converter (91). The DC-DC converter (91) supplies a voltage to the plurality of fourth gate drivers (64) and the plurality of third bootstrap circuits (73).

This aspect may contribute to reducing the size of the multi-level inverter (100).

A multi-level inverter (100a; 100A; 100B; 100C; 100D) according to a seventh aspect includes a DC power supply unit (3), a plurality of inverter circuits (1a), and a controller (6a). The DC power supply unit (3) includes a positive electrode (P1), a negative electrode (N1), and an intermediate potential node (M1). The plurality of inverter circuits (1a) are connected between the positive electrode (P1) and the negative electrode (N1) of the DC power supply unit (3). The controller (6a) controls the plurality of inverter circuits (1a). Each of the plurality of inverter circuits (1a) includes: a first switching element (Q1a), a second switching element (Q2a), a third switching element (Q3a), and a fourth switching element (Q4a); and a first diode (D1a), a second diode (D2a), a third diode (D3a), and a fourth diode (D4a). The first diode (D1a), the second diode (D2a), the third diode (D3a), and the fourth diode (D4a) are connected in anti-parallel to the first switching element (Q1a), the second switching element (Q2a), the third switching element (Q3a), and the fourth switching element (Q4a), respectively. In each of the plurality of inverter circuits (1a), the first switching element (Q1a) and the second switching element (Q2a) are connected in series to be arranged in line in this order from the positive electrode (P1) toward the negative electrode (N1). In each of the plurality of inverter circuits (1a), a series circuit of the third switching element (Q3a) and the fourth switching element (Q4a) is connected between the intermediate potential node (M1) and an output node. In in each of the plurality of inverter circuits (1a), the output node is a connection node (13a) between the first switching element (Q1a) and the second switching element (Q2a). The controller (6a) includes a plurality of first gate drivers (61a), a plurality of second gate drivers (62a), a plurality of third gate drivers (63a), a plurality of fourth gate drivers (64a), a plurality of bootstrap circuits (71a), a power supply unit (9a), and a control unit (60a). Each of the plurality of first gate drivers (61a) drives the first switching element (Q1a) of a corresponding one of the plurality of inverter circuits (1a). Each of the plurality of second gate drivers (62a) drives the second switching element (Q2a) of a corresponding one of the plurality of inverter circuits (1a). Each of the plurality of third gate drivers (63a) drives the third switching element (Q3a) of a corresponding one of the plurality of inverter circuits (1a). Each of the plurality of fourth gate drivers (64a) drives the fourth switching element (Q4a) of a corresponding one of the plurality of inverter circuits (1a). The plurality of bootstrap circuits (71a) are provided one to one for the plurality of first gate drivers (61a). Each of the plurality of bootstrap circuits (71a) supplies a voltage to a corresponding one of the plurality of first gate drivers (61a). The power supply unit (9a) supplies a voltage to the plurality of second gate drivers (62a) and the plurality of third gate drivers (63a). The control unit (60a) controls the plurality of first gate drivers (61a), the plurality of second gate drivers (62a), the plurality of third gate drivers (63a), and the plurality of fourth gate drivers (64a). The control unit (60a) selects a plurality of voltage vectors located adjacent to a command voltage vector (V*) from a group of voltage vectors. Each of the group of voltage vectors is defined by a combination of potential levels at a plurality of connection nodes (13a) of the plurality of inverter circuits (1a). The control unit (60a) replaces one first voltage vector (VV1) out of two first voltage vectors (VV1) with a zero vector (VOn [NNN]) and a second voltage vector (VV2). The two first voltage vectors (VV1) belong to the plurality of voltage vectors, each have a reference magnitude, and are located closest to the command voltage vector (V*). The zero vector (VOn [NNN]) is defined by a combination of potential levels at the respective connection nodes (13a) of the plurality of inverter circuits (1a) which are as high as a potential at the negative electrode (N1). The second voltage vector (VV2) has the same direction as, and twice as large a magnitude as, the first voltage vector (VV1). The control unit (60a) controls the plurality of first gate drivers (61a), the plurality of second gate drivers (62a), the plurality of third gate drivers (63a), and the plurality of fourth gate drivers (64a) within a predetermined control cycle (Ts) to make a synthetic vector of a voltage vector included in the plurality of voltage vectors but the first voltage vectors (VV1), the other first voltage vector (VV1) out of the two first voltage vectors (VV1), the zero vector (VOn [NNN]), and the second voltage vector (VV2) equal to the command voltage vector (V*).

This aspect may reduce the chances of causing a voltage drop in a bootstrap circuit. More specifically, this aspect may reduce the chances of causing a voltage drop in capacitors (C11) of the plurality of bootstrap circuits (71a).

A multi-level inverter (100a; 100A; 100B; 100C; 100D) according to an eighth aspect includes a DC power supply unit (3), a plurality of inverter circuits (1a), and a controller (6a). The DC power supply unit (3) includes a positive electrode

(P1), a negative electrode (N1), and an intermediate potential node (M1). The plurality of inverter circuits (1a) are connected between the positive electrode (P1) and the negative electrode (N1) of the DC power supply unit (3). The controller (6a) controls the plurality of inverter circuits (1a). Each of the plurality of inverter circuits (1a) includes: a first switching element (Q1a), a second switching element (Q2a), a third switching element (Q3a), and a fourth switching element (Q4a); and a first diode (D1a), a second diode (D2a), a third diode (D3a), and a fourth diode (D4a). The first diode (D1a), the second diode (D2a), the third diode (D3a), and the fourth diode (D4a) are connected in anti-parallel to the first switching element (Q1a), the second switching element (Q2a), the third switching element (Q3a), and the fourth switching element (Q4a), respectively. In each of the plurality of inverter circuits (1a), the first switching element (Q1a) and the second switching element (Q2a) are connected in series to be arranged in line in this order from the positive electrode (P1) toward the negative electrode (N1). In each of the plurality of inverter circuits (1a), a series circuit of the third switching element (Q3a) and the fourth switching element (Q4a) is connected between the intermediate potential node (M1) and an output node. In each of the plurality of inverter circuits (1a), the output node is a connection node (13a) between the first switching element (Q1a) and the second switching element (Q2a). The controller (6a) includes a plurality of first gate drivers (61a), a plurality of second gate drivers (62a), a plurality of third gate drivers (63a), a plurality of fourth gate drivers (64a), a plurality of bootstrap circuits (71a), a power supply unit (9a), and a control unit (60a). Each of the plurality of first gate drivers (61a) drives the first switching element (Q1a) of a corresponding one of the plurality of inverter circuits (1a). Each of the plurality of second gate drivers (62a) drives the second switching element (Q2a) of a corresponding one of the plurality of inverter circuits (1a). Each of the plurality of third gate drivers (63a) drives the third switching element (Q3a) of a corresponding one of the plurality of inverter circuits (1a). Each of the plurality of fourth gate drivers (64a) drives the fourth switching element (Q4a) of a corresponding one of the plurality of inverter circuits (1a). The plurality of bootstrap circuits (71a) are provided one to one for the plurality of first gate drivers (61a). Each of the plurality of bootstrap circuits (71a) supplies a voltage to a corresponding one of the plurality of first gate drivers (61a). The power supply unit (9a) supplies a voltage to the plurality of second gate drivers (62a) and the plurality of third gate drivers (63a). The control unit (60a) controls the plurality of first gate drivers (61a), the plurality of second gate drivers (62a), the plurality of third gate drivers (63a), and the plurality of fourth gate drivers (64a). The control unit (60a) selects a plurality of voltage vectors located adjacent to a command voltage vector (V*) from a group of voltage vectors. Each of the group of voltage vectors is defined by a combination of potential levels at a plurality of connection nodes (13a) of the plurality of inverter circuits (1a). The control unit (60a) replaces each of two first voltage vectors (VV1) with a zero vector (V0 [NNN]) and a second voltage vector (VV2). The two first voltage vectors (VV1) belong to the plurality of voltage vectors, each have a reference magnitude, and are located closest to the command voltage vector (V*). The zero vector (V0 [NNN]) is defined by a combination of potential levels at the respective connection nodes (13a) of the plurality of inverter circuits (1a) which are as high as a potential at the negative electrode (N1). The second voltage vector (VV2) has the same direction as, and twice as large a magnitude as, the first voltage vector (VV1). The control unit (60a) controls the plurality of first gate drivers (61a), the plurality of second gate drivers (62a), the plurality of third gate drivers (63a), and the plurality of fourth gate drivers (64a) within a predetermined control cycle (Ts) to make a synthetic vector of a voltage vector included in the plurality of voltage vectors but the first voltage vector (VV1), the zero vector (V0 [NNN]), and the second voltage vector (VV2) equal to the command voltage vector (V*).

This aspect may reduce the chances of causing a voltage drop in a bootstrap circuit (71a). More specifically, this aspect may reduce the chances of causing a voltage drop in capacitors (C11) of the plurality of bootstrap circuits (71a).

In a multi-level inverter (100a) according to a ninth aspect, which may be implemented in conjunction with the seventh or eighth aspect, when polarity of a command voltage corresponding to the command voltage vector (V*) is positive, the control unit (60a) replaces the first voltage vector (VV1) with the zero vector (VOn [NNN]) and the second voltage vector (VV2).

This aspect may reduce the number of times the first voltage vector (VV1) needs to be replaced with the zero vector (VOn [NNN]) and the second voltage vector (VV2).

In a multi-level inverter (100a; 100A; 100B; 100C; 100D) according to a tenth aspect, which may be implemented in conjunction with any one of the seventh to ninth aspects, the control unit (60a) controls the plurality of first gate drivers (61a), the plurality of second gate drivers (62a), the plurality of third gate drivers (63a), and the plurality of fourth gate drivers (64a) to prevent output voltages of the plurality of bootstrap circuits (71a) from decreasing to a predetermined value or less.

This aspect may prevent an output voltage of each of the plurality of bootstrap circuits (71a) from decreasing to a predetermined value or less.

In a multi-level inverter (100a; 100A; 100B; 100C; 100D) according to an eleventh aspect, which may be implemented in conjunction with any one of the seventh to tenth aspects, each of the plurality of bootstrap circuits (71a) includes a capacitor (C11), a diode (D11), and a resistor (R11). The diode (D11) is connected to the capacitor (C11) in series. The resistor (R11) is connected to the capacitor (C11) in series.

In a multi-level inverter (100a; 100B; 100C; 100D) according to a twelfth aspect, which may be implemented in conjunction with any one of the seventh to eleventh aspects, the power supply unit (9a) includes a single DC-DC converter (91a). The DC-DC converter (91a) supplies a voltage to the plurality of second gate drivers (62a) and the plurality of bootstrap circuits (71a).

This aspect may contribute to reducing the size of the multi-level inverter (100a; 100B; 100C; 100D).

In a multi-level inverter (100a; 100B; 100C; 100D) according to a thirteenth aspect, which may be implemented in conjunction with any one of the seventh to eleventh aspects, the power supply unit (9a) includes a first DC-DC converter (91) and a plurality of second DC-DC converters (92). The first DC-DC converter (91) supplies a voltage to the plurality of second gate drivers (62a) and the plurality of bootstrap circuits (71a). The plurality of second DC-DC converters (92) supply a voltage to the plurality of fourth gate drivers (64a).

This aspect may contribute to reducing the size of the multi-level inverter (100a; 100B; 100C; 100D).

**Reference Signs List**

1 Inverter Circuit
3 DC Power Supply Unit
6 Controller
60 Control Unit
61 First Gate Driver
62 Second Gate Driver
63 Third Gate Driver
64 Fourth Gate Driver
9 Power Supply Unit
91 DC-DC Converter
10 Switching Circuit
11 First Connection Node
12 Second Connection Node
13 Third Connection Node
71 First Bootstrap Circuit
72 Second Bootstrap Circuit
73 Third Bootstrap Circuit
100 Multi-Level Inverter
C17, C27, C37 Capacitor
D1 First Diode
D2 Second Diode
D3 Third Diode
D4 Fourth Diode
D5 Fifth Diode
D6 Sixth Diode
D17, D27, D37 Diode
P1 Positive Electrode
Q1 First Switching Element
Q2 Second Switching Element
Q3 Third Switching Element
Q4 Fourth Switching Element
M1 Intermediate Potential Node
N1 Negative Electrode
R17, R27, R37 Resistor
Ts Control Cycle
V0-V18 Voltage Vector
V* Command Voltage Vector
VV1 First Voltage Vector
VV2 Second Voltage Vector
1a Inverter Circuit
6a Controller
60a Control Unit
61a First Gate Driver
62a Second Gate Driver

63a Third Gate Driver
64a Fourth Gate Driver
9a Power Supply Unit
91a DC-DC Converter (First DC-DC Converter)
92 Second DC-DC Converter
13a Connection Node (Output Node)
71a Bootstrap Circuit (First Bootstrap Circuit)
72a Second Bootstrap Circuit
100a, 100A, 100B, 100C, 100D Multi-Level Inverter
C11, C21 Capacitor
D1a First Diode
D2a Second Diode
D3a Third Diode
D4 Fourth Diode
D11, D21 Diode
Q1a First Switching Element
Q2a Second Switching Element
Q3a Third Switching Element
Q4a Fourth Switching Element
R11, R21 Resistor

**Claims**

1.  A multi-level inverter comprising:

    a DC power supply unit including a positive electrode, a negative electrode, and an intermediate potential node;
    a plurality of inverter circuits connected between the positive electrode and the negative electrode of the DC power supply unit; and
    a controller configured to control the plurality of inverter circuits,
    each of the plurality of inverter circuits including:

    a switching circuit including a first switching element, a second switching element, a third switching element, and a fourth switching element which are connected in series to be arranged in line in this order from the positive electrode toward the negative electrode;
    a first diode connected to the first switching element in anti-parallel;
    a second diode connected to the second switching element in anti-parallel;
    a third diode connected to the third switching element in anti-parallel;
    a fourth diode connected to the fourth switching element in anti-parallel;
    a fifth diode having a cathode connected to a first connection node between the first switching element and the second switching element and an anode connected to the intermediate potential node; and
    a sixth diode having an anode connected to a second connection node between the third switching element and the fourth switching element and a cathode connected to the intermediate potential node,
    the controller including:

    a plurality of first gate drivers, each of the plurality of first gate drivers being configured to drive the first switching element of a corresponding one of the plurality of inverter circuits;
    a plurality of second gate drivers, each of the plurality of second gate drivers being configured to drive the second switching element of a corresponding one of the plurality of inverter circuits;
    a plurality of third gate drivers, each of the plurality of third gate drivers being configured to drive the third switching element of a corresponding one of the plurality of inverter circuits;
    a plurality of fourth gate drivers, each of the plurality of fourth gate drivers being configured to drive the fourth switching element of a corresponding one of the plurality of inverter circuits;
    a plurality of first bootstrap circuits provided one to one for the plurality of first gate drivers, each of the plurality of first bootstrap circuits being configured to supply a voltage to a corresponding one of the plurality of first gate drivers;
    a plurality of second bootstrap circuits provided one to one for the plurality of second gate drivers, each of the plurality of second bootstrap circuits being configured to supply a voltage to a corresponding one of the plurality of second gate drivers;

a plurality of third bootstrap circuits provided one to one for the plurality of third gate drivers, each of the plurality of third bootstrap circuits being configured to supply a voltage to a corresponding one of the plurality of third gate drivers;

a power supply unit configured to supply a voltage to the plurality of fourth gate drivers; and

a control unit configured to control the plurality of first gate drivers, the plurality of second gate drivers, the plurality of third gate drivers, and the plurality of fourth gate drivers,

the control unit being configured to:

select a plurality of voltage vectors located adjacent to a command voltage vector from a group of voltage vectors, each of the group of voltage vectors being defined by a combination of potential levels at respective third connection nodes, at each of which the second switching element and the third switching element are connected to each other in a corresponding one of the plurality of inverter circuits;

replace one first voltage vector out of two first voltage vectors with a zero vector and a second voltage vector, the two first voltage vectors belonging to the plurality of voltage vectors, having a reference magnitude, and being located closest to the command voltage vector, the zero vector being defined by a combination of potential levels at the respective third connection nodes, at each of which the second switching element and the third switching element are connected to each other in a corresponding one of the plurality of inverter circuits and which are as high as a potential at the negative electrode, the second voltage vector having the same direction as, and twice as large a magnitude as, the first voltage vector; and

control the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vectors, the other first voltage vector out of the two first voltage vectors, the zero vector, and the second voltage vector equal to the command voltage vector.

2. A multi-level inverter comprising:

a DC power supply unit including a positive electrode, a negative electrode, and an intermediate potential node;

a plurality of inverter circuits connected between the positive electrode and the negative electrode of the DC power supply unit; and

a controller configured to control the plurality of inverter circuits,

each of the plurality of inverter circuits including:

a switching circuit including a first switching element, a second switching element, a third switching element, and a fourth switching element which are connected in series to be arranged in line in this order from the positive electrode toward the negative electrode;

a first diode connected to the first switching element in anti-parallel;

a second diode connected to the second switching element in anti-parallel;

a third diode connected to the third switching element in anti-parallel;

a fourth diode connected to the fourth switching element in anti-parallel;

a fifth diode having a cathode connected to a first connection node between the first switching element and the second switching element and an anode connected to the intermediate potential node; and

a sixth diode having an anode connected to a second connection node between the third switching element and the fourth switching element and a cathode connected to the intermediate potential node,

the controller including:

a plurality of first gate drivers, each of the plurality of first gate drivers being configured to drive the first switching element of a corresponding one of the plurality of inverter circuits;

a plurality of second gate drivers, each of the plurality of second gate drivers being configured to drive the second switching element of a corresponding one of the plurality of inverter circuits;

a plurality of third gate drivers, each of the plurality of third gate drivers being configured to drive the third switching element of a corresponding one of the plurality of inverter circuits;

a plurality of fourth gate drivers, each of the plurality of fourth gate drivers being configured to drive the fourth switching element of a corresponding one of the plurality of inverter circuits;

a plurality of first bootstrap circuits provided one to one for the plurality of first gate drivers, each of the plurality of first bootstrap circuits being configured to supply a voltage to a corresponding one of the plurality of first gate drivers;

a plurality of second bootstrap circuits provided one to one for the plurality of second gate drivers, each of the plurality of second bootstrap circuits being configured to supply a voltage to a corresponding one of the plurality of second gate drivers;

a plurality of third bootstrap circuits provided one to one for the plurality of third gate drivers, each of the plurality of third bootstrap circuits being configured to supply a voltage to a corresponding one of the plurality of third gate drivers;

a power supply unit configured to supply a voltage to the plurality of fourth gate drivers; and

a control unit configured to control the plurality of first gate drivers, the plurality of second gate drivers, the plurality of third gate drivers, and the plurality of fourth gate drivers,

the control unit being configured to:

select a plurality of voltage vectors located adjacent to a command voltage vector from a group of voltage vectors, each of the group of voltage vectors being defined by a combination of potential levels at respective third connection nodes, at each of which the second switching element and the third switching element are connected to each other in a corresponding one of the plurality of inverter circuits;

replace a first voltage vector with a zero vector and a second voltage vector, the first voltage vector belonging to the plurality of voltage vectors, having a reference magnitude, and being located closest to the command voltage vector, the zero vector being defined by a combination of potential levels at the respective third connection nodes, at each of which the second switching element and the third switching element are connected to each other in a corresponding one of the plurality of inverter circuits and which are as high as a potential at the negative electrode, the second voltage vector having the same direction as, and twice as large a magnitude as, the first voltage vector; and

control the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vector, the zero vector, and the second voltage vector equal to the command voltage vector.

3. The multi-level inverter of claim 1 or 2, wherein
the control unit is configured to, when polarity of a command voltage corresponding to the command voltage vector is positive, replace the first voltage vector with the zero vector and the second voltage vector.

4. The multi-level inverter of any one of claims 1 to 3, wherein
the control unit is configured to control the plurality of first gate drivers, the plurality of second gate drivers, the plurality of third gate drivers, and the plurality of fourth gate drivers to prevent an output voltage of each of the plurality of first bootstrap circuits and the plurality of second bootstrap circuits from decreasing to a predetermined value or less.

5. The multi-level inverter of any one of claims 1 to 4, wherein
each of the plurality of first bootstrap circuits and the plurality of second bootstrap circuits includes:

a capacitor;
a diode connected to the capacitor in series; and
a resistor connected to the capacitor in series.

6. The multi-level inverter of any one of claims 1 to 5, wherein
the power supply unit includes a DC-DC converter configured to supply a voltage to the plurality of fourth gate drivers and the plurality of third bootstrap circuits.

7. A multi-level inverter comprising:

a DC power supply unit including a positive electrode, a negative electrode, and an intermediate potential node;
a plurality of inverter circuits connected between the positive electrode and the negative electrode of the DC power supply unit; and
a controller configured to control the plurality of inverter circuits,
each of the plurality of inverter circuits including:

a first switching element, a second switching element, a third switching element, and a fourth switching element; and

a first diode, a second diode, a third diode, and a fourth diode which are connected in anti-parallel to the first switching element, the second switching element, the third switching element, and the fourth switching element, respectively,

the first switching element and the second switching element being connected in series in each of the plurality of inverter circuits to be arranged in line in this order from the positive electrode toward the negative electrode,

a series circuit of the third switching element and the fourth switching element being connected in each of the plurality of inverter circuits between the intermediate potential node and an output node,

the output node being a connection node between the first switching element and the second switching element in each of the plurality of inverter circuits,

the controller including:

a plurality of first gate drivers, each of the plurality of first gate drivers being configured to drive the first switching element of a corresponding one of the plurality of inverter circuits;

a plurality of second gate drivers, each of the plurality of second gate drivers being configured to drive the second switching element of a corresponding one of the plurality of inverter circuits;

a plurality of third gate drivers, each of the plurality of third gate drivers being configured to drive the third switching element of a corresponding one of the plurality of inverter circuits;

a plurality of fourth gate drivers, each of the plurality of fourth gate drivers being configured to drive the fourth switching element of a corresponding one of the plurality of inverter circuits;

a plurality of bootstrap circuits provided one to one for the plurality of first gate drivers, each of the plurality of bootstrap circuits being configured to supply a voltage to a corresponding one of the plurality of first gate drivers;

a power supply unit configured to supply a voltage to the plurality of second gate drivers and the plurality of third gate drivers; and

a control unit configured to control the plurality of first gate drivers, the plurality of second gate drivers, the plurality of third gate drivers, and the plurality of fourth gate drivers,

the control unit being configured to:

select a plurality of voltage vectors located adjacent to a command voltage vector from a group of voltage vectors, each of the group of voltage vectors being defined by a combination of potential levels at a plurality of connection nodes of the plurality of inverter circuits;

replace one first voltage vector out of two first voltage vectors with a zero vector and a second voltage vector, the two first voltage vectors belonging to the plurality of voltage vectors, having a reference magnitude, and being located closest to the command voltage vector, the zero vector being defined by a combination of potential levels at the plurality of connection nodes of the plurality of inverter circuits which are as high as a potential at the negative electrode, the second voltage vector having the same direction as, and twice as large a magnitude as, the first voltage vector; and

control the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vectors, the zero vector, and the second voltage vector equal to the command voltage vector.

8. A multi-level inverter comprising:

a DC power supply unit including a positive electrode, a negative electrode, and an intermediate potential node;

a plurality of inverter circuits connected between the positive electrode and the negative electrode of the DC power supply unit; and

a controller configured to control the plurality of inverter circuits,

each of the plurality of inverter circuits including:

a first switching element, a second switching element, a third switching element, and a fourth switching element; and

a first diode, a second diode, a third diode, and a fourth diode which are connected in anti-parallel to the first switching element, the second switching element, the third switching element, and the fourth switching element, respectively,

the first switching element and the second switching element being connected in series in each of the plurality of inverter circuits to be arranged in line in this order from the positive electrode toward the negative electrode, a series circuit of the third switching element and the fourth switching element being connected in each of the plurality of inverter circuits between the intermediate potential node and an output node,

the output node being a connection node between the first switching element and the second switching element in each of the plurality of inverter circuits,

the controller including:

a plurality of first gate drivers, each of the plurality of first gate drivers being configured to drive the first switching element of a corresponding one of the plurality of inverter circuits;

a plurality of second gate drivers, each of the plurality of second gate drivers being configured to drive the second switching element of a corresponding one of the plurality of inverter circuits;

a plurality of third gate drivers, each of the plurality of third gate drivers being configured to drive the third switching element of a corresponding one of the plurality of inverter circuits;

a plurality of fourth gate drivers, each of the plurality of fourth gate drivers being configured to drive the fourth switching element of a corresponding one of the plurality of inverter circuits;

a plurality of bootstrap circuits provided one to one for the plurality of first gate drivers, each of the plurality of bootstrap circuits being configured to supply a voltage to a corresponding one of the plurality of first gate drivers;

a power supply unit configured to supply a voltage to the plurality of second gate drivers and the plurality of third gate drivers; and

a control unit configured to control the plurality of first gate drivers, the plurality of second gate drivers, the plurality of third gate drivers, and the plurality of fourth gate drivers,

the control unit being configured to:

select a plurality of voltage vectors located adjacent to a command voltage vector from a group of voltage vectors, each of the group of voltage vectors being defined by a combination of potential levels at a plurality of connection nodes of the plurality of inverter circuits;

replace each of two first voltage vectors with a zero vector and a second voltage vector, the two first voltage vectors belonging to the plurality of voltage vectors, having a reference magnitude, and being located closest to the command voltage vector, the zero vector being defined by a combination of potential levels at the plurality of connection nodes of the plurality of inverter circuits which are as high as a potential at the negative electrode, the second voltage vector having the same direction as, and twice as large a magnitude as, the first voltage vector; and

control the plurality of first gate drivers, the plurality of second gate drivers, the plurality of third gate drivers, and the plurality of fourth gate drivers within a predetermined control cycle to make a synthetic vector of a voltage vector included in the plurality of voltage vectors but the first voltage vectors, the zero vector, and the second voltage vector equal to the command voltage vector.

9. The multi-level inverter of claim 7 or 8, wherein
the control unit is configured to, when polarity of a command voltage corresponding to the command voltage vector is positive, replace the first voltage vector with the zero vector and the second voltage vector.

10. The multi-level inverter of any one of claims 7 to 9, wherein
the control unit is configured to control the plurality of first gate drivers, the plurality of second gate drivers, the plurality of third gate drivers, and the plurality of fourth gate drivers to prevent output voltages of the plurality of bootstrap circuits from decreasing to a predetermined value or less.

11. The multi-level inverter of any one of claims 7 to 10, wherein
each of the plurality of bootstrap circuits includes:

a capacitor;
a diode connected to the capacitor in series; and
a resistor connected to the capacitor in series.

12. The multi-level inverter of any one of claims 7 to 11, wherein
the power supply unit includes a DC-DC converter configured to supply a voltage to the plurality of second gate drivers and the plurality of bootstrap circuits.

**13.** The multi-level inverter of any one of claims 7 to 11, wherein
the power supply unit includes:

a first DC-DC converter configured to supply a voltage to the plurality of second gate drivers and the plurality of bootstrap circuits; and
a plurality of second DC-DC converters configured to supply a voltage to the plurality of fourth gate drivers.

FIG. 1

EP 4 586 489 A1

# FIG. 2

FIG. 3

EP 4 586 489 A1

# FIG. 4

| S1U (S1) | S2U (S2) | S3U (S3) | S4U (S4) | S1V (S1) | S2V (S2) | S3V (S3) | S4V (S4) | S1W (S1) | S2W (S2) | S3W (S3) | S4W (S4) |

Control Unit

*FIG. 5*

## FIG. 6

FIG. 7

EP 4 586 489 A1

FIG. 8

# FIG. 9

FIG. 10

FIG. 11

FIG. 12 A

FIG. 12 B

FIG. 13

FIG. 14

FIG. 15

FIG. 16

EP 4 586 489 A1

FIG. 17

EP 4 586 489 A1

*FIG. 18*

FIG. 19

EP 4 586 489 A1

FIG. 20

FIG. 21

FIG. 22

FIG. 23

EP 4 586 489 A1

FIG. 24

*FIG. 25*

FIG. 26

# FIG. 27

FIG. 28

# FIG. 29

S1Ua S2Ua S3Ua S4Ua S1Va S2Va S3Va S4Va S1Wa S2Wa S3Wa S4Wa
(S1a) (S2a) (S3a) (S4a) (S1a) (S2a) (S3a) (S4a) (S1a) (S2a) (S3a) (S4a)  60a

Control Unit

*FIG. 30*

# FIG. 31

S1Ua  S2Ua  S3Ua  S4Ua  S1Va  S2Va  S3Va  S4Va  S1Wa  S2Wa  S3Wa  S4Wa
(S1a) (S2a) (S3a) (S4a) (S1a) (S2a) (S3a) (S4a) (S1a) (S2a) (S3a) (S4a)    60a

Control Unit

*FIG. 32*

FIG. 33

*FIG. 34*

FIG. 35

FIG. 36

FIG. 37

# FIG. 38 A

# FIG. 38 B

*FIG. 39*

FIG. 40

EP 4 586 489 A1

FIG. 41

FIG. 42

FIG. 43

EP 4 586 489 A1

FIG. 44

FIG. 45

EP 4 586 489 A1

FIG. 46

EP 4 586 489 A1

FIG. 47

*FIG. 48*

EP 4 586 489 A1

FIG. 49

| T0/4<br>V2[PPN] | T2/2<br>V7p[P00] | T1/2<br>V13[P0N] | T0/4<br>V0n[NNN] | T0/4<br>V0n[NNN] | T1/2<br>V13[P0N] | T2/2<br>V7p[P00] | T0/4<br>V2[PPN] |

Ts

U-Phase

V-Phase

W-Phase

EP 4 586 489 A1

FIG. 50

FIG. 51

EP 4 586 489 A1

*FIG. 52*

FIG. 53

FIG. 54

EP 4 586 489 A1

## INTERNATIONAL SEARCH REPORT

International application No.

**PCT/JP2023/030963**

| A. | CLASSIFICATION OF SUBJECT MATTER |
|---|---|

*H02M 7/487*(2007.01)i; *H02M 1/08*(2006.01)i; *H02M 7/48*(2007.01)i
FI:  H02M7/487; H02M1/08 C; H02M7/48 E

According to International Patent Classification (IPC) or to both national classification and IPC

| B. | FIELDS SEARCHED |
|---|---|

Minimum documentation searched (classification system followed by classification symbols)

H02M7/487; H02M1/08; H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 11-164567 A (TOSHIBA CORP.) 18 June 1999 (1999-06-18)<br>entire text, all drawings | 1-13 |
| A | JP 5-292755 A (DAIKIN IND., LTD.) 05 November 1993 (1993-11-05)<br>entire text, all drawings | 1-13 |
| A | JP 2012-244796 A (DENSO CORP.) 10 December 2012 (2012-12-10)<br>entire text, all drawings | 1-13 |
| A | CN 103076482 A (LEXING INDUSTRIAL SYSTEMS (WUXI) CO., LTD.) 01 May 2013<br>(2013-05-01)<br>entire text, all drawings | 1-13 |
| A | US 2015/0236618 A1 (CARRIER CORPORATION) 20 August 2015 (2015-08-20)<br>entire text, all drawings | 1-13 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/030963**

| Patent document cited in search report | | | Publication date (day/month/year) | Patent family member(s) | | | Publication date (day/month/year) |
|---|---|---|---|---|---|---|---|
| JP | 11-164567 | A | 18 June 1999 | US | 6151227 | A | |
| | | | | entire text, all drawings | | | |
| | | | | CN | 1207607 | A | |
| | | | | KR 10-1999-0023289 | | A | |
| JP | 5-292755 | A | 05 November 1993 | (Family: none) | | | |
| JP | 2012-244796 | A | 10 December 2012 | (Family: none) | | | |
| CN | 103076482 | A | 01 May 2013 | CN | 103078520 | A | |
| US | 2015/0236618 | A1 | 20 August 2015 | WO | 2014/031401 | A2 | |
| | | | | entire text, all drawings | | | |
| | | | | CN | 104737439 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05292755 A